# EUROPÄISCHE PATENTSCHRIFT

(11) **EP 3 148 345 B1**
(45) Veröffentlichungstag und Bekanntmachung des Hinweises auf die Patenterteilung: **29.04.2026**
(21) Anmeldenummer: 15725345.1
(22) Anmeldetag: 28.05.2015
(51) Int. Cl.: A23D 9/04, C11B 3/00, C11B 3/04, C11B 3/06, C11B 3/10

(54) **VERFAHREN ZUM RAFFINIEREN VON LIPIDPHASEN UND VERWENDUNG**
METHOD FOR REFINING LIPID PHASES, AND USE
PROCÉDÉ DE RAFFINAGE DE PHASES LIPIDIQUES ET APPLICATION

(30) Priorität: 28.05.2014 DE 102014107589
(43) Veröffentlichungstag der Anmeldung: 05.04.2017
(73) Patentinhaber: Drei Lilien Pvg GmbH&Co. KG, 65193 Wiesbaden (DE)
(72) Erfinder: DIETZ, Max, 65193 Wiesbaden (DE)
(74) Vertreter: Arth, Hans-Lothar
(86) Internationale Anmeldenummer: PCT/EP2015/061920
(87) Internationale Veröffentlichungsnummer: WO 2015/181341

(56) Entgegenhaltungen:
- EP-A1- 2 399 885
- WO-A1-2009/148919
- US-A1- 2008 182 322
- TIM HITCHMAN: "Purifine PLC: Industrial application in oil degumming and refining", OIL MILL GAZETTEER, 1 September 2009 (2009-09-01), XP055158230, Retrieved from the Internet <URL:http://www.iomsa.org/leads/OMGSep09.pdf> [retrieved on 20141211]
- MISHRA M K ET AL: "Lipase activity of Lecitase(R) Ultra: characterization and applications in enantioselective reactions", TETRAHEDRON ASYMMETRY, PERGAMON PRESS LTD, OXFORD, GB, vol. 20, no. 24, 22 December 2009 (2009-12-22), pages 2854 - 2860, XP026861941, ISSN: 0957-4166, [retrieved on 20100106]
- WAN CHUYUN ET AL: "Effect of enzymatic treatment on rapeseed oil degumming and its quality", 30 March 2007 (2007-03-30), XP055210975, Retrieved from the Internet <URL:http://gcirc.org/fileadmin/documents/Proceedings/IRCWuhan2007 vol5/192-196.pdf> [retrieved on 20150903]
- "A lipase preparation produced by Aspergillus oryzae expressing a gene encoding a modified/hybride lipase from Thermomyces langinosus/Fusarium oxysporum", 25 March 2002 (2002-03-25), XP055210987, Retrieved from the Internet <URL:http://www.fda.gov/ucm/groups/fdagov-public/@fdagov-foods-gen/documents/document/ucm260965.pdf> [retrieved on 20150903]
- KOYAMA MASAKO: "Effect of arginine as a counterion on surfactant properties of fatty acid salts", JOURNAL OF DISPERSION SCIENCE AND TECHNOLOGY, TAYLOR AND FRANCIS GROUP, NEW YORK, NY, US, vol. 26, no. 6, 1 November 2005 (2005-11-01), pages 785 - 789, XP008128958, ISSN: 0193-2691, DOI: 10.1081/DIS-200063107

## Beschreibung

### Beschreibung

Die vorliegende Erfindung betrifft ein Verfahren zur Reduktion von insbesondere Geruchsstoffen und Farbstoffen aus einer Lipidphase sowie dessen Anwendung.

### Hintergrund der Erfindung:

Biogene Öle und Fette werden in der Regel durch mechanische oder physikochemische Extraktionsverfahren gewonnen. Dabei werden neben den lipoiden Verbindungen, die hieraus in möglichst reiner Form gewonnen werden sollen, auch andere lipophile oder amphiphile Stoffe, die so genannten Fettbegleitstoffe, mit herausgelöst und führen zu einer Verunreinigung der gewonnenen Lipidphasen. Wenn es sich bei diesen Lipidphasen um Pflanzenöle handelt, so werden in variablem Ausmaß Phospholipide, Phenole, Farbstoffe, wie Chlorophylle und Carotinoide, sowie Glycolipide, freie Fettsäuren und andere organische Verbindungen in der Lipidphase fein verteilt. Sofern diese Phase unter wasserfreien Bedingungen hergestellt wurde, ist die resultierende Lipidphase klar bis leicht trüb und hat ein grünliches bis stark gelbliches oder rötliches bis bräunliches Aussehen. Die enthaltenen Begleitstoffe sind sowohl für die Lagerfähigkeit als auch aufgrund der Farbe und Geruchs- bzw. Geschmacksveränderung störend, wenn diese Lipidphasen als Speiseöle zum Verzehr geeignet sein sollen. Aus dem Stand der Technik sind Verfahren, die zu einer Reduktion dieser Verunreinigungen mit Fettbegleitstoffen, auch Schleimstoffe genannt, bekannt. Diese Schleimstoffe sind aber z. T. mit anderen amphiphilen oder lipophilen Begleitstoffen durch elektrostatische Wechselkräfte komplexiert. Daher werden Säuren und Basen in einer wässrigen Lösung eingesetzt, mit denen unter erhöhter Temperatur und unter Druckbedingungen sowie einer verlängerten Einwirkzeit ein "Aufbrechen" dieser Komplexe bewirkt werden kann, wodurch die Menge der abtrennbaren Begleitstoffe sich deutlich erhöht. Hierdurch lassen sich insbesondere phosphorhaltige Verbindungen abtrennen, sodass unabhängig von den initial vorliegenden Werten minimale Phosphorwerte zwischen 10 und 25 ppm erreicht werden können. Sofern eine Base zur Entschleimung verwandt wurde, können auch die in der Lipidphase vorliegenden freien Fettsäuren in das korrespondierende Carboxylat umgewandelt werden und damit eine Verringerung in der Lipidphase auf Werte um 0,8 bis 0,5 Gew.-% (g/100g) erzielt werden. Die entstehenden gummiartigen Schleimphasen haben zwar eine schwärzlich bis bräunliche Farbe, die Färbung des so raffinierten Öls ist allerdings nicht relevant verändert. Aus dem Stand der Technik ist bekannt, dass sich durch einen neuerlichen Eintrag einer sauren oder alkalischen Lösung keine relevante Änderung der Ölkennzahlen mehr erzielen lässt. Aus dem Stand der Technik sind keine wässrigen Verfahren bekannt, die eine Reduktion des Restphosphatgehaltes, der Ölfärbung und der residualen freien Fettsäuren auf Werte, die für das Raffinationsprodukt bei einer Verwendung als Lebensmittel oder als Kraftstoff gefordert werden, ermöglichen.

Bei der Raffination von Pflanzenölen sollen verschiedene Ölbegleitstoffe abgereichert oder vollständig entfernt werden, da Sie entweder eine optische oder sensorische Störung beim Konsumenten hervorrufen oder die Lagerungsstabilität beeinträchtigen sowie zu einem Auftreten unerwünschter Verbindungen, bis hin zu Toxinen, führen kann. Daher wurden sequenzielle Verfahren, die den erforderlichen Abreicherungen Rechnung tragen, entwickelt. Eines dieser Verfahren ist unter dem Markenzeichen ZENITH-Prozess der Fa. Procter & Gamble bekannt. Dabei wird zunächst ein Degumming-Prozess mit konzentrierter Phosphorsäure, die dem Öl zugegeben wird und bei einer Temperatur zwischen 35° und 50°C über eine Dauer von 30 Minuten mit dem Öl gemischt wird, durchgeführt, mit anschließender Entfernung der als gummiartige Masse separierbaren Phospholipide, gefolgt von einer kaustischen Neutralisation der freien Fettsäuren und anschließender Entfernung des sogenannten Seifenstocks. Nachfolgend wird das Öl mit zerkleinerter Bleicherde gemischt, um nicht-hydratisierbare Phospholipide sowie Farbpigmente aus dem Öl zu entfernen. Abgeschlossen wird der Prozess durch eine Desodorierung mit Wasserdampf bei Temperaturen von 218°C - 271°C bei 12 - 4000Pa.

In der Zwischenzeit wurden viele Variationen des Verfahrens in der Literatur vorgestellt, die unter Einhaltung besonderer Prozessbedingungen eine verbesserte Reduktion von Farbpigmenten durch den Raffinationsprozess erwirken können (z.B. EP 0 737 238 B1, Verfahren zur Entfernung von Chlorophyllfarbstoffverunreinigungen aus Planzenölen; US-Patent 4,443,379 (Oil Bleaching Method and composition for same). Dies wurde insbesondere dadurch erreicht, dass Bleicherden durch eine Säurebehandlung aktiviert wurden oder Adsorptionsmittel, wie Silikagele, zusammen mit Phosphor- oder Schwefelsäure den Ölen zugemischt wurden. Zur Reduktion der in Pflanzenölen vorliegenden Farbpigmente sind nach dem Stand der Technik allerdings weiterhin Schichtsilikate, die eine hohe innere Oberfläche aufweisen, am besten geeignet, um eine Farbreduktion zu raffinierender Öle zu erreichen. Um einen ausreichenden Kontakt mit den Oberflächen herzustellen sowie Oxidationsprozesse zu minimieren, ist es aber erforderlich, dass diese sogenannten Bleicherden fein zerkleinert über einen Zeitraum von mind. 30 Minuten, bei einer erhöhten (>60°C) Temperatur und unter einem Vakuum (<1000 Pa), sowie mechanischer Durchmischung mit dem Öl in Kontakt gebracht werden. Hierdurch kann eine Abreicherung von Farbpigmenten erreicht werden, wodurch Lovibond-Farbskalenwerte von R3,0/Y3,9 erreicht werden sowie Reduktionen der messbaren Chlorophyllkonzentration auf Werte von 0,08 ppm. Es konnte ferner gezeigt werden, dass sich eine bessere Reduktion von Farbpigmenten durch eine Aktivierung von Bleicherden mittels einer Säurevorbehandlung erreichen lässt. Die Kombination von Silikagelen und Phosphorsäure sowie einer Kombination aus Phosphorsäure und Schwefelsäure ermöglicht, die Dauer der Exposition der Adsorptionsstoffe zu verringern, um eine gleiche Reduktion der Farbpigmente zu erreichen, die Absolutmenge an Farbpigmenten konnte aber nicht weiter vermindert werden. Dies liegt daran, dass bei diesem Prozessschritt die Farbpigmente zwar chemisch verändert, aber nicht aus dem Öl entfernt werden. Daher ist es bei allen vorgeschlagenen Verfahrensvarianten weiterhin erforderlich, einen Reinigungsschritt mittels einer Wasserdampfextraktion vorzunehmen. Die Anwendung von Hitze sowie von Oxidationsmitteln kann wiederum dazu führen, dass Ölbegleitstoffe, z. B. Tocopherole, Vitamine, Polyphenole chemisch verändert und/oder entfernt werden oder hierdurch primäre Oxidationsprodukte von Farb- und /oder Schleimstoffen sowie Hyperperoxide vorn Fettsäuren neben anderen Peroxiden entstehen, wodurch es im Verlauf einer Lagerung u. a. zu einer Nachverfärbung der Öle oder einer Entstehung von Fehlaromen kommen kann.

In wissenschaftlichen Untersuchungen konnte gezeigt werden, dass die sensorischen Eigenschaften sowie eine Veränderung der Farbe eines raffinierten Öls entscheidend von der eingesetzten Verfahrenstechnik abhängen. Als entscheidendes Kriterium hat sich dabei die Bildung von Radikalen herausgestellt, die selbst unerwünschte sensorische oder optische Effekte bedingen können oder andere organische Verbindungen chemisch verändern, die dann zu den unerwünschten Effekten führen. Das Ausmaß der Radikalentstehung wird dabei im Wesentlichen bestimmt durch: 1. die Anzahl von Oxidationsprodukten, die a) im Rohöl vorlagen und durch den Raffinationsprozesses nicht entfernt wurden und b) durch den Raffinationsprozess in dem Öl entstanden sind sowie 2. der Menge an antioxidativ wirksamen Verbindungen, die a) bereits im Rohöl vorlagen und b) dem Anteil der noch antioxidativ wirksamen Verbindungen, die im raffinierten Öl verblieben sind. Dabei kommt es bei den Verfahren, die eine bessere Abreicherung von Farbstoffen ermöglichen, insbesondere zu einer Reduktion von Antioxidantien, wie Tocopherolen, Polyphenolen oder Squalenen. Durch die oxidativen Prozesse können u. a. Aldehyde, Ketone und freie Fettsäuren entstehen, die die oxidativen Prozesse weiter beschleunigen und zum großen Teil für Fehlaromen in Pflanzenölen verantwortlich sind. Die Bleichung sowie die Desodorierung von Pflanzenölen wurden dabei als wesentliche Verursacher für ein Missverhältnis zwischen dem Gehalt an oxidativ veränderten organischen Verbindungen und dem Gehalt an antioxidativ wirksamen organischen Verbindungen gefunden. Dabei kommt es bei der Behandlung von Ölen mit Bleicherden, zu einer säurekatalysierten Oxidation, ferner werden hier in unterschiedlichem Ausmaß Verbindungen, die antioxidative Eigenschaften aufweisen, abgereichert, sodass sich durch diesen Verfahrensschritt die Oxidationsstabilität eines Öls deutlich verschlechtern kann. Prinzipiell gleiches gilt für den Desodorierungsprozess, insbesondere dann, wenn höhere Dampftemperaturen (>220°C) und eine längere Verweildauer (> 15 Minuten) des Öl erforderlich sind. Daher wird die Lagerstabilität durch die klassischen Verfahren in unterschiedlichem Maß beeinflusst. Im Vergleich zu kalt gepressten Ölen besteht aber oft kein Vorteil in Bezug auf die Lagerstabilität, da in den nativen Ölen die hierin befindlichen Antioxidantien belassen wurden und keine Verbindungen hinzugekommen sind, die die Autooxidation fördern. Substanzen, die die Autooxidation fördern, haben zumeist radikalische oder radikalbildende Gruppen. Eine gezielte Abreicherung dieser Verbindungen ist nach dem Stand der Technik nicht möglich.

Weiterhin ist wissenschaftlich belegt, dass die Entstehung sekundärer Oxidationsprodukte mit der Abnahme der sensorische Qualität eines Öls korreliert. Dies liegt daran, dass viele der sekundären Oxidationsprodukte selbst zu einem Fehlaroma führen, wie z. B. Aldehyde und Ketone. Es konnte weiterhin gezeigt werden, dass sowohl die Bildung von Fehlaromen als auch das Ausmaß einer Nachverfärbung von Ölen, die Oxidantien und Bleicherden ausgesetzt waren, durch die Bestimmung der Konzentration von sekundären Oxidationsprodukten mittels einer Reaktion mit Anisidin abgeschätzt werden kann. Dabei gibt der ermittelte Anisidin-Wert insbesondere den Gehalt an Aldehyden (2-Alkenale und 2,4-Dienale) und Ketonen an.

Es konnte in weiteren Optimierungen der Farbpigmententfernung mittels Säuren gezeigt werden, dass die Kombination aus Phosphorsäure und Schwefelsäure eine raschere und stärkere Wirkung auf die Entfernung von Chlorophyllen aufweist. Um die eingebrachten Säuren sowie die im Öl verbliebenen Abbauprodukte der Farbpigmente zu entfernen, werden nach dem Stand der Technik auch Waschschritte mit Laugen eingesetzt, die zu einer Verseifung der Säuren führt. Diese Seifen sind schwer aus den Ölen zu entfernen und bedingen zumeist einen Produktverlust durch einen Mitaustrag von Öl. Zusätzlich kommt es auch nach einem solchen Waschschritt zu einer sensorischen Beeinträchtigung des Öls durch verbleibende Seifen, sodass auch hier abschließend weiterhin eine Desodorierung mittels Dampfextraktion erforderlich ist.

Verfahren, die eine Abreicherung von Farbpimenten und/oder Fehlgeschmacks- bzw. Geruchsaromen, die in Pflanzenölen vorliegen, ohne Verwendung einer Bleicherde und/oder einer Desodorierung ermöglichen, wurden bisher nicht vorgestellt.

In Pflanzenölen befindet sich eine Vielzahl von organischen Verbindungen, die eine als unangenehm empfundene Wahrnehmung des Geruchs- oder Geschmackssinns bedingen können. Oft kann dabei nicht unterschieden werden, ob es sich bei einer sensorischen Wahrnehmung um einen Geruchs- oder Geschmacksstoff handelt, da der sensorische Gesamteindruck erst durch das Zusammentreffen und einer Interferenz von Nervenimpulsen, die in unterschiedlichen sensorischen Arealen von Nase, Mund und Rachen entstehen, ein Geruchs- oder Geschmacksbild erzeugt wird. Daher überlappen sich auch die über den Geruch und den Geschmack ermittelbaren sensorischen Attribute. Die Zuordnung der Wahrnehmung erfolgt dann über einen Vergleich mit dem dominierenden und charakteristischen Aromaeindruck, den verschiedene Lebensmittel oder natürlich sowie synthetisch hergestellte Verbindungen auslösen.

Organische Verbindungen, die zu einer Geruchs- bzw. Geschmackswahrnehmung führen, haben einen sehr unterschiedlichen Ursprung, entsprechend unterschiedlich sind die Verbindungsklassen, denen sie zugeordnet werden können. Es wird angenommen, dass es in Lipidphasen und insbesondere in Pflanzenölen mehr als 10.000 unterschiedliche Verbindungen gibt, die zu sensorischen Effekten beitragen. Die Zusammensetzung ist nicht nur für jede Ölsorte unterschiedlich, sondern auch abhängig von den Wachstumsbedingungen, dem Gewinnungsprozess der Öle, deren Klärungs- und Lagerbedingungen, u. a. m.. Die meisten Geschmacks- bzw. Geruchsstoffe sind in den Lipidphasen in Mengen enthalten, die unter der Wahrnehmungsschwelle liegen und somit nicht als störend empfunden werden. Eine Entfernung dieser Verbindungen ist daher nicht erforderlich. Bei den meisten Ölen pflanzlicher Herkunft ist, bei einer Verwendung als Speiseöl oder ätherisches Öl, eine (oder mehrere) Geschmacks- und/oder Geruchskomponente(n) gewünscht, die für das Produkt als spezifisch gilt bzw. gelten. Bei der qualitativen Bewertung derartiger Öle werden der Ausprägungsgrad und die Reinheit von spezifizierten sensorischen Attributen als Qualitätsmerkmal angesehen. Die Anwesenheit von anderen sensorischen Wahrnehmungen wird als Fehlgeruch oder Fehlgeschmack gewertet und bedingt eine schlechtere Qualitätseinstufung eines Öls durch eine Prüfstelle. Für die Herstellung qualitativ hochwertiger Öle sollen daher nicht alle Aromen, die für die sensorische Wahrnehmung verantwortlich sind, entfernt werden. Vielmehr ist es das Ziel einer Desodorierung, Fehlaromen weitgehend vollständig zu entfernen. Daher ist es erforderlich, derartige als störend empfundene Geruchs- und Geschmacksstoffe aus diesen Ölen möglichst vollständig zu entfernen. Lipidphasen, die nicht zum Verzehr oder für kosmetische Anwendungen verwandt werden, können ebenfalls mit Geruchstoffen belastet sein, die zu einer Einschränkung der Verwendbarkeit der Lipidphasen führt. Beispiele hierfür sind Fischöle oder Tierfette oder Altspeisefette. Da nur wenige der für die verschiedenen sensorischen Wahrnehmungen verantwortlichen organischen Verbindungen identifiziert worden sind, ist eine Voraussage der wahrnehmbaren Sinneseindrücke, durch eine Charakterisierung und Quantifizierung von organischen Verbindungen, die in einer Lipidphase vorliegen, mittels chemisch-analytischer Verfahren nicht möglich.

Methoden und Verfahren, um Geschmacks-bzw. Geruchsstoffe aus Lipidphasen zu entfernen, sind aus dem Stand der Technik hinreichend bekannt. Sie werden unter dem Begriff Desodorierungsverfahren zusammengefasst. Die Verfahren basieren auf der Fähigkeit von Schichtsilikaten, die auch zur Bleichung von Lipidphasen eingesetzt werden, organische Verbindungen, die auch Geruchs- bzw. Geschmacksstoffe sind, zu binden, ferner auf der Oxidierbarkeit mancher dieser organischen Verbindungen, z. B. mit Chlorkalk, Natriumhypochlorit, Natriumperoxid oder Natriumperborat, sowie auf der Entfernung dieser organischen Verbindungen durch eine Wasserdampfextraktion. Da die Abreicherung an Geruchs- bzw. Geschmacksstoffen durch Adsorptions- und Oxidationsmittel in der Regel nicht ausreichend ist, wird zumeist eine Desodorierung mittels einer Wasserdampfextraktion vorgenommen. Hierbei werden Dampftemperaturen von 230°C bis 280°C verwandt und eine Behandlungsdauer von 30 bis über 60 Minuten, bei einem Druck von unter 1500 Pa sowie einem Dampfverbrauch von 0,7 bis 1,2 t pro Tonne Öl durchgeführt. Zahlreiche Verfahrenspatente zur Optimierung einer Dampfdesodorierung liegen vor (EP 0032434 B1 Process for deodorizing edible oil). Hierdurch werden sehr effektiv die bei hohen Temperaturen leicht flüchtigen organischen Verbindungen, die Geruchs- bzw. Geschmackswahrnehmungen erzeugen, mit der Dampfphase entfernt. Neben den als störend empfundenen Aromastoffen werden allerdings auch Aromastoffe entfernt, die für Pflanzenöle als charakteristisch gelten, daher kann die sensorische Qualität eines Öls, das desodoriert wurde, schlechter sein, als die eines nativen Öls. Es wurden Verfahrensmodifikationen der Dampfdesodorieung vorgenommen, die u. a. unter dem Begriff "Plant flavor-stable process temperature" (PEFSPT) (US 4378317 A Process to maintain bland taste in energy efficient oil deodoration systems) bekannt wurden, um die charakteristischen Aromastoffe in einem Öl möglichst zu belassen. Ferner wurden Verfahren vorgestellt, die weitere Nachteile der Dampfdesodorierung, wie der Oxidation von organischen Verbindungen oder einem nicht erwünschten Austrag von Verbindungen (z.B. Tocopherolen) zu begegnen (US 5315020 A Method of recovering waste heat from edible oil deodorzer and improving product stability; AU 2010 275318 A1 A deodorizized edible oil or fat with low level of bound MCPD and process of making using inert gas). Ferner entstehen, wie bereits dargelegt, durch eine Behandlung der Lipidphasen mit einem Hochtemperaturdampf Zersetzungsprodukte, bzw. entstehen Verbindungen (Polymere, Epoxymere, Oxidationsprodukte), die potentiell gesundheitsschädlich sind, wie z. B. Transfettsäuren oder Monochloro propanediol ester (MCPD) wie 3-Monochlorpropan-1,2-diol (3-MCPD), sowie Phthalate oder Adipate z.B. Diisodecylphthalat. Des Weiteren werden auch organische Verbindungen entfernt, die sich verbessernd auf die Lagerstabilität der raffinierten Lipidphase auswirken und gesundheitsfördernde Wirkungen aufwiesen, wie z. B. Tocopherole oder Carotinoide. Es wurde weiterhin ein Verfahren offenbart, bei dem mittels Zugabe einer Arginin-Lösung zu einem Rohöl mit einem bestimmten freien Fettsäureanteil diese löslich gemacht bzw. abgetrennt werden können (EP 2 399 885 A1). Insofern besteht weiterhin ein großer Bedarf an einem Verfahren, mit dem eine weitgehende Abreicherung an Aromen und vorzugsweise Fehlaromen erzielt werden kann, aber die charakteristischen Geruchs- und Geschmacksqualitäten erhalten bleiben, sowie die Lipidphase nicht chemisch verändert wird.

Weiterhin ist bei den nach dem Stand der Technik durchgeführten Verfahren der Bleichung mittels Bleicherden nachteilig, dass es hierdurch zum einen zu einer erheblichen Steigerung der Prozesskosten und zum anderen zu einem Ressourcenverbrauch sowie zu Abfallströmen kommt, da das Verfahren bei erhöhter Temperatur erfolgt und anderseits die Bleicherden nicht wiederverwendbar sind. Ferner kommt es bei der Entfernung der Bleicherden aus der Lipidphase zu einem relevanten Ölverlust durch einen Mitabtrag. Zusätzlich werden mit diesem Verfahrensschritt auch noch die enthaltenen Antioxidantien und Phytosterole reduziert. Ebenso führt die Dampfextraktion (Desodorierung) zu einer deutlichen Erhöhung der Prozesskosten und einem Produktverlust. Daher sind weiterhin Verfahren notwendig, mit denen eine ressourcensparende Optimierung des klassischen Ölraffinationsprozesses unter Gewinnung biologisch verbesserter Ölprodukte möglich wird.

### Aufgabe der Erfindung

Die Aufgabe der vorliegenden Erfindung ist die Bereitstellung eines Verfahrens, das preisgünstig, produktschonend und einfach durchzuführen ist und mit dem eine Reduktion von Geruchsstoffen, Geschmacksstoffen und/oder Farbstoffen möglich ist, die zu einer sensorischen und/oder optischen Qualitätsminderung einer Lipidphase unterschiedlichen Ursprungs führen können.

### Detaillierte Beschreibung der Erfindung

Diese Aufgabe wird erfindungsgemäß durch die technische Lehre der unabhängigen Ansprüche gelöst. Weitere vorteilhafte Ausgestaltungen der Erfindung ergeben sich aus den abhängigen Ansprüchen, der Beschreibung, den Figuren sowie den Beispielen.

Erfindungsgemäß wird die Aufgabe gelöst durch ein Verfahren zur Reduktion von Geruchsstoffen oder Farbstoffen aus einer Lipidphase, umfassend die folgenden Schritte:
a) Bestimmen des Phosphorgehalts der Lipidphase und Untersuchung auf die Präsenz von Schleimstoffen in der Lipidphase, und
b) Durchführen eines Vorreinigungsschrittes bis die Untersuchung auf die Präsenz von Schleimstoffen negativ ausfällt und ein Phosphorwert kleiner oder gleich 15 mg/kg ist, und
c) Versetzen der Lipidphase mit einer wässrigen Phase, die eine Substanz enthält, die mindestens eine Amidingruppe oder mindestens eine Guanidingruppe aufweist und die einen Verteilungskoeffizienten zwischen n-Octanol und Wasser von K_{OW} < 6,3 aufweist, und
d) Herstellung einer Intensivmischung aus der Lipidphase und der wässrigen Phase, wobei eine Intensivmischung vorliegt, wenn die Wassertröpfchen in der Lipidphase einen mittleren Durchmesser von 0.01 bis 20 µm haben; und
e) Durchführung einer zentrifugalen Phasentrennung und Abtrennung der wässrigen Phase, enthaltend die herausgelösten Geruchs- und/oder Farbstoffe; und wobei die Lipidphase Öle, Fette oder Biodiesel sind, wobei die eine Substanz, die mindestens eine Amidingruppe oder mindestens eine Guanidingruppe aufweist Arginin oder eine Verbindung wie unter S. 45 Z. 27- S.48 Z. 12 definiert ist.

Die Bezeichnung K_{OW} bezieht sich dabei auf den Verteilungkoeffizienten zwischen n-Octanol und Wasser.

Es hat sich gezeigt, dass bei einem derartigen Verfahren nach den Stufen c), d) und e) ein raffiniertes Öl erhalten wird, das einen hohen Reinheitsgehalt aufweist und insbesondere im Wesentlichen frei von Geruchs- bzw. Geschmacksaromen und/oder einer Fehlfarbe ist und insbesondere frei von störenden Geruchs- und Geschmacksaromen ist.

Die Erfindung betrifft also ein Verfahren zur mehrstufigen wässrigen Raffination von Lipidphasen.

Zu den Geruchs- bzw. Geschmacksstoffen gehören Verbindungsklassen, wie Alkaloide, Alkohole, Aldehyde, Aminosäuren, aromatische Kohlenwasserstoffe, Ester, Lactone, cyclische Ether, Furane, Furanoide, Freie Fettsäuren, Flavonole, Glycoside, Ketone, gesättigte und ungesättigte Kohlenwasserstoffe, Enamin-Ketone, Ketopiperazine, Isoprenoide, Mono-Terpene, Terpene, cyclische Terpene, Triterpene, Triterpenoide, Tetraterpene, Sesquiterpene, Sequiterpenoide, Sterole, Phytosterole, Steradiene, Purinderivate, Phenylpropanoide, Phenole, Nitrile, Alkenylisothiocyanate, Glucosinolate und/oder Hydroxyzimtsäurederivate. Diese Verbindungsklassen können sowohl einzeln als auch in einer beliebigen Zusammensetzung in einer rohen Lipidphase, die aus einem biogenen Rohstoff stammt, auftreten.

Dabei handelt es sich insbesondere um 1,5-octadien-3-ol, Butanal, Hexanal, Octanal, Nonenal, Nonadineal, Decanal, Dodecanal, Piperonal, Cystein, Cystin, Methionin, Phenantren, Anthracen, Pyren, Benzpyren, 4-hydroxybutansäure, Hexansäureethylester, Cumarin, Maltol, Diacetylfuran, Pentylfuran, Perillen, Rosenfuran, Caprylsäure, Caprinsäure, Hydroxyfettsäuren, Amygdalin, Progoitrin, 2-Heptanon, 2-Nonanon, Decatrienal, 1-Octen-3-on, Vinylamylketon, 4-(4-Hydroxyphenyl)-butan-2-on), Mycosporin, Diketopiperazin, Humulone und Lupulone (Bittersäuren), Mono-Terpene: Myrcen, Ocimen und Cosmen, Linalool, Myrcenol, Ipsdienol, Neral; Citronellol und Geranial, Citronellal, Mycren, Limonen, Linalool, Nerol, Geraniol, Terpinolen, Terpinen und p-Cymol, Carvon und Carvenon, Thymol, Dihydroxycarveol, 2-Pinen, α- und β-Pinen, Limonen, Phellandren, Menthan, Campher; Fenchon, Xanthophylline, Bisabolane, Germacrane, Elemane und Humulane, Farnesene, Rotundon, Sterole, Phytosterole, p-Cresol, Guajacol, Ferulasäure, Lignin, Sinapin, Catechine, Eugenol, Vanillin, 3-Butenylisothiocyanat, 4-Petenylisothocyanat, 4-Pentennitril, 5-Hexenitril, Camphen, Dodecan, Cinnamylalkohol, Fenchylalkohol, 1R,2S,5R-Isopulegol, 2-Ethylfenchol, Menthol, 4-Hydroxy-3,5-dimethoxybenzylalkohol, (R)-(-)-Lavandulol, Piperonylalkohol,Thujylalkohol, 1,8-Cineol, 4-Ethylguajacol, N-[[(1R,2S,5R)-5-methyl-2-(1-methylethyl)cyclohexyl]carbonyl]-glycinethylester, (1R,2S,5R)-N-cyclopropyl-5-methyl-2-isopropylcyclohexancarboxamid, L-Alanin, Aspartsäure, 2,4-Dimethylthiazol, Lenthionin, (+)-Cedrol, 3-Methylphenol, Anisol, 1-Methoxy-4-propylbenzol, 4-Allyl-2,6-dimethoxyphenol, 2,6-Dimethoxy-4-vinylphenol, Ethyl-4-hydroxy-3-methoxybenzylether, Vetiverol, 2-Butylethylether, Ethylgeranylether, Carvacrol, 2-Methylpropanal, Zimtaldehyd, p-Toluolaldehyd, 2-Methylbutyraldehyd, Salicylaldehyd, Essigsäure, Milchsäure, 3-Methylbuttersäure, Hexansäure, I-Apfelsäure und/oder Anethol. Diese Verbindungen können sowohl einzeln als auch in einer beliebigen Zusammensetzung in einer rohen Lipidphase, die aus einem biogenen Rohstoff stammt, auftreten.

Somit betrifft die vorliegende Erfindung ein Verfahren, wobei es sich bei den Geruchs- bzw. Geschmacksstoffen beispielsweise um Alkaloide, Alkohole, Aldehyde, Aminosäuren, aromatische Kohlenwasserstoffe, Ester, Lactone, cyclische Ether, Furane, Furanoide, Freie Fettsäuren, Flavonole, Glycoside, Ketone, gesättigte und ungesättigte Kohlenwasserstoffe, Enamin-Ketone, Ketopiperazine, Isoprenoide, Mono-Terpene, Terpene, cyclische Terpene, Triterpene, Triterpenoide, Tetraterpene, Sesquiterpene, Sequiterpenoide, Sterole, Phytosterole, Steradiene, Purinderivate, Phenylpropanoide, Phenole, Nitrile, Alkenylisothiocyanate, Glucosinolate und/oder Hydroxyzimtsäurederivate handelt.

Zudem bezieht sich die vorliegende Erfindung auf ein Verfahren, wobei es sich bei den Geruchs- bzw. Geschmacksstoffen bevorzugt um 1,5-octadien-3-ol, Butanal, Hexanal, Octanal, Nonenal, Nonadineal, Decanal, Dodecanal, Piperonal, Cystein, Cystin, Methionin, Phenantren, Anthracen, Pyren, Benzpyren, 4-hydroxybutansäure, Hexansäureethylester, Cumarin, Maltol, Diacetylfuran, Pentylfuran, Perillen, Rosenfuran, Caprylsäure, Caprinsäure, Hydroxyfettsäuren, Amygdalin, Progoitrin, 2-Heptanon, 2-Nonanon, Decatrienal, 1-Octen-3-on, Vinylamylketon, 4-(4-Hydroxyphenyl)-butan-2-on), Mycosporin, Diketopiperazin, Humulone und Lupulone (Bittersäuren), Mono-Terpene: Myrcen, Ocimen und Cosmen, Linalool, Myrcenol, Ipsdienol, Neral; Citronellol und Geranial, Citronellal, Mycren, Limonen, Linalool, Nerol, Geraniol, Terpinolen, Terpinen und p-Cymol, Carvon und Carvenon, Thymol, Dihydroxycarveol, 2-Pinen, α- und β-Pinen, Limonen, Phellandren, Menthan, Campher; Fenchon, Xanthophylline, Bisabolane, Germacrane, Elemane und Humulane, Farnesene, Rotundon, Sterole, Phytosterole, p-Cresol, Guajacol, Ferulasäure, Lignin, Sinapin, Catechine, Eugenol, Vanillin, 3-Butenylisothiocyanat, 4-Petenylisothocyanat, 4-Pentennitril, 5-Hexenitril, Camphen, Dodecan, Cinnamylalkohol, Fenchylalkohol, 1R,2S,5R-Isopulegol, 2-Ethylfenchol, Menthol, 4-Hydroxy-3,5-dimethoxybenzylalkohol, (R)-(-)-Lavandulol, Piperonylalkohol,Thujylalkohol, 1,8-Cineol, 4-Ethylguajacol, N-[[(1R,2S,5R)-5-methyl-2-(1-methylethyl)cyclohexyl]carbonyl]-glycinethylester, (1R,2S,5R)-N-cyclopropyl-5-methyl-2-isopropylcyclohexancarboxamid, L-Alanin, Aspartsäure, 2,4-Dimethylthiazol, Lenthionin, (+)-Cedrol, 3-Methylphenol, Anisol, 1-Methoxy-4-propylbenzol, 4-Allyl-2,6-dimethoxyphenol, 2,6-Dimethoxy-4-vinylphenol, Ethyl-4-hydroxy-3-methoxybenzylether, Vetiverol, 2-Butylethylether, Ethylgeranylether, Carvacrol, 2-Methylpropanal, Zimtaldehyd, p-Toluolaldehyd, 2-Methylbutyraldehyd, Salicylaldehyd, Essigsäure, Milchsäure, 3-Methylbuttersäure, Hexansäure, I-Apfelsäure und/oder Anethol, besonders bevorzugt um 1-Octen-3-on (muffig), Caprylsäure (ranziger Geruch), Carpinsäure (Ziegenähnlicher Geruch), Humulon und/oder Lupulon handelt.

Aufgabe der Erfindung ist es auch Farbstoffe, die in Lipidphasen und insbesondere in Ölen pflanzlicher oder tierischer Herkunft vorliegen zu reduzieren oder vollständig zu entfernen. Diese und weiter unten definierte Farbpigmente und Farbstoffe, gelangen in der Mehrzahl der gewonnenen Lipidphasen erst durch den Gewinnungsprozess, z. B. Pressen oder Lösungsmittelextraktion, in die Lipidphasen. Die Menge an herausgelösten Farbpigmenten wird von verschiedenen Bedingungen bestimmt, wie durch den Herstellungsprozess der Lipidphase (Pressdruck, Feuchtigkeit, Hitzeeinwirkung), durch die Bedingungen bei der Lagerung der gewonnenen Öle (Dauer, Wassergehalt, Gehalt an Begleitstoffen), den Bedingungen bei der Behandlung eines Öl während einer Raffination (Säure/Laugebehandlung, Oxidationsmittelzusatz, Hitzebehandlung) sowie den Bedingungen, denen das Öl im Verlauf der anschließenden Lagerung ausgesetzt ist (Temperatur, UV- oder Sauerstoffexposition). Insbesondere durch oxidative Prozesse können über eine Maillard Reaktion Verbindungen entstehen, die zu einer Fehlfarbe sowie einem Fehlaroma führen. Dies betrifft z. B. die Entstehung von Melanoidinenen, die Nitrogen-Polymere aus Aminosäuren und Carbonsäuren sind, und zu einer braunen Farberscheinung des Öls führen. Ein anderes Beispiel sind Tocopherole, die während eines Bleichungsprozesses oxidiert werden können und Vorläuferstufen für im Verlauf entstehende Farbpigmente sind. Die Verfärbung eines raffinierten Öls nennt man "Farbreversion", sie tritt besonders bei Maisöl auf.

Bei den Farbstoffen biogener Herkunft, die in Lipidphasen gefunden werden, handelt es sich fast ausschließlich um organische Verbindungen, die vollständig apolar (z. B. Carotine) sind oder nur wenige polare Gruppen enthalten, z. B. Chloropylle. Daher gehen sie sehr leicht in die gewonnene Lipidphase über, bzw. werden durch diese aus ihren Strukturen herausgelöst. Die Farbstoffklassen unterscheiden sich erheblich in ihren chemischen Eigenschaften. Viele dieser Verbindungen weisen jedoch eine deutliche chemische Reaktivität auf oder katalysieren Reaktionen, insbesondere in Anwesenheit einer Wasserfraktion in der Lipidphase oder bei Exposition einer ionisierenden Strahlung (z. B. UV-Licht). Hierdurch kann es wiederum zu einer Hydrolyse und/oder Oxidation von Fettsäuren oder anderen Inhaltsstoffen der Lipidphasen kommen, die unerwünscht sind, da hierdurch Verbindungen entstehen, die die sensorische Qualität der Lipidphase ungünstig verändern. Da diese Reaktionen überwiegend von Farbstoffen verursacht werden, die polare Gruppen enthalten, wurden Methoden und Verfahren entwickelt, um diese Verbindungen aus den Lipidphasen zu entfernen. Eine Vielzahl von Verfahren wurde vorgeschlagen. In der praktischen Anwendung kommen aber nur wenige Verfahren zum Einsatz, die sich zuordnen lassen zu Verfahren zur Adsorption von Farbstoffen (z.B. mit Schichtsilikaten, aktivierten Silikagelen, aktiviertem Kohlenstoff), zur chemischen Zersetzung mit starken Säuren (z.B. Phosphorsäure oder Schwefelsäure), zur Extraktion mit organischen Lösungsmitteln (z.B. mit Alkoholen), zur physikalischen Extraktion (z. B. Filtration, Dampfextraktion). Die Verfahren sind dem Fachmann bekannt und werden daher hier nicht weiter dargestellt. Ein Verfahren, das zur Entfernung von Farbstoffen ein wässriges Medium verwendet, ist, außer für Anwendungen der vorgenannten Säurebehandlungen, nicht bekannt.

Aufgabe der kommerziell eingesetzten Bleichungsverfahren ist es, die Farbstoffe aus der Lipidphase zu entfernen, die chemische Reaktionen verursachen bzw. beschleunigen oder zu einem optischen Eindruck führen, der von einem Konsumenten als störend empfunden wird. Bei Speiseölen sind grüne, braune, schwarze oder rötliche Farbtöne nicht erwünscht, ein rein gelber Farbton wird allerdings als charakteristisch für ein Öl empfunden. Daher richtet sich die Aufgabe der vorliegenden Erfindung auf die Abtrennung von Farbstoffen, die besagte chemische Reaktionen bedingen bzw. fördern oder zu einer optisch nachteiligen Beeinträchtigung der Lipidphase führen. Bei diesen Farbstoffen handelt es sich insbesondere um Chlorophylle und deren Derivate und Abbauprodukte wie z. B. Pheophytin, aber auch Flavonoide, Curcumine, Anthrocyane, Indigo, Kaempferol und Xantophylle, Lignine, Melanoidinene.

Überraschenderweise hat sich herausgestellt, dass eine Reduktion, bzw. Entfernung von unerwünschten Farbstoffen aus Lipidphasen mit dem erfindungsgemäßen Verfahren möglich ist.

Wie die technische Lehre der Erfindung dokumentiert, kann eine Abreicherung von Farbstoffen mit dem erfindungsgemäßen Verfahren erfolgen, die der Abreicherung mit Adsorptionsmitteln, die aus dem Stand der Technik bekannt sind, entspricht. Dies konnte sowohl für die durch den nanoemulsiven wässrigen Raffinationsprozess erreichten Farbspektren als auch für die erzielten Abreicherungen von Chlorophyll gezeigt werden. Im Gegensatz zu Verfahren, die Adsorptionsmittel zur Entfernung von Farbstoffen verwenden, ist es bei dem erfindungsgemäßen Prozess einer nanoemulsiven wässrigen Raffination nicht erforderlich, die Lipidphase zu erhitzen, mit einem Vakuum zu beaufschlagen oder eine Verweilzeit einzuhalten.

Daher ist das erfindungsgemäße Verfahren geeignet zur ressourcen- und produktschonenden Entfernung von unerwünschten Farbstoffen aus Lipidphasen.

Durch das erfindungsgemäße wässrige Raffinationsverfahren können die aus einer Lipidphase extrahierten organischen Verbindungen, d. h. die Ölbegleitstoffe, inklusive der Farb-, Geruchs- und Geschmacksstoffe, in eine Wasserphase überführt werden, aus der diese dann einer weiteren Verwertung zugänglich gemacht werden können und nicht, wie das bei Verfahren die nach dem Stand der Technik verwandt werden der Fall ist, durch eine Adsorption an anorganische Verbindungen, z.B. durch Schichtsilikate oder durch eine Überführung in eine Wasserdampfphase bei der Desodorierung, nicht mehr verfügbar sind oder chemisch verändert werden.

Daher ist die vorliegende Erfindung auch gerichtet auf eine Abtrennung von Ölbegleitstoffen, inklusive der Farb-, Geruchs- und Geschmacksstoffe in eine wässrige Lösung aus der diese einer weiteren Verwertung zugänglich gemacht werden können.

Für die Durchführung eines wässrigen Raffinationsschrittes einer Lipidphase ist es erforderlich, die Lipid- und die Wasserphasen in Kontakt zu bringen. Hierzu stehen Verfahren aus dem Stand der Technik zur Verfügung. Ziel dieser Verfahren ist es, ein Wasser-in-Öl-Gemisch zu erhalten, das sich mittels zentrifugaler Verfahren wieder in eine Wasser- und eine Ölphase trennen läßt. Dem Fachmann ist bekannt, dass es bei einem Eintrag von Wasser in ein Pflanzenrohöl zu Emulsionen kommen kann, die nicht mehr mittels zentrifugaler Trenntechniken voneinander getrennt werden können. Eine Mischung einer Lipid- und einer Wasserphase lässt sich mit verschiedenen Verfahrenstechniken erreichen, die sich erheblich in der Intensität des Mischeintrags unterscheiden. Dies reicht von einem Rühreintrag bis zu einer Homogenisierung. Bei einer Homogenisierung erfolgt, wie im Folgenden beschrieben, die Mischung der Phasen durch einen lokalen Energieeintrag, der in Form von Scher- oder Druckenergie erfolgt. Derartige Mischverfahren werden zur Herstellung von Wasser-in-Öl-Emulsionen dann eingesetzt, wenn eine beständige Emulsion, z.B. für eine Formulierung als Salbe oder Creme erzielt werden soll. Aufgrund der Stabilität derartiger Emulsionen, die sich durch Intensivmischverfahren mit Ölen pflanzlicher Herkunft herstellen lassen, werden solche Mischverfahren für wässrige Raffinationsschritte von Pflanzenölen nicht eingesetzt.

Durch einen Intensivmischprozess oder eine Homogenisierung wird eine erheblich größere Grenzfläche zwischen den beiden Phasen geschaffen, als dies durch einen Rühreintrag der Fall ist, bei es dem ebenfalls zu einer Emulsionsbildung kommt, wofür ein hoher lokaler Energieaufwand erforderlich ist. Mechanismen, die zu solchen Effekten führen, sind z. B. Prallvorgänge oder Scherung, Turbulenzen oder Kavitationen. Die Umsetzung des hierfür erforderlichen Energieeintrags erfolgt im Wesentlichen mittels Ultraschall, Rohr- oder Kolben-Spalt-Systeme sowie durch statische Systeme, die eine mikro- oder nanofluidische Scherung oder Turbulenzbildung erzeugen. Für die erfindungsgemäße Intensivmischung ist es unerheblich, welches der vorgenannten Verfahren eingesetzt wird, solange hierdurch ein Homogenisat mit einer hierin offenbarten Spezifikation erreicht wird.

In Übereinstimmung mit Literaturangaben über Effekte eines Intensiveintrags alkalischer Lösungen in Pflanzenrohöle kam es beim Versuch, eine basische Lösung mittels eines Intensivmischers mit verschiedenen Rohölen zu homogenisieren, zu einer Emulsionsbildung, die sich auch mittels ultrazentrifugaler Phasentrennung praktisch nicht trennen ließ.

Es konnte gezeigt werden, dass bei einer Raffination von Rohölen, die nur mit einer Argininlösung, die mittels eines Rühreintrages mit der Ölphase gemischt wurde, erfolgte, sich zwar eine bedeutende Abreicherung an Farb- und Geruchsstoffen erreichen lässt, das Ergebnis bei vielen problematischen Ölen (z. B. Traubenkernöl, Kürbiskernöl, Sesamöl, Fischöl, Tierfette) gegenüber gleichartigen Ölen, die mittels einer klassischen Raffination behandelt wurden, bestehend aus einer Vorbehandlung mit Phosphorsäure sowie einer Behandlung mit einer Bleicherde und einer anschließenden Desodorierung, nicht ausreichend ist, um eine qualitativ hochwertige raffinierte Lipidphase zu erhalten.

Dieser Mangel lässt sich durch die einfache sowie universell durchführbare Verfahrenstechnik, die hierin offenbart wird, beheben.

Das Problem kann behoben werden, indem mittels einer einfachen und gut verfügbaren Vorprüfung, die der Raffination mit einer Argininlösung bzw. mit einer Lösung einer Substanz, die mindestens eine Amidingruppe oder mindestens eine Guanidingruppe aufweist und die einen Verteilungskoeffizienten zwischen n-Octanol und Wasser von K_{OW} < 6,3 aufweist (hierin auch als "Guanidin- und Amidingruppentragende Verbindung" bezeichnet) vorgeschaltet wird und die über die Notwendigkeit einer oder mehrerer vorgeschalteter Raffinationsstufe(n) entscheidet, Lipidphasen zuverlässig bereitgestellt werden, bei denen eine Homogenisierung der nativen oder vorgereinigten Ölphase mit einer Lösung, die eine Guanidin- oder Amidingruppentragende-Verbindung enthält, durchgeführt werden kann, ohne dass es zur Ausbildung einer hochviskosen Emulsion kommt und anschließend eine nahezu vollständige Trennung der Emulsion in eine Öl- und eine Wasserphase durch eine zentrifugale Phasentrennung durchgeführt werden kann. Die hierin beschriebenen Untersuchungen zur emulgierenden Wirkung einer wässrigen Lösung mit einer Guanidin- oder Amidingruppentragenden Verbindung auf Lipidphasen, bei denen bereits eine Vorreinigung erfolgt war, ließen annehmen, dass es auch bei vorgereinigten Ölen weiterhin bei einem Intensivmischeintrag einer wässrigen Arginin-Lösung oder einer wässrigen Lösung einer Guanidin- oder Amidingruppentragenden Verbindung zu einer schwer trennbaren Emulsionsbildung kommt, da bereits bei einem Rühreintrag mit einem Propellerrührer es unter Lufteinschluss zu viskosen schwer oder nicht mehr trennbaren Emulsionen kam. Bei Anwendung eines Rotor-Stator-Dispergierwerkzeugs zur Mischung der beiden Phasen, welche unter den gleichen Bedingungen erfolgte, kam es zunächst ebenfalls zu einer deutlichen Zunahme der Viskosität einer sich schnell bildenden Emulsion, bei fortgesetztem Energieeintrag nahm überraschender Weise die Viskosität der Emulsion aber stark ab, sodass die resultierende Wasser-in-Öl-Emulsion eine geringere Viskosität aufwies, als die ursprüngliche Ölphase. Es hat sich gezeigt, dass eine zentrifugale Phasentrennung der mittels einer Intensivmischung hergestellten Emulsion in zwei emulsionsfreie Phasen erst möglich ist, wenn diese Voraussetzung erfüllt ist.

Das Verfahren ist daher gerichtet auf die Separierbarkeit von Wasser-in-Öl-Emulsionen in zwei emulsionsarme oder zwei emulsionsfreie Phasen.

Ferner konnte gezeigt werden, dass sich durch eine Intensivmischung besonders vorteilhafte Verbesserungen sowohl im Prozessablauf, als auch in der Produktqualität bewerkstelligen lassen. So konnten in den Versuchen dokumentiert werden, dass selbst nach einem mehrstündigen Rühreintrag einer wässrigen Lösung, enthaltend eine Guanidin- oder Amidingruppentragende Verbindung in eine Lipidphase, die mit einem Propellermischer unter Aufwendung einer ungefähr gleich großen Energiemenge, wie die Energiemenge, die bei einer Homogenisierung mit einem Rotor-Stator-System aufgebracht wurde, die Emulgierungsqualität deutlich schlechter war als die, die mit dem Intensivmischer erreicht wurde. Dies konnte dokumentiert werden durch deutlich kleinere Tröpfendimensionen in der Lipidphase sowie einem stärkeren Trübungsgrad einer mittels Intensivmischer hergestellten Emulsion. Weiterhin war die Stabilität der erzeugten Tröpfchendimensionen von Emulsionen, die mit einem ausreichenden Energieeintrag der Intensivmischung erzeugt worden waren, deutlich höher, als dies bei einer Mischung mit einem Rühreintrag der Fall war. Erstaunlicherweise war die Trennbarkeit von Emulsionen, die mit einem hohen Energieeintrag einer Intensivmischung hergestellt worden waren und bei denen Tröpfchengrößen von < 1µm bei > 90% aller gemessenen Partikel vorlagen, welche nur eine sehr geringe Tendenz zur Koaleszenz zeigten, durch eine zentrifugale Separationstechnik praktisch emulsionsfrei möglich. Diese Unterschiede stellten sich dann als entscheidend auf die erzielbare Reduktion von Farb- und/oder Geschmacks- bzw. Geruchsstoffen heraus. Somit kann mit einem nanoemulsiven Intensivmischeintrag eine erhebliche Verbesserung der Abtrennleistung wässriger Lösungen, enthaltend Guanidin- oder Amidingruppentragende Verbindungen, erzielt oder überhaupt erst möglich gemacht werden, bei einer hierfür erforderlichen Energiemenge, wie dies der Fall ist bei einem Mischeintrag, bei dem keine Cavitations-, Scher- oder Druckkräfte für eine Emulsionsbildung verwandt werden. Gleichzeitig kann die erforderliche Zeit für die Herstellung der Emulsionen durch einen Intensivmischvorgang erheblich verkürzt werden.

Durch eine Homogenisierug einer Lipidphase mit einer basischen Wasserphase kann die Prozesszeit gegenüber anderen Mischverfahren unter Verbesserung der Produktqualität deutlich verkürzt werden.

Somit kann erstmalig ein Verfahren bereitgestellt werden, mit dem es möglich wird, unter Anwendung einer einfachen Analysetechnik ein wässriges Raffinationsverfahren bei Ölen unterschiedlicher Qualität und unterschiedlichen Ursprungs durchzuführen, mit dem eine Bleichung und Desodorierung in einem Verfahrensschritt gewährleistet werden kann.

Das erfindungsgemäße Verfahren bietet darüber hinaus wesentliche Verbesserungen gegenüber den Verfahren aus dem Stand der Technik:
- kontinuierliche Prozessführung
- Verzicht auf eine Erhitzung der Ölphase
- Einsparung von natürlichen Rohstoffen (Bleicherden) sowie deren Abfallbeseitigung
- Vermeidung von hitzebedingten Veränderungen an Triglyceridverbindungen (Transfettsäuren) oder anderen Ölbegleitstoffen (Oxidationsprodukten) und damit Erhöhung der Oxidations- und Lagerstabilität der Ölphase.

Es hat sich überraschenderweise gezeigt, dass durch dieses Verfahren raffinierte Lipidphasen in einer Reinheit erhalten werden, die eine Nachbehandlung mit Bleicherde oder einer Dampfdesodorierung überflüssig macht. Eine Analyse einer so erhaltenen und zunächst mit Vakuumtrocknung geklärten Ölphase zeigte bei der Farbbeurteilung nach dem Lovibond-Verfahren einen deutlichen Rückgang an roten und gelben Farbelementen. Zudem weisen dadurch erhaltene raffinierte Lipidphasen Restgehalte auf, die im Bereich von weniger als 5 ppm, insbesondere weniger als 2 ppm (mg/kg) phosphorhaltige Verbindungen, weniger als 0,2 Gew-%, insbesondere weniger als 0,1 Gew-% freie Fettsäuren, weniger als 3 ppm (mg/kg), insbesondere weniger als 0,02 ppm (mg/kg) Na-, K-, Mg-, Ca- oder Fe-Ionen liegen. Zudem werden raffinierte Lipidphasen erhalten, die eine deutliche Minderung an Fehlfarben und Farbintensitäten aufweisen und im Wesentlichen frei von Fehlaromen sind. Insbesondere ist es möglich, einen Anteil an Chlorophyllverbindungen und Geruchsstoffen von mehr als 90% zu entfernen. Bei bestimmten Aufreinigungen ist es sogar möglich, den Gehalt an Phosphor bis auf 0,8 ppm zu senken.

Anders ausgedrückt weisen dadurch erhaltene raffinierte Lipidphasen Restgehalte auf, die im Bereich von weniger als 5 ppm (mg/kg), insbesondere weniger als 2 ppm phosphorhaltige Verbindungen, weniger als 0,2 Gew-%, insbesondere weniger als 0,1 Gew-% freie Fettsäuren, weniger als 3 ppm, vorzugsweise weniger als 0,5 ppm insbesondere weniger als 0,02 ppm Na-, K-, Mg-, Ca- oder Fe-Ionen liegen. Zudem werden raffinierte Lipidphasen erhalten, die eine deutliche Minderung an Fehlfarben und Farbintensitäten aufweisen und im Wesentlichen frei von Fehlaromen sind. Insbesondere ist es möglich, einen Anteil an Chlorophyllverbindungen und Geruchsstoffen von mehr als 90% zu entfernen. Bei bestimmten Aufreinigungen ist es sogar möglich, den Gehalt an Phosphor bis auf 0,8 ppm zu senken.

Somit ist das Verfahren gerichtet auf eine Einsparung einer Raffinationsstufe, die aus einer Behandlung mit Bleicherde und oder einer Dampfdesodorierung besteht.

Ferner ist das Verfahren gerichtet auf eine Reduktion von Ölkennzahlparametern, die einer Raffination bestehend aus einer Entschleimung, Bleichung und Desodorierung entspricht.

Überraschenderweise hat sich gezeigt, dass diese überaus effektive Reduktion oder Enfernung von Ölbegleitstoffen, inklusive der Farb-, Geruchs- und Geschmacksstoffe, besonders effizient ist, wenn in der Lipidphase ein Gehalt an freien Fettsäuren von > 0,2Gew% vorliegt, die mit einer Lösung einer Guanidin- und/oder Amidingruppentragenden Verbindung, in der Verfahrensstufe c) in Kontakt gebracht werden. Darüber hinaus konnte gezeigt werden, dass das Raffinationsergebnis bei einer Lipidphase, bei der ein Gehalt an freien Fettsäuren von < 0,2 Gew% vorliegt, verbessert werden kann, wenn der Lipidphase ein oder mehrere Carbonsäure(n) hinzugegeben wird/werden oder eine Hinzugabe in Form einer hergestellten Nanoemulsion, die aus einer oder mehrerer Carbonsäuren und einer gelösten Guanidin- und/oder Amidingruppentragenden Verbindung besteht, erfolgt. Es kann daher angenommen werden, dass die sich in einem wässrigen Medium ausbildenden Bindungen zwischen Guanidin- und/oder Amidingrupen mit den Carboxylgruppen der Carbonsäuren, für die Ausbildung der Nanoemulsionen verantwortlich sind. Auch wenn dies wissenschaftlich nicht belegt ist, so wird angenommen, dass die Nanopartikel, die sich durch die vorgenannten Bindungskräfte ergeben und die einen Durchmesser von unter 2 nm aufweisen, einen Anteil an der erzielten Reduktion der Ölbegleitstoffen, inklusive der Farb-, Geruchs- und Geschmacksstoffe, haben. Daher kann das erfindungsgemäße Raffinationsverfahren auch als nanoemulsive Raffination bezeichnet werden, im Folgenden werden die Begriffe wässrige Raffination mit Guanidin- und/oder Amidingruppentragenden Verbindungen und nanoemulsive Raffination synonym verwendet.

Der entscheidende Vorteil, den die nanoemulsive Raffination darüber hinaus bietet, ist, dass mit dem Verfahren in einem Schritt sowohl eine Reduktion der Pflanzenfarbstoffe als auch der hierin befindlichen Geruchs- bzw. Geschmacksstoffe erzielt werden kann, sodass eine weitere Reduktion z. B. durch eine Bleicherde nicht erforderlich ist. Zugleich entfällt die Notwendigkeit einer Desodorierung, da mit demselben Verfahrensschritt eine Reduktion der in der Lipidphase vorhandenen Geruchs- bzw. Geschmacksstoffe, Oxidationsprodukte sowie Carbonsäuren erreichbar ist. Dadurch entfallen diese Raffinationsstufen. Daneben werden auch alle Erdalkalimetallionen sowie Metallionen auf ein Maß reduziert das Produktanforderungen, z. B. im Bereich von Speiseölen oder von Pflanzenölkraftstoffen, genügt, sodass auch hier eine weitere Aufreinigung der erhaltenen Öle nicht mehr erforderlich ist. Darüber hinaus wird weiterhin in besonders vorteilhafter Weise gleichfalls eine Abtrennung von phosphorhaltigen Verbindungen gewährleistet, was insbesondere für hydratisierbare und nicht hydratisierbare Phospholipide zutrifft, wodurch unmittelbare Anwendungen der erhaltenen Lipidphasen auch für eine motorische Verbrennung möglich werden.

Daher stellt eine nanoemulsive Extraktion von Geruchs- bzw. Geschmacks- und/oder Farbstoffen, die durch einen Intensiveintrag einer wässrigen Lösung, enthaltend Guanidin- oder Amidingruppentragende Verbindungen, erreicht wird, einen entscheidenden Vorteil gegenüber einem Reinigungsschritt mit einem niederenergetischen Mischeintrag (z.B. Rühreintrag, Turbulenzmischer) vorgenannter wässriger Lösungen dar und ist eine besonders bevorzugte Ausführungsform des Verfahrens.

Die Erfindung betrifft daher ein nanoemulsives wässriges Verfahren zur Reduktion von Geruchs-, Geschmacks- und/oder Farbstoffen aus einer Lipidphase.

In der praktischen Anwendung hat sich gezeigt, dass hydratisierbare Schleimstoffe ein derartiges nanoemulsives Raffinationsverfahren oft behindern oder ganz unmöglich machen aufgrund einer starken Emulsionsbildung. Zur Abschätzung des in einer Lipidphase vorliegenden Gehalts an Schleimstoffen wird nach dem Stand der Technik der hierin bestimmbare Gehalt an Phosphor herangezogen. Dieser lässt sich leicht mittels etablierter Analyseverfahren (z. B. ICP-OES) erfassen. Um die durch einen Wassereintrag emulgierbaren organischen Verbindungen zu entfernen, wurden wässrige Raffinationsschritte durchgeführt. Überraschenderweise zeigte sich, dass trotz einer Reduktion an phosphorhaltigen Verbindungen, mit in Lipidphasen bestimmbaren Werten für Phosphor von < 10 ppm bei vielen Ölphasen eine nanoemulsive Raffination weiterhin nicht oder nur eingeschränkt möglich war, wegen weiterhin entstehender Emulsionen. Die Vorschaltung weiterer wässriger Raffinationsschritte mit basischen Lösungen ermöglichte dann die erfindungsgemäße nanoemulsive Raffination der Stufe c) bis e). Wie die technische Lehre dieser Anmeldung zeigt, war es durch die Bestimmung von Parametern, die nach dem Stand der Technik durchgeführt werden, wie der Bestimmung des Gehaltes an Phosphor, Magnesium, Kalzium oder der freien Fettsäuren, nicht möglich gewesen vorherzusagen, ob nach der Durchführung der nanoemulsiven Verfahrensschritte c), d) und e) die voneinander abgetrennten Phasen, emulsionsfrei oder emulsionsarm erhalten werden können. Überraschenderweise, war eine solche Vorhersage mit der hierin beschriebenen Prüfung auf die Präsenz von Schleimstoffen möglich.

Vorzugsweise erfolgt bei den hierin offenbarten Verfahren die Bestimmung des Phosphorgehalts mitels des ICP-OES Verfahrens.

Überraschenderweise zeigte sich, dass bei allen untersuchten Lipidphasen, bei denen initial ein geringer Phosphatgehalt vorlag, die aber einem hohen Gehalt sonstiger mit einer alkalischen Wasserphase hydratisierbaren Verbindungen aufwiesen, durch einen einfachen Waschschritt mit einer basischen wässrigen Lösung (z.B. Natriumcarbonat) mit nachfolgender zentrifugaler Phasenseparation, wodurch diese Verbindungen abgetrennt wurden, mit dem erfindungsgemäßen Intensiveintrag wässriger Lösungen von Guanidin- oder Amidinverbindungen zu raffinieren waren.

Die erfindungsgemäße nanoemulsive wässrige Raffinationsstufe mit einer gelösten Guanidin- oder Amidingruppentragen Verbindung kann allerdings erst dann effizient und ökonomisch eingesetzt werden, wenn eine Abreicherung von wasserbindenden Schleimstoffen in einem ausreichenden Maß vorgenommen wurde. Diese Bedingung lässt sich mit dem hierin offenbarten einfachen und kostengünstigen Verfahrensschritt b) gewährleisten.

Daher ist die Durchführung einer Untersuchung auf Schleimstoffe gemäß Verfahrensschritts a) sowie eine Durchführung vor Verfahrensschritt c) der hierin offenbarten Verfahren eine besonders bevorzugte Ausführungsform, da hiermit die Prozesssteuerung zum Erhalt nanoemulsiv wässrig gereinigter Lipidphasen mit einfachen Mitteln reproduzierbar durchgeführt werden kann. Es konnte gezeigt werden, dass sich der Verfahrensschritt a) auch bei einer großtechnischen Anwendung zur Prozesssteuerung einsetzen läßt.

Das überaus vorteilhafte nanoemulsive Reinigungsergebnis mit einer wässrigen Lösung von Arginin oder von einer Guanidin- oder Amidingruppentragenden Verbindung ist jedoch nur erzielbar, wenn vor dem Reinigungsschritt c) der Phosphorgehalt der Lipidphase einen bestimmten Maximalwert nicht überschreitet und eine Untersuchung auf die Präsenz von Schleimstoffen in der Lipidphase nur noch eine minimale Menge (< 1,0 Vol-%) einer im alkalischen Medium noch herstellbaren Emulsionsschicht aufweist. Anderenfalls ist vor dem nanoemulsiven Arginin-Reinigungsschritt bzw. dem Reinigungsschritt mit einer Guanidin- oder Amidingruppentragenden Verbindung zumeist eine Vorreinigung der Lipidphase notwendig. Die hierin als Schleimstoff bezeichneten organischen Verbindungen können sowohl durch eine Wasserphase hydratisierbar sein, aber auch vollständig apolar sein und durch eine lipophile Interaktion mit anderen organischen Verbindungen, die nicht einem Triglycerid entsprechen, zu einer reduzierten Austragbarkeit der Schleimstoffe mit einer Wasserphase führen und damit zu einer Emulsionsbildung beitragen. Diese Schleimstoffe umfassen die folgenden organischen Verbindungsgruppen, ohne sich auf diese zu beschränken: Wachse, Wachssäuren, Lingine, Hydroxy- und Mykolsäure, Fettsäuren mit cyclischen Kohlenwasserstoff-Strukturen, wie die Shikimisäure oder 2-Hydroxy-11-cycloheptylundecansäure, Mannosterylerythritol Lipid, Carotine und Carotinoide, Chlorophylle, sowie deren Abbauprodukte, weiterhin Phenole, Phytosterole, insbesondere β-Sitosterol und Campesterol sowie Sigmasterol, Sterole, Sinapine, Squalene. Phytoöstrogene, wie z.B. Isoflavone oder Lignane. Ferner, Steroide sowie deren Derivate, wie Saponine, weiterhin Glycolipide sowie Glyceroglycolipide und Glycerosphingolipide, weiterhin Rhamnolipide, Sophrolipide, Trehalose Lipide, Mannosterylerythritol Lipide. Ebenso Polysacharide, hierunter Pektine, wie Rhamnogalacturonane und Polygalacturonsäureester, Arabinane (Homoglykane), Galactane und Arabinogalactane, ferner Pektinsäuren und Amidopektine. Ferner Phospholipide, insbesondere Phosphotidylinositol, Phosphatide, wie Phosphoinositol, weiterhin langkettige oder zyklische Carbonverbindungen, ferner Fettalkohole, Hydroxy- und Epoxyfettsäuren. Ebenso Glycoside, Liporoteine, Lignine, Phytat bzw. Phytinsäure sowie Glucoinosilate. Proteine, darunter Albumine, Globuline, Oleosine, Vitamine, wie z.B. Retinol (Vitamin A1) sowie Derivate, wie z. B. Retinsäure, Riboflavin (Vitamin B2), Pantothensäure Vitamin B5), Biotin (Vitamin B7), Folsäure (Vitamin B9), Cobalamine (Vitamin B12), Calcitriol (Vitamin D) sowie Derivate, Tocopherole (Vitanmin E) und Tocotrienole, Phyllochinon (Vitamin K) sowie Menachinon. Des Weiteren Tannine, Terpenoide, Curcumanoide, Xanthone. Aber auch Zuckerverbindungen, Aminosäuren, Peptide, darunter Polypeptide, aber auch Kohlenhydrate wie Glucogen.

Also betrifft die vorliegende Erfindung ein Verfahren, wobei es bei den Schleimstoffen bevorzugt um Wachse, Wachssäuren, Lingine, Hydroxy- und, Mykolsäure, Fettsäuren mit cyclischen Kohlenwasserstoff-Strukturen, wie die Shikimisäure oder 2-Hydroxy-11-cycloheptylundecansäure, Mannosterylerythritol Lipid, Carotine und Carotinoide, Chlorophylle, sowie deren Abbauprodukte, weiterhin Phenole, Phytosterole, insbesondere ß-Sitosterol und Campesterol sowie Sigmasterol, Sterole, Sinapine, Squalene, Phytoöstrogene, wie z.B. Isoflavone oder Lignane, Steroide sowie deren Derivate wie Saponine, weiterhin Glycolipide sowie Glyceroglycolipide und Glycerosphingolipide, weiterhin Rhamnolipide, Sophrolipide, Trehalose Lipide, Mannosterylerythritol Lipide, Polysacharide, Pektine, wie Rhamnogalacturonane und Polygalacturonsäureester, Arabinane (Homoglykane), Galactane und Arabinogalactane, Pektinsäuren und Amidopektine, Phospholipide, Phosphotidylinositol, Phosphatide, wie Phosphoinositol, langkettige oder zyklische Carbonverbindungen, Fettalkohole, Hydroxyfettsäuren, Epoxyfettsäuren, Glycoside, Lipoproteine, Lignine, Phytat, Phytinsäure, Glucoinosilate, Proteine, Albumine, Globuline, Oleosine, Vitamine, wie z.B. Retinol (Vitamin A1) sowie Derivate, wie z.B. Retinsäure, Riboflavin (Vitamin B2), Pantothensäure Vitamin B5), Biotin (Vitamin B7), Folsäure (Vitamin B9), Cobalamine (Vitamin B12), Calcitriol (Vitamin D) sowie Derivate, Tocopherole (Vitanmin E), Tocotrienole, Phyllochinon (Vitamin K), Menachinon, Tannine, Terpenoide, Curcumanoide, Xanthone, Zuckerverbindungen, Aminosäuren, Peptide, Polypeptide, Kohlenhydrate, wie Glucogen handelt.

Überraschenderweise führt das erfindungsgemäße nanoemulsive Raffinationsverfahren auch zu einer Verbesserung der Abtrennung von Carbonsäuren, wobei der Eintrag der wässrigen Lösungen, enthaltend Guanidin- oder Amidingruppentragende Verbindungen, mit einem Intensivmischer (Homogenisierung) zu einer vorteilhaften erheblichen Verbesserung der Abtrennung von Fettsäuren, aber auch von Farbstoffen, Phospholipiden, Erdalkalimetallionen, Metallionen sowie auch Phenolen gegenüber einem Rühreintrag führt. Dies bedeutet gleichzeitig, dass es zu einer besonders vorteilhaften und in dieser Ausprägung mittels wässriger Raffinationsverfahren bisher nicht erreichbaren Abreicherung an Farbstoffen aus einer Lipidphase kommt, sodass der Gebrauch von Bleicherden reduziert oder vollständig eingespart werden kann. Die ebenfalls bisher so nicht beschriebenen Reduktionen von freien Fettsäuren, Phospholipiden und Erdalkalimetallionen sowie Metallionen durch eine wässrige Raffination von Pflanzenölen mit den Ausgangsqualitäten, wie sie hier untersucht wurden, führt zu einer Ölqualität, die auch eine Desodorierung der Öle nicht mehr erforderlich macht. Dies trifft auch für die Reduktion von Geruchs- und Geschmacksstoffen zu, die sehr wahrscheinlich durch die ebenfalls entfernten Glycolipide emulgiert werden und mit diesen in der wässrige Phase abgetrennt werden. Somit können in erheblichem Maße die Prozesskosten einer Ölraffination reduziert werden. Außerdem ist eine Qualitätsverbesserung des raffinierten Öls zu erwarten, sofern eine Desodorierung hierdurch überflüssig wird, da während einer solchen Begleitstoffe, die durchaus erwünscht sind (z.B. Polyphenole), extrahiert werden und andererseits gesundheitlich bedenkliche Verbindungen (z.B. Transfettsäuren und Transfettsäureester der Triglyceride) entstehen. Daher ist das wässrige Raffinationsverfahren besonders vorteilhaft für die Herstellung hochwertiger Lipidphasen. Besonders vorteilhaft ist auch die einfache Prozessführung, die das erfindungsgemäße Verfahren ermöglicht, da alle Prozessschritte unmittelbar hintereinander abfolgen können und eine relevante Temperaturerhöhung des Prozessgemisches, außer ggf. zur Verbesserung der Fließeigenschaften, nicht erforderlich ist.

Das Verfahren ist auch gerichtet auf einen kontinuierlich ablaufenden Raffinationsprozess von Lipidphasen**.**

Daher ist das Verfahren auch gerichtet auf eine Einsparung von Prozesskosten, eine einfache und zeitsparende Prozessführung**.**

Ferner ist das Verfahren gerichtet auf den Erhalt raffinierter Lipidphasen, deren Inhaltsstoffe durch den Raffinationsprozess nicht oder nur in geringem Maße physikalisch oder chemisch verändert werden.

Daher ist das Verfahren auch gerichtet auf eine Einsparung von Prozesskosten, eine einfache und zeitsparende Prozessführung**.**

Ferner ist das Verfahren gerichtet auf den Erhalt raffinierter Lipidphasen, deren Inhaltsstoffe durch den Raffinationsprozess nicht oder nur in geringem Maße physikalisch oder chemisch verändert werden.

Wässrige Raffinationsverfahren sind integrale Bestandteile bei der Aufreinigung verschiedener Lipidphasen, wobei eines der größten Anwendungsgebiete die Raffination von Pflanzenölen ist, die zur Lebensmittelherstellung behandelt werden. Trotz zahlreicher Verfeinerungen der etablierten Raffinationsverfahren, die auf der Basis basischer oder saurer kleiner hydrophiler Verbindungen basieren, wodurch Hydratisierungen der meisten in den Lipidphasen befindlichen Phospholipidverbindungen und Fettsäuren erreicht werden können, ist es bisher nicht möglich, die Anforderungen an die Abreicherung sowohl der Phospholipide und Fettsäuren, aber auch der nicht oder nur kaum abreicherbaren Farb- und Geruchsstoffe auf ein Maß zu reduzieren, dass sie den industriellen Normen genügen. Mit wässrigen Raffinationsverfahren kann aber sehr einfach und produktschonend eine Aufreinigung erfolgen. Daher ist das erfinderische nanoemulsive Raffinationsverfahren gerade für eine produktschonende Raffination ganz besonders geeignet, wodurch die vorteilhaften Reduktionen von Restphosphatmengen, die im Bereich von weniger als 2 ppm oder 2 mg/kg liegen, sowie weniger als 0,1 Gew-% für freie Fettsäuren, weniger als 0,02 ppm oder 0,02 mg/kg für Na-, K-, Mg-, Ca- oder Fe-Ionen ebenfalls erreicht werden. Zudem werden mit einer basischen und/oder sauren wässrigen Vorentschleimung der Lipidphasen, die im Anschluss mit dem erfindungsgemäßen nanoemulsiven Raffinationsverfahren behandelt werden, Lipidphasen erhalten, die von grünen und braunen Störfärbungen befreit sind und deutlich heller erscheinen und im Wesentlichen frei von sind von unerwünschten Geruchs- und Geschmacksaromen. Insbesondere ist es möglich, einen Anteil an Chlorophyllverbindungen und Geruchsstoffen von mehr als 90% zu entfernen.

Eine weitere bevorzugte Ausführungsform ist die Herstellung einer Lipidphase, die neben einem geringen Gehalt an Schleim- und/oder Farb- und/oder Geruchs- bzw. Geschmacksstoffen sowie freien Fettsäuren, auch einen niedrigen Gehalt an primären oder sekundären Oxidationsprodukten aufweist. Bevorzugt ist dabei auch der Erhalt einer Lipidphase, bei der antioxidativ wirksame Verbindungen, wie z. B. Polyphenole, Tocopherole, u.a.m., nicht oder nur in einem geringen Maß aus dem Rohprodukt entfernt oder chemisch oder physikalisch inaktiviert werden. Überraschenderweise ist eine derartige produktschonende Raffination mit dem erfindungsgemäßen nanoemulsiven Raffinationsverfahren möglich. Dabei konnte gezeigt werden, dass der Gehalt an antioxidativen Verbindungen durch den nanoemulsiven Raffinationsprozess nur minimal abnimmt und gleichzeitig Oxidationsprodukte, die sich in dem Ausgangsmaterial befunden haben, praktisch vollständig eliminiert werden. Dies hat zusammen mit der erreichten Reduktion von Schleim- und Farbstoffen einen erheblich positiven Effekt auf die Lagerstabilität der raffinierten Lipidphasen.

In Lipidphasen und insbesondere in Ölen pflanzlicher und tierischer Herkunft befinden sich variable Mengen an ungesättigten Kohlenstoffverbindungen, deren Hauptanteil ungesättigte Fettsäuren ausmachen. Eine Exposition dieser Verbindungen mit Luftsauerstoff, eine Erwärmung, energiereiche Strahlung (z. B. UV-Licht), die in Kontaktbringung mit Katalysatoren, wie Eisen Nickel, freien Radikalen, Enzymen, wie z.B. Lipooxygenasen, oder ein basisches Milieu können eine Oxidation an einer Doppelbindung einer organischen Verbindung bewirken. Dabei werden Sauerstoffradikale auch durch organische Verbindungen, die sich in einer Lipidphase befinden katalysiert, wie z.B. durch Chlorophylle, Riboflavin oder Metall- und Schwermetallionen. Es entstehen hierdurch Hydroxyperoxide der Kohlenstoffverbindungen. Diese sind chemisch instabil und degradieren zu sekundären Oxidationsprodukten. Dabei entstehen freie Alkoxy-Radikale. Als in der Routineanalytik praktikable Methode zur Erfassung derartiger oxidativer Produkte hat sich die Reaktion mit para-Anisidin herausgestellt. Para (p)-Anisidin reagiert mit sekundären Oxidationsprodukten, wie Aldehyden und Ketonen, die in einer Lipidphase vorliegen. In der wissenschaftlichen Literatur konnte gezeigt werden, dass ein enger Zusammenhang ziwschen der Entwicklung sekundärer Oxidationsprodukte und der Enstehung von Fehlaromen und Fehlfarben in einer Lipidphase besteht. In Untersuchungen zur Lagerstabilität von Lipidphasen, die mit einem erfindungsgemäßen nanoemulsiven Raffinationsverfahren behandelt worden sind, konnte gezeigt werden, dass die initial erreichte Reduktion an Oxidationsprodukten, die in dem Ausgangsmaterial vorhanden waren, zusammen mit den erreichten Abreicherungen an Schleim- und Farbstoffen, einen sehr geringen Anstieg von Oxidationsprodukten, die im Verlauf von 120 Tagen bei Umgebungstemperaturen und Luftsauerstoffexposition entstanden, bewirkt. Es ist anzunehmen, dass der geringe Austrag von antioxidativen Verbindungen, bzw. eine geringe Deaktivierung dieser Verbindungen im Rahmen einer erfindungsgemäßen wässrigen nanoemulsiven Raffination mit zu der verbesserten Lagerstabilität beigetragen hat.

Daher ist eine besonders bevorzugte Ausführungsform der erfindungsgemäßen Raffination die Herstellung einer gereinigten Lipidphase mit einer hohen Lagerstabilität.

Ferner konnte gezeigt werden, dass bei Lipidphasen, die mittels einer nanoemulsiven Raffination erhalten worden sind, es nicht oder nur in sehr geringem Maß zu einer Entwicklung einer Fehlfarbe (Farbreversion) im Verlauf von mindestens 120 Tagen kommt.

Daher ist das Verfahren auch gerichtet auf die verbesserte Farbstabilität bei der Lagerung einer nanoemulsiv gereinigten Lipidphase.

Eine verbesserte Lagerstabilität konnte auch für eine reduzierte Entwicklung von Geschmacks- und Geruchsstoffen, die sich im Verlauf einer Lagerung von Lipidphasen durch sich bildende sekundäre Oxidationsprodukte, die zur Entstehung von Fehlaromen führen, dokumentiert werden. Es kam zu einer geringeren Ausbildung von Fehlaromen im Verlauf von mindestens 120 Tagen im Vergleich zu einer Raffination, bei der Bleicherden zur Abreicherung von Geruchs- und Geschmacksstoffen eingesetzt worden waren.

Daher ist das nanoemulsive Raffinationsverfahren besonders geeignet die sensorische Lagerstabilität von Lipidphasen zu verbessern.

Das Verfahren ist auch gerichtet auf den Erhalt von senosrisch stabilisierten Lipidphasen.

### Kennzahlenbereiche und Methoden zu deren Erfassung für die bereitzustellenden Lipidphasen

Schleimstoffe, wie im Folgenden beschrieben, können die nanoemulsive Raffination ungünstig beeinflussen und sollten daher auf die hierin beschriebenen Ausgansqualitäten, im Folgenden Prozess-Kennzahlen genannt, im Verfahrensschritt a) überprüft werden und vor der Durchführung des Verfahrensschrittes c) auf die festgelegten Kennzahlwerte reduziert, bzw. adjustiert werden. Hierzu können folgende Parameter herangenommen werden: Gesamtphosphorgehalt (Bestimmungsmethode: z.B. ICP), dieser muss einen Wert von ≤15 ppm aufweisen, damit eine ausreichende Reduktion von Schleimstoffen vorliegt, um die Verfahrensstufe c) durchzuführen. Ferner sollte der Gehalt an neutralisierbaren Gruppen, insbesondere Säure- bzw. Carboxylgruppen (Bestimmungsmethode: z. B. methanolische Titration mit KOH) vor der Durchführung des Verfahrensschrittes c) in einem optionalen Verfahrensschritt b1) ermittelt werden. Bei einem im Verfahrensschritt b1) ermittelten Wert von ≤ 0,2 Gew-% kann der optionale Verfahrensschritt b2) durchgeführt werden.

Die Erfindung betrifft ebenfalls ein Verfahren, wobei vor Durchführung des optionalen Verfahrensschritts b1) Bestimmung des Gehalts an freien Fettsäuren erfolgt, und, wenn der Gehalt an freien Fettsäuren unter oder gleich 0,2 Gew.-% beträgt, Durchführung des optionalen Verfahresschritts b2) Zugabe einer oder mehrerer Carbonsäure(n) zur Lipidphase und Mischen der Phasen erfolgt.

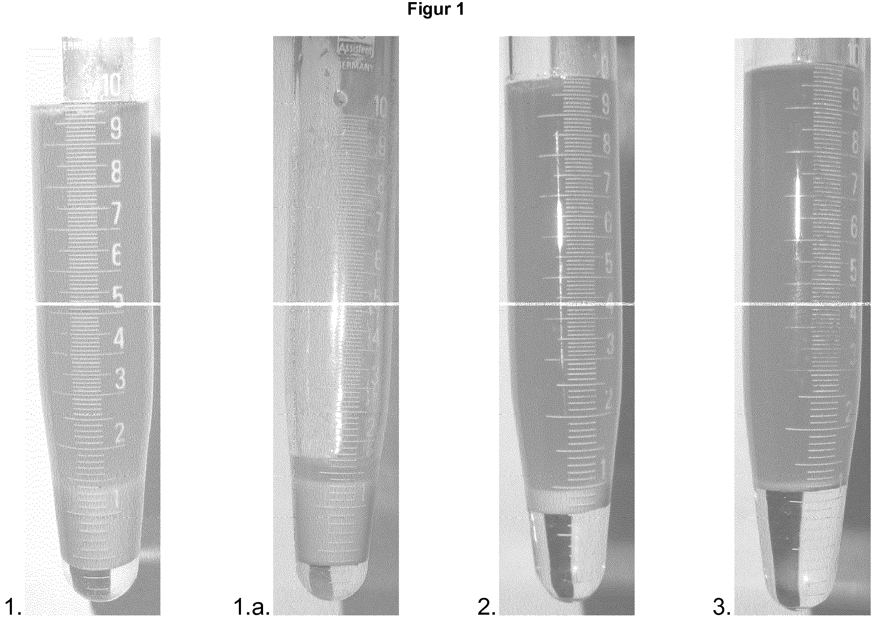

Für hydratisierbare saccharidhaltige Lipidverbindungen, die in einigen Lipidphasen in einem hohen Gehalt vorliegen und eine starke Emulsionsbildung mit Wasser bewirken, gibt es kein routinemäßig vorhandenes oder etabliertes Messverfahren. Für den Fachmann ist es aber leicht zu untersuchen, ob neben den Phosphat- und Säure-haltigen Verbindungen, die mit den zuvor beschriebenen Methoden ermittelt werden können, sonstige Schleimstoffe in einem relevanten Maß vorliegen. Hierzu wird die hierin verwandte Prüfung auf Schleimstoffe in der Verfahrensstufe a) wie folgt durchgeführt: Eine Lauge (bevorzugte Laugenbildner sind Natriumhydroxid, Kaliumhydroxid, Natriumcarbonat, Natruimborat und Natriummetasilikat) in einer Konzentration von 0,5 bis 2 molar mit einem pH-Wert zwischen 8 und 13 wird in einem Volumenverhältnis von 0,5:10 bis 5:10 (Base zu Lipidphase) und vorzugsweise 1:10 bis 2:10 (Base zu Lipidphase) mit der Lipidphase durch Schütteln oder Rotation (Vortex-Mischer (3000 rpm) für 3 Minuten) gemischt und anschließend eine Phasenseparation mittels Zentrifugation (2000 bis 3000 g) vorgenommen. Als hierfür besonders geeigneter Basenbilder hat sich Natriumhydrohencarbonat herausgestellt welches z.B. in einer 0,5 molaren Lösung bei einem pH von 11,5 wie angegeben verwandt wurde. Kommt es zu einer emulsiven Schichtbildung, die mit dem bloßen Auge gut zu erkennen ist (Abbildung 1) und die einen Volumenanteil von mehr als 1,0 Vol%, vorzugsweise mehr als 2,0 Vol%, vorzugsweise mehr als 3,0 Vol%, vorzugsweise mehr als 4,0 Vol%, und vorzugsweise mehr als 5,0 Vol%, bezogen auf das Gemisch aus Lipidphase und Lauge überschreitet, so ist die erforderliche Produktspezifikation für die Durchführung des Verfahrensschritts c) und d) nicht erfüllt und ein geeignetes Verfahren zur Vorentschleimung der Lipidphase ist vor der nanoemulsiven Raffination der Verfahrensstufe c), d) und e) durchzuführen. Unter einer emulsiven Schicht wird hierin verstanden, eine mit bloßem Auge erkennbare Schicht, die sich im Bereich der Wasser/Lipidphasengrenze (öl- oder wasserseitig) befindet und sich von den beiden Phasen als Schicht abgrenzen lässt und die sich im Aussehen und in der Konsistenz, deutlich von der Öl- und der Wasserphase, die in Form von klaren Phasen oder in Form von Emulsionen vorliegen können, unterscheidet. Dabei kann die Schicht ein gelartiges bis salbenartiges Aussehen aufweisen, auch können hierin korpuskuläre Anteile oder Aggregate enthalten sein. Die Viskosität der Emulsionsschicht kann gering bis hoch-viskos sein, unterscheidet sich aber von der der Wasser- und der der Lipidphase. Somit weist eine hierin verstandene emulsive Schicht oder Emulsionsschicht eine Grenzfläche zur Lipid- und Wasserphase auf und ist in ihrem Aussehen sowie der Viskosität unterschiedlich zur Wasser- und Lipidphase. Hierdurch kann die Emulsionsschicht quantifiziert werden, indem in einem volumetrisch skalierten Behältnis das Volumen der Emulsionsschicht ermittelt wird (Abbildung 1) durch die Summe der Skaleneinheiten, die zwischen der unteren und der oberen Phasengrenze der Emulsionsschicht ermittelt wird oder durch eine Separation der Emulsionsschicht mit anschließender volumetrischer Bestimmung. Die Prozesskennzahlen sind also in dem Verfahrensschritt a) zu ermitteln und, sofern ein Verfahrensschritt b) erfolgt ist, vor der Durchführung des Verfahrensschrittes c) erneut zu bestimmen. Bei einem Nichterreichen der festgelegten Prozesskennzahlen ist ein weiterer Verfahrensschritt b) durchzuführen.

Vorzugsweise wird eine wäßrige Lösung von Natriumhydrogencarbonat als Lauge in Schritt a) eingesetzt.

Prinzipiell kann ein erfindungsgemäßer nanoemulsiver Eintrag einer wässrigen Lösung, enthaltend eine gelöste Form einer Verbindung mit einer Guanidin- oder Amidingruppe, in jede definitionsgemäße Lipidphase unmittelbar eingebracht werden. Aus der Technischen Lehre wird aber ersichtlich, dass das Vorliegen eines hohen Anteils an stark hydratisierbaren organischen Verbindungen, wie z. B. Phosphatidylcholinen, zu einer starken Emulsionsbildung führt, die den nanoemulsiven Abtrennprozess behindert oder eine Makroemulsion bewirkt, die eine zentrifugale Phasenseparation ver- oder behindert. Daher ist es bei vielen Anwendungen erforderlich, vor der erfindungsgemäßen Anwendung eine Vorentschleimung der Lipidphase durchzuführen, wie hierin beschrieben. Dabei kann es sich auch um Öle und Fette handeln, bei denen hierzu Verfahren, die aus dem Stand der Technik bekannt sind, bereits angewandt wurden, aber nicht zum Erhalt der gewünschten Qualität des Raffinates geführt haben.

Somit ist für die Durchführung der erfindungsgemäßen nanoemulsive Raffination eine Lipidphase bereitzustellen, bei der ein Gesamtphosphorgehalt kleiner oder gleich 15 mg/kg, mehr bevorzugt von < 12 mg/kg und am meisten bevorzugt von < 8 mg/kg vorliegt. Gleichzeitig ist ein Gehalt an neutralisierbaren (Carboxyl-) Säuregruppen von < 15 Gew-% und > 0,2 Gew-%, mehr bevorzugt von < 8 Gew-% und > 0,2 Gew-% am meisten bevorzugt von < 1,5 Gew-% und > 0,2 Gew-% günstig. Zusätzlich ist durch eine Untersuchung auf Schleimstoffe mit einer Lauge, wie zuvor beschrieben, eine makroskopisch sichtbare Emulsionsschichtbildung, die einen Volumenanteil von 1,0 Vol-% übersteigt, auszuschließen. Demnach muss für die erfolgreiche nanoemulsive Abtrennung der Geruchs-, Geschmacks- und Farbstoffe die Untersuchung auf die Präsenz von Schleimstoffen negativ ausfallen und ein bestimmter Phosphorwert sollte nicht überstiegen werden. Der Phosphorgehalt ist also in Schritt a) vorzubestimmen sowie im Anschluss an ein oder mehrere Entschleimungsverfahren gemäß der Verfahrensstufe b) zu bestimmen.

In einer weiteren bevorzugten Ausführungsform beträgt der vorbestimmte Wert des Phosphorgehalts nach einem hierin offenbarten Verfahren in Stufe b) 100 ppm oder 30 ppm oder 20 ppm oder 15 ppm.

Überraschenderweise hat sich herausgestellt, dass mit einem einfach durchzuführenden Testverfahren auf die Präsenz von Schleimstoffen bei unterschiedlichsten Ölphasen die Steuerung des erfindungsgemäßen wässrigen nanoemulsiven Raffinationsverfahrens erfolgen kann, indem hiermit entschieden werden kann, mit sauren oder basischen Lösungen eine Vorreinigung der Lipidphasen vorzunehmen um das Eignungskriterium für einen wässrigen nanoemulsiven Raffinationsschritt mit einer Lösung, enthaltend Guanidin- oder Amidingruppentragende Verbindungen, der mit einem Intensiveintrag in die Ölphase erfolgt, zu erfassen, wodurch eine Bleichung, Desodorierung und Entfernung von freien Fettsäuren sowie anorganischen Verbindungen ermöglicht werden, die gleichwertig sind zu einem klassischen Raffinationsprozess, in dem zur Raffination Enschleimungsverfahren und eine Behandlung mit Bleicherden sowie eine Dampfdesodorierung erfolgen.

Damit ermöglicht das Verfahren einige wirtschaftlich attraktive Vorteile gegenüber Verfahren aus dem Stand der Technik:
Kontinuierliche Raffination, ein Batch-Verfahren ist nicht erforderlich
- Eine Erhitzung der zu raffinierenden Öle ist nicht erforderlich, wodurch die Prozessenergiekosten reduziert und die Qualität der Öle verbessert werden können
- Verzicht auf Adsorptionsmittel, wie Bleicherden oder Silikagele, wodurch die Prozesskosten und die Menge an Produktverlust durch einen Mitaustrag reduziert werden,
- Verzicht auf einen Desodorierungsschritt mittels Wasserdampfextraktion was zu einer Reduktion der Prozessenergiekosten beiträgt und die Produktqualität verbessert

Die Untersuchung auf die Präsenz von Schleimstoffen in Schritt a) wird in einer Ausführungsform der Erfindung durchgeführt, indem eine Probe der Lipidphase mit einer wässrigen Lösung mit einem pH-Wert im Bereich von 8 bis 13 versetzt wird, wobei die Untersuchung positiv ausfällt, wenn nach Schütteln und Phasentrennung eine Schichtbildung erfolgt, wobei vorzugsweise das Volumenverhältnis von eingesetzten Proben der Lipidphase zu wässriger Lösung 9:1 beträgt.

Eine weitere Ausführungsform ist ein Verfahren, wobei die Untersuchung auf die Präsenz von Schleimstoffen in Schritt a) durchgeführt wird, indem eine Probe der Lipidphase mit einer wässrigen Lösung, mit einem pH-Wert im Bereich 8 bis 13 versetzt wird, wobei vorzugsweise das Volumenverhältnis von eingesetzter Probe der Lipidphase zu wässriger Lösung vorzugsweise 9 : 1 beträgt, wobei die Untersuchung positiv ausfällt, wenn nach Schüttlen und Phasentrennung eine Schichtbildung erfolgt.

### Verfahren zur Durchführung von Verfahrensstufe b)

In einer Ausführungsform der vorliegenden Erfindung wird die Lipidphase in Stufe b) vorgereinigt, indem Wasser oder eine wässrige Lösung zugemischt wird, die einen bevorzugten pH-Bereich zwischen 7,5 und 14, mehr bevorzugt zwischen 9,5 und 13,5 und am meisten bevorzugt zwischen 11,5 und 13,0 aufweist, und nach Mischen und Phasentrennung die wässrige Phase abgetrennt wird.

Die Anwendung von einem oder mehreren Vorreinigungsschritten vor Anwendung eines nanoemulsiven Raffinationsschrittes mit einer wässrigen Lösung, die eine Amidin- oder Guanidingruppentragende Verbindung enthält, hat sich als ein wesentliches Verfahrenselement dargestellt, sofern der Gehalt an Ölbegleitstoffen, die eine Emulsionsbildung mit einem alkalischen wässrigen Medium bedingen, ein gewisses Maß übersteigen und mit dem nanoemulsiven Raffinationsverfahren eine Bleichung und Desodorierung in einem Verfahrensschritt erzielt werden soll, die der Qualität einer Bleichung und Desodorierung nach dem Stand der Technik entspricht.

In einer weiteren Ausführungsform enthält die wässrige Lösung eine Base, die von der Substanz in Schritt c) verschieden ist und vorzugsweise ausgewählt ist unter Natriumhydroxid, Kaliumhydroxid, Ammoniumhydroxid, Natriumcarbonat, Natriumhydrogencarbonat, Natriumbicarbonat, Kaliumcarbonat und Kaliumhydrogencarbonat, Natriummetasilikat, Natriumborat. Die geeigneten Konzentrationen und das Mischungsverhältnis der wässrigen Phase mit der Ölphase sind prinzipiell frei wählbar und durch einen Fachmann leicht herauszufinden. Bevorzugt sind Konzentrationen der basischen Lösungen zwischen 0,1 bis 3 molar, mehr bevorzugt zwischen 0,5 und 2 molar und am meisten bevorzugt zwischen 0,8 und 1,5 molar. Das Volumenverhältnis zwischen der basischen Wasserphase und der Ölphase sollte bevorzugt zwischen 0,3 bis 5 Vol%, mehr bevorzugt zwischen 0,3 und 4 Vol-% und am meisten bevorzugt zwischen 1,5 und 3 Vol-% liegen. Der Eintrag der basischen Lösungen kann kontinuierlich oder im Batchverfahren und die Mischung der beiden Phasen mit Rührwerkzeugen aus dem Stand der Technik erfolgen. Es hat sich in der praktischen Anwendung allerdings gezeigt, dass die Vorreiningung mit einem Intensivmischer, wie hierin beschrieben, durchgeführt werden sollte, sofern es hierdurch nicht zu einer durch physikalische Verfahren nicht mehr trennbaren Emulsion kommt, um eine vollständigere Reduktion der hierin befindlichen Schleimstoffe erreichen zu können.

Entsprechend einer weiteren Ausführungsform der vorliegenden Erfindung wird in Schritt b) mit einer Säure in konzentrierter Form oder mittels einer wässrigen Lösung einer Säure vorgereinigt. Dabei erfolgt die Vorreinigung, indem die unverdünnte Säure oder eine säure-enthaltende wässrige Lösung mit einen pH-Wert zwischen 1,0 und 5, mehr bevorzugt zwischen 1,7 und 4 und am meisten bevorzugt zwischen 3 und 3,5 der Lipidphase zugemischt wird und nach Phasentrennung die wässrige (schwere) Phase abgetrennt wird. Zur Einstellung des pH-Wertes sind Säuren bevorzugt und besonders bevorzugt ist eine Säure, ausgewählt unter Phosphorsäure, Schwefelsäure, Zitronensäure und Oxalsäure. Das für einen wirtschaftlichen Betrieb erforderliche Mischungsverhältnis zwischen der unverdünnten Säure, bzw. der wässrigen Säurelösung und der Ölphase lässt sich durch den Fachmann leicht herausfinden unter Zuhilfenahme der hierin erforderlichen Zielparameter bezüglich des Phosphorgehaltes und des Gehaltes an emulsionsbildenden Schleimstoffen. Die unverdünnte Säure wird vorzugsweise in einem Volumenverhältnis zwischen 0,1 und 2,0 Vol-%, mehr bevorzugt zwischen 0,2 und 1,0 Vol-% und am meisten bevorzugt zwischen 0,3 und 1,0 Vol-% hinzugegeben. Die wässrige Säurelösung wird vorzugsweise in einem Volumenverhältnis zwischen 0,5 und 5 Vol-%, mehr bevorzugt zwischen 0,8 und 2,5 Vol-% und am meisten bevorzugt zwischen 1,0 und 2,0 Vol-% hinzugegeben.

Eine besonders bevorzugte Ausführungsform der Vorreinigung mit einer Säure oder einer Säure- oder Basen-enthaltenden Lösung ist deren Eintrag in die Ölphase mit einem Intensivmischer, um eine Dispersion oder ein Homogenisat zu erhalten, wie hierin beschrieben.

In einer Ausführungsform der Erfindung ist die Einmischung der unverdünnten Säure oder der säurehaltigen Lösung oder einer wässrigen Lauge in Schritt b) mit einem Intensiveintrag, wie hierin beschrieben, bevorzugt, besonders bevorzugt sind dabei Rotor-Stator-Mischsysteme, sowie Systeme, die Kavitationen erzeugen, wie Ultraschallsysteme. Dabei beträgt die bevorzugte Einwirkdauer bei Anwendungen in einem Batchverfahren zwischen 1 bis 30 Minuten, mehr bevorzugt zwischen 4 und 25 Minuten und am meisten bevorzugt zwischen 5 und 10 Minuten. Bei Anwendung einer kontinuierlichen Durchmischung (sogenanntes in-line-Verfahren) ist die Verweilzeit im Mischwerk zwischen 0,5 Sekunden bis 5 Minuten, mehr bevorzugt zwischen 1 Sekunde und 1 Minute und am meisten bevorzugt zwischen 1,5 Sekunden bis 20 Sekunden. Die bevorzugten Temperaturen, die die Lipidphase sowie die hinzugemischte wässrige Phase für eine Intensivmischung aufweisen sollte, liegt zwischen 15° und 45°C, mehr bevorzugt zwischen 20° und 35°C und am meisten bevorzugt zwischen 25° und 30°C.

Die Abtrennung der wässrigen Phase aus der Emulsion in der Verfahrensstufe b), kann vorzugsweise durch zentrifugale Separationsverfahren erfolgen, bevorzugt ist die Verwendung von Zentrifugen, Separatoren und Dekantern. Dabei ist die Dauer einer zentrifugalen Abtrennung abhängig von den Produktspezifika (Wasseranteil, Viskosität, u.a.m) und dem eingesetzten Separationsverfahren und muss daher individuell ermittelt werden. Vorzugsweise ist eine Zentrifugation über 2 bis 15 Minuten, mehr bevorzugt über 8 bis 12 Minuten durchzuführen. Der Verbleib in einem Separator oder Dekanter beträgt vorzugsweisen 2 bis 60 Sekunden, mehr bevorzugt 10 bis 30 Sekunden. Die Zentrifugalbeschleunigung ist vorzugsweise zwischen 2.000 und 12.000 g auszuwählen, mehr bevorzugt ist eine Zentrifugalbeschleunigung zwischen 4.000 und 10.000 g. Die Temperatur während einer Phasenseparation sollte vorzugsweise zwischen 15 und 60°C betragen, mehr bevorzugt zwischen 20 und 45°C und am meisten bevorzugt zwischen 25 und 35°C.

In einer weiteren bevorzugten Ausführungsform kann bei einem Nicht-Erreichen einer negativen Probe auf eine Emulsionsbildung, wie hierin beschrieben, ein weiterer Vorreinigungsschritt mit einer basischen oder sauren Lösung gemäß einem Verfahren aus dem Stand der Technik durchgeführt werden.

Besonders vorteilhaft bei dem erfindungsgemäßen Verfahren ist es, dass die wässrigen Vorreinigungsschritte bei Raumtemperatur und ohne eine vorherige Konditionierung in einem kontinuierlichen Verfahrensablauf erfolgen können. Diese Vorreinigung unterscheidet sich hierdurch entscheidend von wässrigen Raffinationsschritten, die aus dem Stand der Technik mit den hierin offenbarten Verbindungen bekannt sind, dahingehend, dass eine Abreicherung von phosphorhaltigen organischen Verbindungen oder freien Fettsäuren, wie sie bei den bekannten Entschleimungsverfahren gefordert sind, nicht eingehalten werden müssen. Dies verbessert in entscheidenden Maß die Wirtschaftlichkeit und Praktikabilität des Vorreinigungsverfahrens im Vergleich zum Stand der Technik, da energieaufwendige Prozessteile (Produkterhitzung, Verweilzeit mit einem Mischungsvorgang, Herstellen eines Vakuums) hierdurch entfallen können.

Weiterhin beschrieben ist ein Verfahren zur kontinuierlichen nanoemulsiven Raffination von Lipidphasen.

Sofern die Prüfung der Lipidphase die Notwendigkeit einer Vorreinigung anzeigt, ist die Auswahl eines wässrigen Entschleimungsverfahrens, also einer Behandlung mit einer Säure (unverdünnt oder als wässrige Lösung) oder einer Lauge, prinzipiell frei wählbar, sodass sich verschiedene Möglichkeiten der Vorreinigung ergeben: I. alleinige Säurebehandlung, II. alleinige Basenbehandlung, III. erst Säurebehandlung, dann Basenbehandlung, IV. erst Basenbehandlung, dann Säurebehandlung, V. wiederholte Säurebehandlung, VI. wiederholte Basenbehandlung. Die Auswahl des geeigneten und kostengünstigsten Verfahrens kann durch einen Fachmann problemlos erfolgen, da mit dem hierin angegebenen Untersuchungsverfahren sehr leicht und zuverlässig beurteilt werden kann, ob die Weiterverarbeitung der Lipidphase in der Verfahrensstufe c), d) und e)erfolgen kann. Aus der praktischen Erfahrung hat sich allerdings gezeigt, dass, wenn eine Vorreinigung erforderlich ist, die initiale Anwendung einer wässrigen Säurebehandlung, gefolgt, sofern noch erforderlich, von einer wässrigen Basenbehandlung, die am meisten bevorzugte Ausführungsform darstellt. Ferner ist die Verwendung von Phosphorsäure, wie hierin beschrieben, für eine Vorreinigung von Lipidphasen, die eine hohe Konzentration von grünen oder braunen Farbanteilen und/oder Geruchs- bzw. Geschmacksstoffen aufweisen, besonders vorteilhaft.

Das Verfahren umfasst somit einerseits die unmittelbare Raffination von Lipidphasen, die bereits einen geringen Gehalt an hydratisierbaren organischen Verbindungen aufweisen, andererseits die Raffination von Lipidphasen, bei denen zuvor eine Bearbeitung mit einem Säure oder Lauge basiertem Schritt sowie Kombinationen hiervon erfolgt sind und hierdurch der erforderliche Reinheitsgrad erreicht wurde.

### Verfahren zur Durchführung der Verfahrensstufen c) und d)

Die überaus vorteilhafte Entfernung von Geruchs- bzw. Geschmacksstoffen sowie Farbstoffen, die zu Fehlaromen und/oder einer Fehlfarbe einer Lipidphase führen, wird durch die erfindungsgemäße Durchführung der Verfahrensstufe c),
Versetzen der Lipidphase mit einer wässrigen Phase, die eine Substanz enthält, die mindestens eine Amidingruppe oder mindestens eine Guanidingruppe aufweist und die einen Verteilungskoeffizienten zwischen n-Octanol und Wasser von K_{OW} < 6,3 aufweist und der Verfahrensstufe d) Herstellung einer Mischung aus der Lipidphase und der wässrigen Phase, erzielt.

Methoden, Techniken und Variationen werden nachfolgend beschrieben.

In einer besonders bevorzugten Ausführungsform erfolgt die erfindungsgemäße Entfernung von Geruchs- bzw. Geschmacksstoffen sowie Farbstoffen, die zu Fehlaromen und/oder einer Fehlfarbe einer Lipidphase führen, in der Verfahrensstufe d), indem die nanoemulsive Wirkung von nanoemulgierten Verbindungen, bestehend aus Guanidin- oder Amidingruppentragenden Verbindungen und Carbonsäuren, hergestellt bzw. eingerichtet wird.

Für die Herstellung derartiger Nanoemulsionen kann die enorme Fähigkeit von Guanidin- oder Amidingruppen zur elektrostatischen Interaktion mit Carbonsäuren ausgenutzt werden. Da Carbonsäuren in praktisch allen biogenen Lipidphasen bereits enthalten sind, stehen diese für die Herstellung einer Nanoemulsion mit der Guanidin- oder Amidingruppe bereits zur Verfügung und müssen nicht zusätzlich eingebracht werden. Dadurch werden diese zum einen gebunden und extraktionsfähig gemacht und können zum anderen gleichzeitig, durch die Erzeugung einer Nanoemulsion, weitere lipophile oder amphiphile Verbindungen lösen und ebenfalls mit dem wässrigen Medium, in dem sie sich befinden, abtrennbar machen. Ein weiterer entscheidender Vorteil besteht darin, dass es bei den elektrostatischen Bindungen, die sich zwischen Carbonsäuren und den Guanidin- oder Amidingruppentragenden Verbindungen ausbilden, zu keiner Seifenbildung kommt, die im Öl bleiben könnte und das Raffinationsergebnis ungünstig beeinflussen würde.

Somit ist eine besonders vorteilhafte Ausführungsform der Verfahrensstufe c) und d) die Herstellung einer Nanoemulsion in einer Lipidphase mit wässrigen Lösungen, enthaltend Guanidin- oder Amidingruppentragende Verbindungen und Carbonsäuren, dadurch zu erreichen, dass der Eintrag der wässrigen Lösung mit einem Intensivmischer erfolgt.

In einer weiteren bevorzugten Ausführungsform kann eine Nanoemulsion aber auch dadurch in der zu raffinierenden Lipidphase der Verfahrensstufe b2) hergestellt werden, indem eine Nanoemulsion, bestehend aus einer wässrigen Lösung, enthaltend Guanidin- oder Amidingruppentragende Verbindungen mit hierin nanoemulgierten Carbonsäuren, der Lipidphase hinzugegeben wird oder Carbonsäuren, unabhängig von dem Eintrag einer wässrigen Lösung, enthaltend Guanidin- oder Amidingruppentragende Verbindungen, zu der Lipidphase hinzugegeben werden.

In einer weiter bevorzugten Ausführungsform erfolgt die Hinzugabe einer oder mehrerer Carbonsäuren oder einer Nanoemulsion, die aus einer wässrigen Lösung von Guanidin- oder Amidingruppentragende Verbindungen mit hierin nanoemulgierten Carbonsäuren besteht.

In einer Ausführungsform ist die Substanz in Stufe c) eine Verbindung mit nicht mehr als 10 Kohlenstoffatomen und/oder wird bei einem pH-Wert von mehr als 7,0 verwendet.

In einer ganz besonders bevorzugten Ausführungsform ist die Substanz in Stufe c) Arginin oder ein Argininderivat. Arginin ist eine Aminosäure und kann bei einer Anwendung bei einem Lebensmittel bis zu einem gewissen Grad auch in solchen verbleiben.

In einer Ausführungsform wird die wenigstens eine Guanidin- oder Amidingruppe enthaltende Substanz in molarem Überschuss im Verhältnis zu titrierbaren Säuregruppen eingesetzt. Es hat sich gezeigt, dass eine vollständige Abtrennung von Fettsäuren nicht möglich ist, wenn kein derartiger Überschuss vorhanden ist. Dies könnte darauf basieren, dass auch andere amphiphile oder überwiegend lipophile Verbindungen Carboxylgruppen enthalten, die ebenfalls mit Guanidin- oder Amidingruppen interagieren.

Die vorzugsweise eingesetzte Konzentration von Guanidin- oder Amidingruppentragenden Verbindungen, die in einem vorzugsweise ionenarmen oder ionenfreien Wasser gelöst vorliegen müssen, wird in einer Ausführungsform anhand der ermittelbaren Säurezahl der zu raffinierenden Lipidphase, die sich z. B. durch eine Titration mit KOH ermitteln lässt, bestimmt. Die daraus ableitbare Anzahl an Carboxylsäuregruppen dient dabei zur Berechnung der Gewichtsmenge der Guanidin- oder Amidingruppentragenden Verbindungen, die der zu raffinierenden Lipidphase in einer wässrigen Lösung hinzugegeben werden soll. Hierbei muss eine mindestens gleiche oder höhere Anzahl an Guanidin- oder Amidingruppen, die in freier und ionisierbarer Form vorliegen, vorhanden sein. Das so ermittelbare Stoffmengenverhältnis zwischen den Guanidin- oder Amidingruppentragenden Verbindungen und der Gesamtheit der freien oder freisetzbaren Carboxylsäuregruppen tragenden Verbindungen bzw. Carbonsäuren muss > 1 : 1 sein. Vorzugsweise sollte ein molares Verhältnis zwischen den bestimmbaren Carbonsäuren (hier insbesondere maßgebend ist die Säurezahl) und den erfindungsgemäßen Guanidin- oder Amidingruppentragenden Verbindungen von 1:3, mehr bevorzugt von 1: 2,2 und am meisten bevorzugt von 1:1,3 in einem bevorzugt ionenarmen oder ionenfreien Wasser hergestellt werden. Dabei kann die Molarität der gelösten erfindungsgemäßen Lösung mit Guanidin- oder Amidingruppentragenden Verbindungen bevorzugt zwischen 0,001 und 0,8 molar, mehr bevorzugt zwischen 0,01 und 0,7 molar und am meisten bevorzugt zwischen 0,1 und 0,6 molar liegen. Da die Interaktion der Guanidin- oder Amidingruppen auch bei Umgebungstemperaturen gewährleitet wird, beträgt die bevorzugte Temperatur, mit der der erfindungsgemäße Eintrag der wässrigen Lösungen enthaltend gelöste Guanidin- oder Amidingruppentragenden Verbindungen erfolgen kann zwischen 10 und 50°C, mehr bevorzugt zwischen 28°C und 40°C und am meisten bevorzugt zwischen 25°C und 35°C. Dabei ist durch den erfindungsgemäßen Intensiveintrag der wässrigen Lösungen mit Guanidin- oder Amidingruppentragenden Verbindungen das Volumenverhältnis zwischen der Lipidphase und der erfindungsgemäßen Wasserphase prinzipiell unerheblich. Um allerdings die besonders vorteilhaften ressourcensparenden Effekte des Verfahrens zu erhalten, sollte das Volumen der Wasserphase auf das erforderliche Minimum reduziert werden. In einer Ausführungsform beträgt daher das Mengenverhältnis (v/v) der wässrigen Lösung in Stufe c) zu der Lipidphase von 10% bis 0,05%, vorzugsweise, von 4,5% bis 0,08%, mehr bevorzugt von 3% bis 0,1%.

Das Volumen- und Konzentrationsverhältnis kann dadurch beeinflusst werden, dass sich in manchen Lipidphasen noch emulsionsformende Verbindungen, wie z. B. Glycolipide, erst durch eine wässrige Lösung mit Guanidin- oder Amidingruppentragenden Verbindungen herauslösen lassen und hierdurch diese Verbindungen nicht für die Abtrennung von Carbonsäuren zur Verfügung stehen. Daher kann es in einer Ausführungsform notwendig sein, ein größeres Volumen- und oder Konzentrationsverhältnis der wässrigen Lösungen, enthaltend Guanidin- oder Amidingruppentragenden Vverbindungen, zu den zu raffinierenden Lipidphasen zu wählen.

In einer Ausführungsform liegt die Konzentration der wenigstens einen Substanz in der wässrigen Phase in Stufe c) in einem Bereich von 0,001 bis 0,8 molar, mehr bevorzugt von 0,01 bis 0,7 molar, und am meisten bevorzugt von 0,1 bis 0,6 molar.

In einer Ausführungsform erfolgt das Homogenisieren in Stufe d) in einem Temperaturbereich von 15 bis 60 °C, bevorzugt von 20° bis 50°C, mehr bevorzugt von 25 bis 40 °C.

In einer weiteren Ausführungsform der Erfindung wird Schritt d) bei einer Temperatur von maximal 60 °C durchgeführt.

Es konnte gezeigt werden, dass die mit den hierin offenbarten nanoemulsiven Verfahren raffinierten Lipidphasen in einer Reinheit erhalten werden, die eine Nachbehandlung mit Bleicherde oder eine Dampfdesodorierung überflüssig macht. Zudem weisen dadurch erhaltene raffinierte Lipidphasen Restgehalte auf, die im Bereich von weniger als 5 ppm, insbesondere weniger als 2 ppm phosphorhaltige Verbindungen, weniger als 0,2 Gew-%, insbesondere weniger als 0,1 Gew-% freie Fettsäuren, weniger als 3 ppm, insbesondere weniger als 0,02 ppm Na-, K-, Mg-, Ca- oder Fe-Ionen liegen. Zudem werden raffinierte Lipidphasen erhalten, die im Wesentlichen frei von Fehlfarben und im Wesentlichen frei von unerwünschten Geschmacks- bzw. Geruchstoffen sind. Insbesondere ist es möglich, einen Anteil an Chlorophyllverbindungen und Geruchsstoffen von mehr als 90% zu entfernen. Bei bestimmten Aufreinigungen ist es sogar möglich, den Gehalt an Phosphor bis auf 0,8 ppm zu senken.

Die vorliegende Erfindung betrifft Lipidphasen, erhältlich oder erhalten nach dem hierin beschriebenen Verfahren, wobei die Lipidphase weniger als 2 ppm phosphorhaltige Verbindungen aufweist, wobei die Lipidphase weniger als 0,2 Gew-% freie Fettsäuren, und weniger als 0,5 ppm (oder 0,5 mg/kg) Na-, K-, Mg-, Ca- und/ oder Fe-Ionen aufweist.

In einer Ausführungsform der Erfindung werden neben Fehlgeruchs- und Farbstoffen auch Fehlgeschmacksstoffe nach dem hierin offenbarten Verfahren aus der Lipidphase abgetrennt.

In einer weiteren Ausführungsform werden die in eine der erfindungsgemäß wässrigen Raffinationsphasen enthaltenen Schleimstoffe und/oder Geruchs- und/oder Geschmacks- und/oder Farbstoffe einer weiteren Verwendung zugeführt.

Weiterhin unerwartet und überraschend war, dass bei den untersuchten Pflanzenölen, unabhängig von den untersuchten Sorte und Ausgangsölkennzahlen, unter Einhaltung der hierin festgelegten Prozesskennzahlen, alle Öle durch den erfindungsgemäßen Intensiveintrag von Guanidin- oder Amidingruppentragenden Verbindungen ein Raffinat erhalten wurde, das dem Qualitätsstandard sowohl für Speiseöle als auch für Pflanzenölkraftstoffen entspricht. Somit konnte bei allen Raffinaten, die so gewonnen wurden, auf Raffinationsschritte, wie einer Bleichung oder Desodorierung, verzichtet werden. Insofern ist die erfindungsgemäße nanoemulsiven Raffination von Pflanzenölen auch gerichtet auf ein Raffinat, bei dem eine Bleichung oder Desodorierung nicht mehr erforderlich ist.

Weiterhin bewirkte die Homogenisierung in Stufe d) nach einer anfänglichen Viskositätszunahme der entstehenden Emulsion eine Viskositätsabnahme bei einigen Ölen, während bei anderen, eine nicht trennbare Emulsion bei einer fortgesetzten Homogenisierung entsteht. Es hat sich gezeigt, dass nach einem Behandlungsschritt mit einer Lauge und Erreichen eines negativen Probenergebnisses auf Schleimstoffe, wie hierin beschrieben, alle Lipidphasen in der Verfahrensstufe c), d) und e) weiter behandelt werden können, wobei eine dünnflüssige Emulsion entsteht, mit der zuverlässig eine im Anschluss erfolgende Phasenseparation optimal durchgeführt werden kann, wobei eine Reduktion von Farb- bzw. Geruchs- und/oder Geschmacksstoffen sowie extrem niedrige Werte für Erdalkalimetalle, Metallionen sowie für den Phosphogehalt und für freie Carbonsäuren erhalten werden. Insofern hat sich überraschenderweise gezeigt, dass für die erfindungsgemäße Anwendung des nanoemulsiven wässrigen Raffinationsvrfahrens die Lipidphase eine Höchstmenge an hydratisierbaren organischen Verbindungen nicht überschreiten sollte, damit zum einen die nanoemulsive Abtrennung von Farb- und Geruchs- bzw. Geschmacksstoffen sowie anderer organischer und anorganischer Substanzen ermöglicht wird und zum anderen eine Phasenseparation hergestellt werden kann.

Bestandteil des erfindungsgemäßen Verfahrens ist daher ein Intensiveintrag wässriger Lösungen, wie dies mit in-line Homogenisatoren erfolgt, indem eine kombinierte Zudosierung der wässrigen Phasen bei den Verfahrensschritten b) und/oder c) zu der zu raffinierenden Lipidphase mittels eines Zulaufs, der unmittelbar vor oder in der Mischkammer erfolgt und die Phasen durch eine Dosierpumpe gefördert werden,. Hierdurch kann in vorteilhafter Form eine gleichmäßige Homogenisierung während eines kontinuierlich durchgeführten Mischschungsverfahrens gewährleistet werden.

In Schritt d) der vorliegenden Erfindung wird eine Intensivmischung hergestellt.

Eine weitere Ausführungsform der vorliegenden Erfindung ist die Durchführung einer nanoemulsiven Reinigung durch einen Intensivmischprozess oder eine Homogenisierung der Phasen in Schritt d) mit dem hier offenbarten Verfahren.

Für den erfindungsgemäßen Intensiveintrag ist die Temperatur der wässrigen Lösung sowie der Lipidphase zwischen 0 und 100°C je nach Anwendung frei wählbar. Da die elektrostatische Interaktion zwischen den Guanidin- oder Amidingruppen und den Carbonsäuregruppen aber stärker bei Temperaturen < 40°C ist, sind Anwendungen bevorzugt, bei denen die nanoemulgierte Lipidphase eine Temperatur zwischen 10°C und 50°C hat und am meisten bevorzugt sind Temperaturen zwischen 25°C und 35°C. Dabei ist die Notwendigkeit einer Temperaturerhöhung aufgrund der Viskosität der Lipidphasen zu berücksichtigen. Die Dauer und Intensität des Intensivmischeintrages kann stark variieren und ergibt sich naturgemäß aus der Aufgabenstellung. So kann es sich bei der Lipidphase um ein herstellungsbedingt schleimstoffarmes Pflanzenöl handeln, das bereits die vorgegebenen Spezifikationen erfüllt und eine geringe Gehalt an freien Fettsäuren und Farbstoffpigmenten aufweist und zusätzlich eine niedrige Viskosität. Hier kann es völlig ausreichen, auch nur ein kleines Volumenverhältnis, z. B. 1% einer 0,5 molaren Argininlösung, mit dem Intensivmischer für eine Dauer von 2 bis 5 Minuten zu homogenisiern, um den nanoemulsiven Raffinationsschritt auszuführen. Im Allgemeinen ist gleichwohl die bevorzugte Ausführungsform eine Homoginisierung der Lipidphase mit den wässrigen Lösungen enthaltend Guanidin- oder Amidingruppentragenden Verbindungen oder einer Nanoemulsion bestehend aus einer wässrigen Lösung, enthaltend Guanidin- oder Amidingruppentragenden Verbindungen und einer Carbonsäure, eine Dauer des Intensivmischeintrages von weniger als 30 Minuten, mehr bevorzugt von weniger als 15 Minuten und am meisten bevorzugt von weniger als 5 Minuten, bei Durchführung eines Batchverfahrens.

### Methoden und Verfahren des Verfahrensschritts e)

Die in der Verfahrensstufe d) entstehenden Emulsionen können mit Verfahren, die zu einer Phasentrennung eines flüssig-flüssig-Gemisches bekannt sind, durchgeführt werden, wobei Verfahren verwendet werden, die durch eine Zentrifugalbeschleunigung eine Phasentrennung über den bestehenden Dichteunterschied der Flüssigkeiten bewirken. Daher sind bevorzugte Ausführungsformen der Verfahrensstufe e) eine Separation mittels Zentrifugen, Separatoren oder Dekantern zu erzielen. Die Auswahl des geeigneten Verfahrens richtet sich nach dem Volumen oder des erforderlichen Durchsatzes, der Viskosität der Lipidphase sowie dem Dichteunterschied der Wasser- und Lipidphase sowie dem Volumenzusatz der Wasserphase. Die Temperatur der zu separierenden Emulsion ist prinzipiell frei wählbar, bevorzugt sind Temperaturen zwischen 10°C und 60°C, mehr bevorzugt zwischen 20°C und 45°C und am meisten bevorzugt zwischen 25°C und 35°C. Die Zentrifugalbescheunigung ist vorzugsweise zwischen 2.000 g und 12.000 g auszuwählen, mehr bevorzugt ist eine Zentrifugalbeschleunigung zwischen 4.000 g und 10.000 g. Vorzugsweise ist eine Zentrifugation über 2 bis 15 Minuten, mehr bevorzugt über 8 bis 12 Minuten durchzuführen. Der Verbleib in einem Separator oder Dekanter beträgt vorzugsweisen 2 bis 60 Sekunden, mehr bevorzugt 10 bis 30 Sekunden. Eine besonder bevorzugte Ausführungsform des Verfahrensschritts e) ist die Verwendung eines Tellerseparators.

### Anwendungsformen:

Das erfindungsgemäße nanoemulsive Raffinationsverfahren ist prinzipiell für Lipidphasen unterschiedlicher Herkunft und Einsatzbereichen sowie unterschiedlichen Verunreinigungsgraden geeignet, solange die hierin beschriebenen Spezifikationen eingehalten werden. Dabei spielt die Menge der nanoemulsiv zu raffinierenden Lipidphase keine Rolle, sofern sich der erfindungsgemäße Intensiveintrag technisch realisieren lässt. Daher sind die nanoemulsive Raffinationstechnik im Labormaßstab und im Technikums-Maßstab sowie großtechnische Raffinationsanlagen anwendbar. Besonders bevorzugt sind großtechnische Raffinationsanlagen.

### Definitionen

### Messungen

Alle hierin beschriebenen Messungen erfolgen, soweit für das Ergebnis relevant und soweit nicht anders angegeben unter Standardbedingungen, d.h. bei einer Temperatur von 25°C und einem Druck von 101,3 kPa.

### Säuren und Basen

Als Säuren werden hier Verbindungen bezeichnet, die in der Lage sind, an einen Reaktionspartner, insbesondere Wasser, Protonen abzugeben.

Dementsprechend bezeichnet der Begriff Basen, Verbindungen, die in der Lage sind, Protonen, insbesondere in wässrigen Lösungen, aufzunehmen.

### Lipidphase

Als Lipidphase hierin werden alle organischen Kohlenstoffverbindungen biologischen Ursprungs zusammengefasst. Der Begriff wie hierin verwendet, umfasst Stoffgemische biologischer Herkunft, die also aus Pflanzen, Algen, Tieren und/oder Mikroorganismen gewonnen werden können und die einen Wassergehalt von <10% und einen Gehalt an lipophilen Substanzen umfassend Monoacylglyceride, Diacylglyceride und/oder Triacylglyceride von insgesamt >70 Gew.-% oder >75 Gew.-% oder >80 Gew.-% oder >85 Gew.-% oder >90 Gew.-% oder >95 Gew.-% aufweisen. So kann es sich bei den Lipidphasen beispielsweise um Extrakte ölhaltiger Pflanzen und Mikroorganismen handeln, wie Kerne von Raps, Sonnenblume, Soja, Leindotter, Jatropha, Palmen, Rizinus aber auch von Algen und Mikroalgen sowie um tierische Fette und Öle. Dabei ist es unerheblich, ob es sich bei der Lipidphase um eine Suspension, Emulsion oder kolloidale Flüssigkeit handelt.

Sofern es sich bei den Lipidphasen um Extrakte bzw. Extraktionsphasen lipoider Stoffe aus einer zuvor erfolgten Abtrennung oder Extraktion handelt, kann die Lipidphase auch zu einem Anteil von > 50% aus organischen Lösungsmitteln oder Kohlenwasserstoffverbindungen bestehen.

Bevorzugte Lipidphasen sind Pflanzenöle, hier insbesondere Press- und Extraktionsöle von Ölpflanzenkernen. Bevorzugt sind aber auch Tierfette. Eingeschlossen sind aber auch nicht polare aliphatische oder zyklische Kohlenwasserstoffverbindungen. Die Lipidphasen zeichnen sich dadurch aus, dass hierin > 95% der Verbindungen apolar sind.

In einer Ausführungsform ist die Lipidphase ein Pflanzenöl oder Tierfett. Insbesondere ist die Lipidphase ein durch Extraktion oder Pressung erhaltenes Pflanzenöl, wobei für die Extraktion bekannte Lösungsmittel eingesetzt werden können.

In einer weiteren Ausführungsform ist die zu reinigende Lipidphase nach einem der hierin offenbarten Verfahren ein pflanzliches Öl oder tierisches Fett für den Lebensmittelbereich.

Zu den Lipidphasen im Sinne der hierin verwendeten Definition zählen u.a. Acai-Öl, Acrocomia-Öl, Mandelöl, Babassuöl, Johannisbeersamenöl, Borretschsamenöl, Rapsöl, Cashew-Öl, Rizinusöl, Kokosöl, Korianderöl, Maisöl, Baumwollsamenöl, Kramben-Öl, Leinsamenöl, Traubenkernöl, Haselnussöl, andere Nussöle, Hanfsamenöl, Jatropha-Öl, Jojoba-Öl, Macadamianussöl, Mangokernöl, Wiesenschaumkraut-Öl, Senföl, Klauenöl, Olivenöl, Palmöl, Palmkernöl, Palmoleinöl, Erdnussöl, Pecan-Öl, Pinienkernöl, Pistazienöl, Mohnöl, Reiskeimöl, Distelöl, Kamelien-Öl, Sesamöl, Sheabutter-Öl, Sojaöl, Sonnenblumenöl, Tallöl, Tsubaki-Öl, Walnussöl, Sorten von "natürlichen" Ölen mit veränderten Fettsäurezusammensetzungen über genetisch veränderte Organismen (GVO) oder traditionellen Züchtungen, Neochloris oleoabundans Öl, Scenedesmus dimorphus Öl, Euglena gracilis Öl, Phaeodactylum tricornutum Öl, Pleurochrysis carterae Öl, Prymnesium parvum Öl, Tetraselmis chui Öl, Tetraselmis suecica Öl, Isochrysis galbana Öl, Nannochloropsis salina Öl, Botryococcus braunii Öl, Dunaliella tertiolecta Öl, Nannochloris Öl, Spirulina Öl, Chlorophyceae Öl, Bacilliarophyta Öl, eine Mischung aus den vorhergehenden Ölen sowie tierische Öle (besonders Seetieröle), Algenöle, Öle aus Kleiegewinnungen z. B. Reiskleieöl und Biodiesel.

### Carbonsäuren

Carbonsäuren, hierin auch Carbonsäuren genannt, sind organische Verbindungen, die eine oder mehrere Carboxylgruppen tragen. Man unterscheidet zwischen aliphatischen, aromatischen und heterocyclischen Carbonsäuren. Aliphatische Formen der Carbonsäuren, auch Alkansäuren genannt, sind Fettsäuren und werden im folgenden Absatz weiter aufgeführt.

### Fettsäuren

Im Allgemeinen sind Fettsäuren aliphatische Kohlenstoffketten mit einer Carboxylsäuregruppe. Die Kohlenstoffatome können mit Einfachbindungen (gesättigte Fettsäuren) verknüpft sein oder mit Doppelbindungsbrücken (ungesättigte Fettsäuren), diese Doppelbindungen können in einer cis- oder trans-Konfiguration vorliegen. Gemäß der Definition hierin werden als Fettsäuren derartige Verbindungen, die mehr als 4 konsekutive Kohlenstoffatome neben der Carboxylgruppe aufweisen als Fettsäuren bezeichnet. Beispiele für lineare gesättigte Fettsäuren sind Nonancarbonsäure (Caprinsäure), Dodecansäure (Laurinsäure), Tetradecansäure (Myristinsäure), Hexadecansäure (Palmitinsäure), Octadecansäure (Stearinsäure), n-Eicosansäure (Arachinsäure) und n-Docosansäure (Behensäure).

Beispiele für monoolefine Fettsäuren sind Myristoleinsäure, Palmetoleinsäure, Petroselinsäure, Ölsäure, Elaidinsäure, Godeleinsäure und die Eurucasäure. Beispiele für Polyolefine Fettsäuren sind Linolsäure, Linolensäure, Punicinsäure, Arachidonsäure und Nervonsäure.

Fettsäuren können auch funktionelle Gruppen tragen wie z. B. die Vernolsäure, Rizinolsäure und die Lactobacillsäure. Zu den funktionellen Gruppen hierin gehören auch endständigen cyklischen Kohlenstoffreste.

Als Beispiele für den hierin verwendeten Begriff "Fettsäuren" sollen beispielweise folgenden Verbindungen aufgeführt werden: Hexansäure, Octansäure, Decansäure, Dodecansäure, Tetradecansäure, Hexadecansäure, Heptadecansäure, Octadecansäure, Eicosansäure, Docosansäure, Tetracosansäure, cis-9-Tetradecensäure, cis-9-Hexadecensäure, cis-6-Octadecensäure, cis-9-Octadecensäure, cis-11-Octadecensäure, cis-9-Eicosensäure, cis-11-Eicosensäure, cis-13-Docosensäure, cis-15-Tetracosensäure, t9-Octadecensäure, t11-Octadecensäure, t3-Hexadecensäure, 9,12-Octadecadiensäure, 6,9,12-Octadecatriensäure, 8,11,14-Eicosatriensäure, 5,8,11,14-Eicosatetraensäure, 7,10,13,16-Docosatetraensäure, 4,7,10,13,16-Docosapentaensäure, 9,12,15-Octadecatriensäure, 6,9,12,15-Octadecatetraensäure, 8,11,14,17-Eicosatetraensäure, 5,8,11,14,17-Eicosapentaensäure, 7,10,13,16,19-Docosapentaensäure, 4,7,10,13,16,19-Docosahexaensäure, 5,8,11-Eicosatriensäure, 9c11t13t-Eleostearinsäure, 8t10t12c-Calendulasäure, 9c11t13c-Catalpinsäure, 4,7,9,11,13,16,19-Docosaheptadecansäure, Taxoleinsäure, Pinolensäure, Sciadonsäure, 6-Octadecinsäure, t11-Octadecen-9-insäure, 9-Octadecinsäure, 6-Octadecen-9-insäure, t10-Heptadecen-8-insäure, 9-Octadecen-12-insäure, t7,t11-Octadecadien-9-insäure, t8,t10-Octadecadien-12-insäure, 5,8,11,14-Eicosatetrainsäure, Retinsäure, Isopalmitinsäure, Pristansäure, Phytansäure, 11,12-Methylen-Octadecansäure, 9,10-Methylen-Hexadecansäure, Coronarinsäure, (R,S)-Liponsäure, (S)-Liponsäure, (R)-Liponsäure, 6,8(methylsulfanyl)-Oktansäure, 4,6-bis(methylsulfanyl)-Hexansäure, 2,4-bis(methylsulfanyl)-Butansäure, 1,2-Dithiolan-Carboxylsäure, (R,S)-6,8-Dithian-Oktansäure, (S)-6,8-Dithian-Oktansäure, Taririnsäure, Santalbinsäure, Stearolsäure, 6,9-Octadeceninsäure, Pyrulinsäure, Crepeninsäure, Heisterinsäure, t8,t10-Octadecadien-12-insäure, ETYA, Cerebronsäure, Hydroxynervonsäure, Ricinoleinsäure, Lesquerolinsäure, Brassylinsäure, und Thapsinsäure, Phytinsäure, Sinapinsäure, Zimtsäure, und Trihydroxybenzoesäure.

Für die erfindungsgemäße Herstellung Nanoemulsionen und der erfindungsgemäßen nanoemulsiven Lipidphasenextraktion sind Carbonsäuren geeignet, die schlecht oder nicht löslich sind in Wasser, beschreibbar durch einen Octanol-Wasser-Verteilungsquotienten (Kow) von > 2,0, mehr bevorzugt von > 3,0 und am meisten bevorzugt von > 4,0.

### Guanidino- und Amidingruppentragende Verbindungen

Der Begriff Guanidino- und Amidingruppentragende Verbindungen und Guanidin- und/oder Amidinverbindungen werden hierin synonym verwandt.

Als Guanidinogruppe wird der chemische Rest H₂N-C(NH)-NH- sowie dessen cyclische Formen bezeichnet und als Amidinogruppe der chemische Rest H₂N-C(NH)- sowie dessen cyclische Formen (s. Beispiele unten). Bevorzugt sind Guanidinoverbindungen, welche zusätzlich zur Guanidinogruppe mindestens eine Carboxylatgruppe (-COOH) aufweisen. Ferner ist bevorzugt, wenn die Carboxylatgruppe(n) durch mindestens ein Kohlenstoffatom von der Guanidinogruppe im Molekül getrennt sind. Bevorzugt sind auch Amidinoverbindungen, welche zusätzlich zur Amidinogruppe mindestens eine Carboxylatgruppe (-COOH) aufweisen. Ferner ist bevorzugt, wenn die Carboxylatgruppe(n) durch mindestens ein Kohlenstoffatom von der Amidinogruppe im Molekül getrennt sind.

Diese Guanidinoverbindungen und Amidinoverbindungen haben einen Verteilungskoeffizienten K_{OW} zwischen n-Octanol und Wasser von kleiner 6,3 (K_{OW} < 6,3). Bevorzugt beträgt der K_{OW} < 1,8 (log K_{OW} < 0,26), mehr bevorzugt < 0,63 (log K_{OW} < -0,2), und am meisten bevorzugt < 0,4 (log K_{OW} < -0,4).

Insbesondere bevorzugt sind Arginin und Argininderivate. Argininderivate sind definiert als Verbindungen, welche eine Guanidinogruppe und eine Carboxylatgruppe oder eine Amidinogruppe und eine Carboxylatgruppe aufweisen, wobei Guanidinogruppe und Carboxylatgruppe oder Amidinogruppe und Carboxylatgruppe durch mindestens ein Kohlenstoffatom voneinander entfernt sind, d.h. sich zumindest eine der folgenden Gruppen zwischen der Guanidinogruppe oder der Amidinogruppe und der Carboxylatgruppe befindet: -CH₂-, -CHR-, -CRR'-, worin R und R' unabhängig voneinander beliebige chemische Reste darstellen. Natürlich kann der Abstand zwischen der Guanidinogruppe und der Carboxylatgruppe oder der Amidinogruppe und der Carboxylatgruppe auch mehr als ein Kohlenstoffatom betragen, beispielweise bei folgenden Gruppen -(CH₂)ₙ-, -(CHR)ₙ-, -(CRR')ₙ-, mit n = 2, 3, 4, 5, 6, 7, 8 oder 9 wie es z.B. bei Amidinopropionsäure, Amidinobuttersäure, Guanidinopropionsäure oder Guanidinobuttersäure der Fall ist. Verbindungen mit mehr als einer Guanidinogruppe und mehr als einer Carboxylatgruppe sind beispielsweise Oligoarginin und Polyarginin.

Im Folgenden werden Beispiele für bevorzugte Verbindungen mit einer Guanidinogruppe oder einer Amidinogruppe und einer Carboxylatgruppe gezeigt.

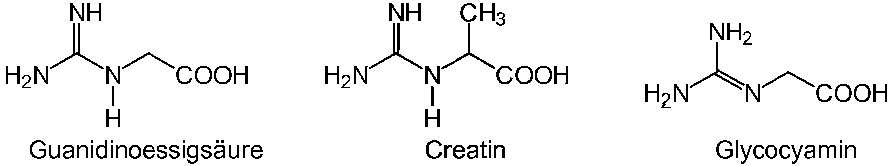

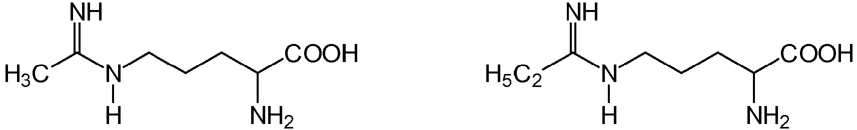

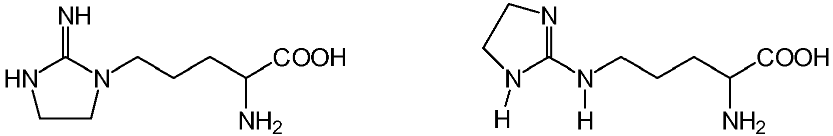

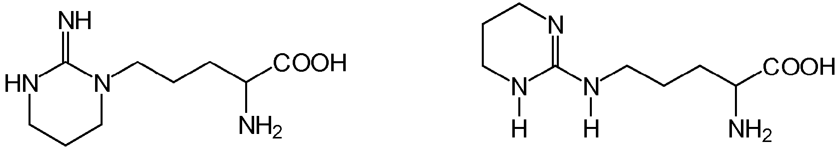

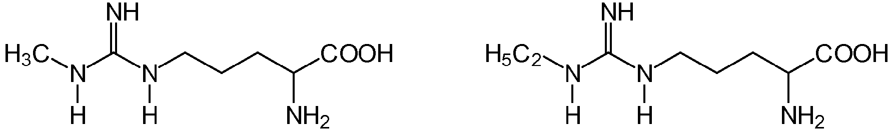

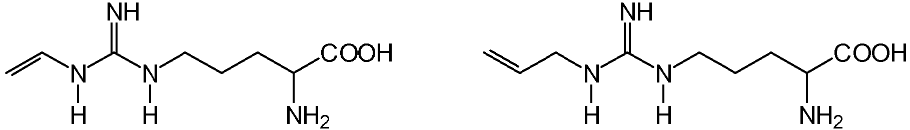

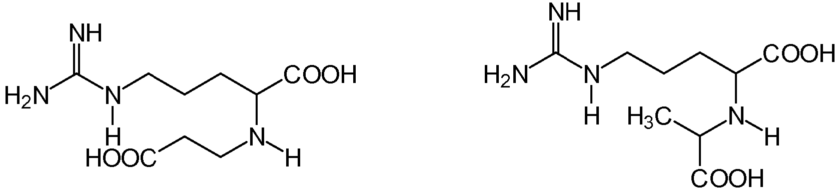

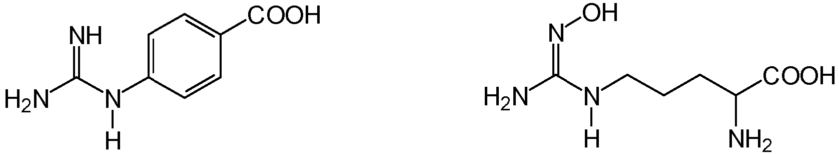

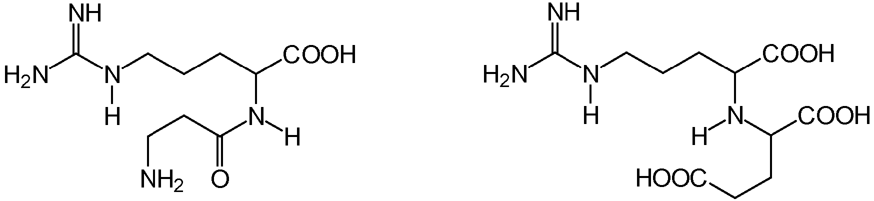

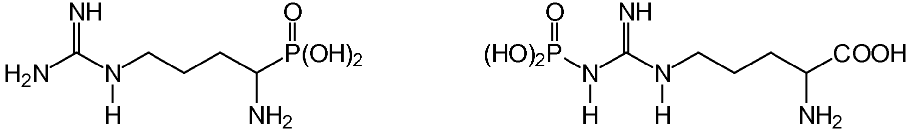

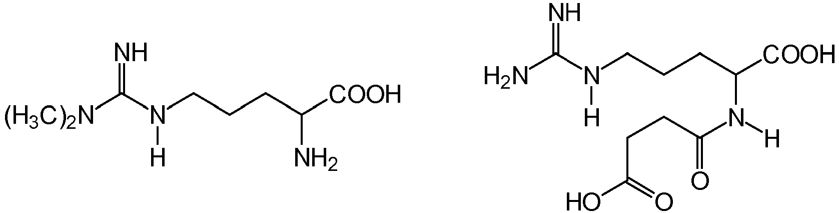

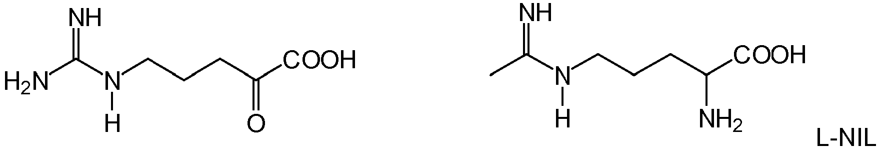

Bevorzugte Argininderivate sind Verbindungen der folgenden allgemeinen Formel (I) oder (II) 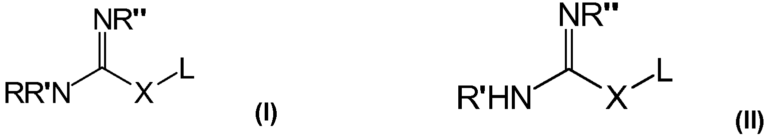 worin
R', R", R‴ und Rʺʺ unabhängig voneinander bedeuten: -H, -OH, -CH=CH₂, -CH₂-CH=CH₂, -C(CH₃)=CH₂, -CH=CH-CH₃, -C₂H₄-CH=CH₂, -CH₃, -C₂H₅, -C₃H₇, -CH(CH₃)₂, -C₄H₉, -CH₂-CH(CH₃)₂, -CH(CH₃)-C₂H₅, -C(CH₃)₃, -C₅H₁₁, -CH(CH₃)-C₃H₇, -CH₂-CH(CH₃)-C₂H₅, -CH(CH₃)-CH(CH₃)₂, -C(CH₃)₂-C₂H₅, -CH₂-C(CH₃)₃, -CH(C₂H₅)₂, -C₂H₄-CH(CH₃)₂, -C₆H₁₃, -C₇H₁₅, cyclo-C₃H₅, cyclo-C₄H₇, cyclo-C₅H₉, cyclo-C₆H₁₁, -PO₃H₂, -PO₃H⁻, -PO₃²⁻, -NO₂, -C=CH, -C≡C-CH₃, -CH₂-C≡CH, -C₂H₄-C≡CH, -CH₂-C≡C-CH₃,
oder R' und R" zusammen eine der folgenden Gruppen bilden: -CH₂-CH₂-, -CO-CH₂-, -CH₂-CO-, -CH=CH-, -CO-CH=CH-, -CH=CH-CO-, -CO-CH₂-CH₂-, -CH₂-CH₂-CO-, -CH₂-CO-CH₂- or -CH₂-CH₂-CH₂-;
X für -NH-, -NRʺʺ-, -O-, -S-, -CH₂-, -C₂H₄-, -C₃H₆-, -C₄H₈- oder -C₅H₁₀- steht oder für eine C1 bis C5 Kohlenstoffkette, welche mit einem oder mehreren der folgenden Reste substituiert sein kann: -F, -Cl, -OH, -OCH₃, -OC₂H₅, -NH₂, -NHCH₃, -NH(C₂H₅), -N(CH₃)₂, -N(C₂H₅)₂, -SH, -NO₂, -PO₃H₂, -PO₃H⁻, -PO₃²⁻, -CH₃, -C₂H₅, -CH=CH₂, -C=CH, -COOH, -COOCH₃, -COOC₂H₅, -COCH₃, -COC₂H₅, -O-COCH₃, -O-COC₂H₅, -CN, -CF₃, -C₂F₅, -OCF₃, -OC₂F₅;
L einen hydrophilen Substituenten bedeutet ausgewählt aus der Gruppe bestehend aus:
   -NH₂, -OH, -PO₃H₂, -PO₃H⁻, -PO₃²⁻, -OPO₃H₂, -OPO₃H⁻, -OPO₃²⁻, -COOH,-COO⁻, -CO-NH₂, -NH₃⁺, -NH-CO-NH₂, -N(CH₃)₃⁺, -N(C₂H₅)₃⁺, -N(C₃H₇)₃⁺, -NH(CH₃)₂⁺, -NH(C₂H₅)₂⁺, -NH(C₃H₇)₂⁺, -NHCH₃, -NHC₂H₅, -NHC₃H₇, -NH₂CH₃⁺, -NH₂C₂H₅⁺, -NH₂C₃H₇⁺, -SO₃H, -SO₃⁻, -SO₂NH₂, -CO-COOH, -O-CO-NH₂, -C(NH)-NH₂, -NH-C(NH)-NH₂, -NH-CS-NH₂, -NH-COOH,

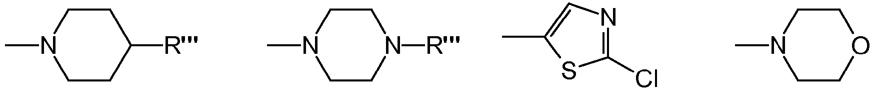

### Mischen und Homogenisieren

Die Begriffe homogenisieren, dispergieren, Intensiveintrag, intensiv eintragen, Intensivmischen und Intensivmischeintragung werden hier im Wesentlichen synonym verwendet und bezeichnen das Homogenisieren von Öl mit einer wässrigen Lösung. Es werden dafür dem Fachmann bekannte Verfahren eingesetzt. In der Wasserphase werden, dabei Carbonsäuren in Form einer Nanoemulsionen bestehend aus Guanidin- und Amidingruppentragenden Verbindungen und Carbonsäuren hergestellt, die miteinander Tröpfchen-, bzw. Aggregatgrößen von weniger als 100 nm, vorzugsweise weniger als 50 nm, besonders bevorzugt weniger als 10 nm ausbilden. Die Angaben beziehen sich dabei darauf, dass 90% der Partikel, eine Größe aufweisen, die weniger als der angegebene Wert beträgt. Die Größe bezeichnet den maximalen Durchmesser der Tröpfchen bzw. Aggregate inklusive der gebundenen Wasseratome, welche sich bestimmen lassen, z. B. mit einer Laserspektroskopischen Analyse (DLS), in einer wässrigen Phase, die diese Verbindungen enthält.

Durch das Verfahren der Homogenisierung bei Lipidphasen, die neben Carbonsäuren noch andere organische Verbindungen, die nicht einem Neutralfett oder einem apolaren Lösungsmittel entsprechen, kommt es zu einem Mitaustrag dieser Verbindungen in die Wasserphase in der Carbonsäuren nanoemulsiv gelöst vorliegen, wodurch die Wassertropfengröße zunimmt. Daher entstehen bei einer Homogenisierung von Lipidphasen, die noch kleinste Mengen an Begleitstoffen aufweisen, die nicht einem Triglycerid oder einem apolaren organischen Lösungsmittel entsprechen, Emulsionen, die zu einer leichten bis starken Trübung der Lipidphase führen. Eine Quantifizierung kann mit bekannten Verfahren wie einer Turbidimetrie und einer Laserlichtsteuungsanalyse (DLS) erfolgen. Der erfindungsgemäße Intensiveintrag einer wässrigen Phase in eine Lipidphase liegt vor, wenn eine homogene Verteilung von Wassertröpfchen in der Lipidphase vorliegt, mit einem mittleren Durchmesser der Tröpfchen von 0,01 bis 20µm, mehr bevorzugt von 0,05 bis 10µm und am meisten bevorzugt von 0,1 bis 2µm. Die Tröpfchengrößen lassen sich u. a. durch etablierte Verfahren, die auch für eine kontinuierliche Prozessüberwachung erhältlich sind, bestimmen.

Die vorliegende Erfindung betrifft ein Verfahren zur Reduktion von Geruchsstoffen und/oder Farbstoffen aus einer Lipidphase umfassend die folgenden Schritte:
a) Bestimmen des Phosphorgehalts der Lipidphase und Untersuchung auf die Präsenz von Schleimstoffen in der Lipidphase, und
b) Durchführen eines Vorreinigungsschrittes bis die Untersuchung auf die Präsenz von Schleimstoffen negativ ausfällt und ein Phosphorwert kleiner oder gleich 15 mg/kg, und
c) Versetzen der Lipidphase mit einer wässrigen Phase, die eine Substanz enthält, die mindestens eine Amidingruppe oder mindestens eine Guanidingruppe aufweist und die einen Verteilungskoeffizienten zwischen n-Octanol und Wasser von K_{OW} < 6,3 aufweist, und
d) Herstellung einer Intensivmischung aus der Lipidphase und der wässrigen Phase, wobei eine Intensivmischung vorliegt, wenn die Wassertröpfchen in der Lipidphase und einen mittleren Durchmesser von 0,01 bis 20µm haben, und
e) Durchführung einer zentrifugalen Phasentrennung und Abtrennung der wässrigen Phase, enthaltend die herausgelösten Geruchs- und/oder Farbstoffe, und wobei die Lipidphase Öle, Fette oder Biodiesel sind, wobei die eine Substanz, die mindestens eine Amidingruppe oder mindestens eine Guanidingruppe aufweist Arginin oder eine Verbindung wie unter S. 45 Z. 27 - S. 48 Z.12 definiert ist.

Vorzugsweise wird eine wäßrige Lösung von Natriumhydrogencarbonat als Lauge in Schritt a) eingesetzt.

Verfahren zur Homogenisierung sind dem Fachmann gut bekannt und im Folgenden beschrieben.

Zur Bereitstellung der erfindungsgemäßen nanoemulsiven Raffination ist es erforderlich durch einen sehr engen räumlichen Kontakt stark hydrophile Verbindungen in einer Wasserphase mit hydrophoben Verbindungen in einer Lipidphase in Verbindung zu bringen. Ferner muss, um den erfindungsgemäßen ressourcensparenden Effekt der nanoemulsiven Raffination realisieren zu können, ein im Verhältnis zur aufzureinigenden Lipidphase nur ein sehr geringes Volumen der Wasserphase eingesetzt werden. Bereits aus diesen Grundbedingungen erklärt sich der vorteilhafte Einsatz eines Intensiveintrages der wässrigen Lösungen von Guanidin- oder Amidingruppentragenden Verbindungen in die zu raffinierenden Lipidphasen. Nach dem Stand der Technik lässt sich ein solcher Intensiveintrag durch verschiedene Methoden bewerkstelligen. Die Methoden basieren auf der Erzeugung von Grenzflächen zwischen den zu mischenden Phasen.

Da die erfindungsgemäß zu mischenden Flüssigkeiten stark gegensätzliche Eigenschaften aufweisen (hydrophil - hydrophob) ist zur Herstellung möglichst großer Grenzflächen zwischen beiden Flüssigkeiten ein hoher lokaler Energieaufwand notwendig. Nach dem Stand der Technik stehen hierfür verschiedene Techniken zur Verfügung: dynamische Mischverfahren, die auf laminaren oder turbulenten Strömungen der Mischkomponenten basieren oder statische Verfahren, bei denen lokale Druck-/Spannungsgradienten erzeugt werden, die zu einer Grenzflächenausbildung führen. Aus der Literatur ist bekannt, dass die kritische Weber-Zahl in laminaren Dehn- und Scherströmungen und Mischströmungen vom Viskositätsverhältnis λ zwischen disperser und kontinuierlicher Phase für einzelne Tropfen abhängig ist. Hieraus folgt, dass bei den üblicherweise hochviskosen lipoiden Phasen eine auf einer laminaren Strömung basierende Mischung nicht geeignet ist. Bei turbulenten Strömungen erfolgt der Strömungsfortschritt unstetig, scheinbar regellos, zufällig und chaotisch, somit ist eine zeitliche und örtliche Auflösung nicht vorhersehbar. Aufbauend auf dem Modell von Kolmogorov wurden unterschiedliche Modelle entwickelt, um die Grenzflächeninterationen in turbulenten Strömungen am einzelnen Tropfen zu simulieren und im Kollektiv zu beschreiben [Vankova N, Tcholakova S, Denkov ND, Vulchev VD, Danner T. Emulsification in turbulent flow 2. Breakage rate constants. J Colloid Interface Sci. 2007 Sep 15;313(2):612-29]. Die Modelle unterscheiden sich hauptsächlich in den Geräten und Stoffsystemen, für die sie entworfen wurden, und damit verbunden in den Annahmen über die turbulente Strömung. Die Variation des Aufbruchmechanismus wurde erreicht durch das gezielte Einstellen von unterschiedlichen Reynolds-Zahlen, Viskositäten der Phasen, Dichten der Phasen, Grenzflächenspannungen und Dispersphasenanteilen. Da mit dem Kolmogorov-Modell aber nur vorhergesagt werden kann, welcher Tropfen nicht mehr aufgebrochen wird, nicht aber wie klein die Tropfen beim Aufbruch werden, kann mit diesem Modell nur eine obere Partikelgröße berechnet werden.

Kavitationen entstehen in Flüssigkeiten durch die Erzeugung von Blasen, die anschließend wieder kollabieren. Generell werden die drei Kavitationsarten Dampfkavitation (harte Kavitation), Gaskavitation (weiche Kavitation) und Pseudokavitation unterschieden. Bei der harten Kavitation entstehen die Blasen durch Absinken des statischen Drucks unter den Dampfdruck, wodurch das Fluid teilweise verdampft und sich Dampfblasen bilden. Bei der weichen Kavitation wird durch Absenken des statischen Drucks die Löslichkeit von Gasen gesenkt, so dass diese Blasen bilden. Wenn in einer Flüssigkeit bereits Blasen vorliegen, führt das Absinken des Drucks zum Wachstum dieser Blasen, was als Pseudokavitation bezeichnet wird. Sobald der Druck wieder über den Dampfdruck steigt, kommt es zu einem schlagartigen Kondensieren der Flüssigkeit und somit im Extremfall zum Kollabieren der Blasen, was zu hohen Druckschwankungen führt. Welche Spannungen aus der Kavitation resultieren und welcher Mechanismus somit zum Tropfenaufbruch führt, ist bis heute nicht endgültig geklärt.

Die Verfahren, die für Erzeugung von Grenzflächen zwischen zwei Fluiden geeignet sind können in die vier Obergruppen Rotor-Stator-, Hochdruck-, Ultraschall- und Membransysteme unterteilt werden. Die einfachste Variante eines Rotor-Stator-Systems ist der Rührer in einem Behälter. Weiterentwicklungen der Rotor-Stator-Systeme sind Zahnkranzdispergiermaschinen und Kolloidmühlen, die sich dadurch auszeichnen, dass sie deutlich definierte Beanspruchungen ermöglichen. Ein Nachteil von Rotor-Stator-Systemen besteht darin, dass die Energie häufig stark inhomogen eingetragen wird, was zu breiten Tropfengrößenverteilungen oder langen Prozesszeiten führt. Weiterhin sind häufig nur niedrige spezifische Energieeinträge realisierbar. Hochdruckhomogenisatoren werden insbesondere dann eingesetzt, wenn sehr hohe spezifische Energieeinträge benötigt werden. Hochdruckhomogenisatoren bestehen im Wesentlichen aus einer Hochdruckpumpe und einer Zerkleinerungseinheit. Als Hochdruckpumpen werden üblicherweise Kolbenpumpen eingesetzt, die einen Homogenisierdruck zwischen 50 und 10.000 bar erzeugen. Die Zerkleinerungseinheit kann aus Ventilen oder Blenden bestehen durch die die mit Druck beaufschlagten Fluide gepresst werden. Die hierdurch erzeugten Spannungen zwischen den Fluiden sind für eine Tropfenentstehung und Tropfendeformation sowie -zerkleinerung verantwortlich. Die resultierenden Effekte auf diese Eigenschaften wird von den Stoffeigenschaften der Fluide (wie Viskositäten der Phasen, Grenzflächenaufbau, Aktivität des grenzflächenaktiven Materials) sowie dem Druckgradienten und der Geometrie des Zerkleinerungsgeräts bestimmt. Deformation und Aufbruch werden maßgeblich vom Viskositätsverhältnis λ zwischen der dispersen und der kontinuierlichen Phase bestimmt. Insbesondere für höhere Viskositätsverhältnisse λ ist die Dehnströmung im Ventileinlauf vorteilhaft, da die aus der Turbulenz und der Kavitation resultierenden Spannungen an den Filamenten besser wirken und somit feine Tropfen bei möglichst geringem Energieeintrag hergestellt werden können.

Bei Membranen und mikrostrukturierte Systemen werden zumeist vorgemischte fluide Phasen verwendet bei denen durch den Porendurchtritt die Tropfen aufgebrochen werden, womit eine noch engere Tropfengrößenverteilungen herstellt werden kann als bei Hochdruckhomogenisierungsgeräten, jedoch sind bis heute keine hohen Volumenströme bei vertretbaren Kosten erreichbar.

Somit stehen grundsätzlich verschiedene Methoden und Verfahren für eine Intensivmischung zur Verfügung. Überraschenderweise konnte eine besonders gute nanoemulsive Reinigung für sehr einfache und robuste Zahnkranzdispersionsysteme gefunden werden. Diese waren in der Raffinationsleistung anderen Systemen überlegen. Daher ist ein besonders bevorzugtes Verfahren mit dem die erfinderische Raffination von Lipidphasen durchgeführt werden kann die Verwendung eines Rotor-Stator-Homogenisatorsystems.

### Methoden zur Prüfung einer Intensivmischung

Der Intensiveintrag einer wässrigen Phase in Lipidphasen zum Zwecke einer nanoemulsiven Raffination, wie hierin beschrieben, führt, sofern nicht eine vollständige Befreiung von Schleimstoffen erfolgt ist, zu einer Emulsionsbildung. Diese ist bei basischem pH-Wertebereich des wässrigen Mediums deutlich stärker ausgeprägt, als bei einem wässrigen Medium mit einem neutralen oder sauren pH-Bereich. Das optische Erscheinungsbild einer Trübung entsteht durch Grenzflächen der beiden Phasen oder durch korpuskulare Anteile. Die Grenzflächen werden durch eine Tröpfchenbildung der Wasserphase bei den verwandten Systemen bedingt. Somit kann theoretisch über die die Stärke der Trübung, die sich durch verschiedene optische Messsysteme quantifizieren lässt eine Aussage über die Anzahl von grenzflächenbildenden Strukturen machen und somit indirekt auf die Größe von Tröpfen pro Volumeneinheit geschlossen werden. Allerdings besteht die Möglichkeit, dass innerhalb der inneren aber auch der äußeren Phase sich zusätzlich Grenzflächen im Bereich von amphiphilen Molekülen ausbilden. Somit kann bei Bestimmung einer Lichtstrahlbeugung, bzw. Reflektion von einem Surrogat-Parameter für die Häufigkeit von Grenzflächen in einer Volumeneinheit ausgegangen werden. Vorteilhaft bei einer Bestimmung der Trübung des Reaktionsgemisches ist, dass die Messung kontinuierlich und unmittelbar im Anschluss an einen Mischeintrag der Wasserphase erfolgen kann. Eine Quantifizierung von Partikel- bzw. Tröpfchendimensionen, kann mit einer Analyse der Reflektion eines Laserstrahls vorgenommen werden (DLS). Hiermit lassen sich die absoluten Dimensionen der Hauptfraktionen von in einer Flüssigkeit vorhandenen Partikeln bzw. Tröpfchen bestimmen. Der erfindungsgemäße Intensiveitrag einer wässrigen Phase in eine Lipidphase liegt vor, wenn eine homogene Verteilung von Wassertröpfchen in der Lipidphase vorliegt, mit einem mittleren Durchmesser der Tröpfchen von 0,01 bis 20µm, mehr bevorzugt von 0,05 bis 10µm und am meisten bevorzugt von 0,1 bis 2µm.

### Herstellung von Nanoemulsionen und Dosierungen

Nanoemulsionen zur erfindungsgemäßen nanoemulsiven Raffination von Lipidphasen bestehen aus einer in einen ionenarmen oder ionenfreies Wasser vollständig gelösten Guanidin- oder Amidingruppentragenden Verbindung, wie hierin beschrieben. Eine Nanoemulgierung erfolgt mit einer flüssigen oder verflüssigten Form einer Carbonsäure, wie hierin offenbart. Dabei kann das molare Verhältnis zwischen der solubilisierenden Guanidin- oder Amidingruppentragenden Verbindung und einer oder der Gesamtheit an zu solubilisierenden Carbonsäuren zwischen 1:1 und 1:0,0001 betragen. Bevorzugt ist ein molares Verhältnis zwischen 1:0,9 und 1:0,001, mehr bevorzugt zwischen 1:0,85 und 1:0,01 und am meisten bevorzugt zwischen 1:0,7 und 1:0,1. Entscheidend ist dabei die Löslichkeit der beiden Verbindungen. Aufgrund der Vielzahl von möglichen Kombinationen kann es daher erforderlich sein, eine niedrigere Konzentration der Carbonsäure zu wählen, um den Erhalt einer Nanoemulsion im hierin definierten Sinne zu gewährleisten. Eine Nanoemulsion besteht dann, wenn eine klare Flüssigkeit erhalten wird, die thermodynamisch über Monate stabil bleibt. Physikalisch gesehen ist eine solche Nanoemulsion durch Tröpfchengrößen bzw. Teilchengrößen, die weniger als 100 nm, vorzugsweise weniger als 50 nm, besonders bevorzugt weniger als 10 nm und insbesondere weniger als 3 nm betragen charakterisiert. Dies kann mittels einer dynamischen Laserstahlspektroskopie (dynamische Lichtstreuung) dokumentiert werden. Dabei werden die hydrodynamischen Durchmesser der Teilchen gemessen. Auf diese beziehen sich auch die obigen Angaben zu den Größen.

Nanoemulsionen lassen sich mit Carbonsäuren dadurch herstellen, indem sie in eine wässrige Lösung mit darin bereits vollständig gelöst vorliegenden Guanidin- oder Amidingruppentragenden Verbindungen eigerührt werden. Der initial entstehende Viskositätsanstieg, sowie eine eventuell eintretende Feststoffbildung können durch Erwärmen der Lösung, unter Fortsetzen des Rühreintrages von bis zu 24 Stunden, vollständig rückgängig gemacht werden.

Die Konzentration der Guanidin- oder Amidingruppentragenden Verbindungen und der wässrigen Nanoemulsion kann je nach Anwendung frei gewählt werden, sofern das Löslichkeitsprodukt nicht überschritten wird. Für Arginin z. B. liegt dieses bei einer etwa 0,6 molaren Konzentration.

Die zu wählende Konzentration der zu lösenden Carbonsäure(n) oder eines Carbonsäuregemisches hängt dann von der Lösungsfähigkeit der zur Lösung eingesetzten Guanidin- oder Amidingruppentragenden Verbindungen ab. Auch wenn die Konzentration im Wesentlichen durch die Prozessbedingungen bestimmt wird, sowie durch die individuelle Löslichkeit der Guanidin- oder Amidingruppentragenden Verbindungen determiniert ist, wird bevorzugt ein Konzentrationsbereich zwischen 0,001 bis 0,8 molar, mehr bevorzugt zwischen 0,01 und 0,6 molar und am meisten bevorzugt zwischen 0,1 und 0,5 molar gewählt.

Die erfindungsgemäße Applikation der Nanoemulsionen kann manuell oder automatisiert erfolgen. Diese erfolgt in Form der beschriebenen wässrigen Form tropfen- oder strahlweise in Form eines Rühreintrages oder unmittelbar turbulent in Form eines Eintrages mit einem Homogenisator.

Die Nanoemulsionen können je nach Anwendung in einem beliebigen Mengenverhältnis zu der zu raffinierenden Lipidphase in Schritt b2) hinzugegeben werden. Somit kann ein Mengenverhältnis einer Nanoemulsion zur Lipidphase von 0,5:1 bis 100:1 prinzipiell benutzt werden. Mehr bevorzugt ist aber ein Mengenverhältnis zwischen 0,6:1 und 10:1 und weiter bevorzugt ein Verhältnis zwischen 0,8:1 und 5:1. Für einen ökonomischen Einsatz sind allerdings geringe Dosiermengen zu bevorzugen, die in einem Bereich zwischen 0,49:1 und 0,0001:1, mehr bevorzugt zwischen 0,2:1 und 0,001:1 und am meisten bevorzugt zwischen 0,1:1 und 0,01:1 liegen.

Zur Herstellung der erfindungsgemäßen Nanoemulsionen können aber genauso gut die in der Lipidphase vorliegenden Carbonsäuren verwandt werden. Die vollständige Nanoemulgierung aller in der Lipidphase in gelöster oder lösbarer Form vorliegenden Carbonsäuren ist eine besonders bevorzugte Ausführungsform für die Herstellung des erfindungsgemäßen nanoemulsiven Raffinationsverfahrens. Dabei sind die vorgenannten Konzentrationen, Mengen- und Volumenverhältnisse in identischer weise anwendbar. Dabei ist bevorzugt, die Konzentration der in der Lipidphase vorhandenen und quantifizierbaren Carbonsäuren zunächst zu bestimmen, um die Parameter für die gewünscht Nanoemulsion einstellen zu können. Eine solche Bestimmung kann mit etablierten Verfahren, wie der Bestimmung der Säurezahl oder durch eine Gaschromatographie, ermittelt werden. Ist die Konzentration nicht bekannt, kann die wässrige Lösung mit den hierin gelösten Guanidin- oder Amidingruppentragenden Verbindung solange der Lipidphase mit den zuvor benannten Techniken hinzudosiert werden, bis eine flüssige Lipidphase entstanden ist. Unter flüssiger Lipidphase hierin wird verstanden, wenn die Viskosität des erhaltenen Reaktionsgemisches vorzugsweise 1 bis 2x 10⁴ Pa·s, mehr bevorzugt zwischen 1,2 bis 1 x 10⁴ Pa·s und am meisten bevorzugt zwischen 1,3 bis 5 x 10³ Pa·s beträgt.

Eine weitere bevorzugte Ausführungsform der nanoemulsiven Raffination ist die Bereitstellung einer Nanoemulsion mit einer geeigneten Guanidin- oder Amidingruppentragenden Verbindung und Carbonsäure, bei der ein genügender Überschuss an gelösten Guanidin- oder Amidingruppentragenden Verbindungen bestehen bleibt, um die in der Lipidphase befindlichen gelösten oder lösbaren Carbonsäuren durch einen entsprechenden Mischeintrag ebenfalls vollständig zu nanoemulgieren.

Zur Herstellung kann es erforderlich sein, die Temperatur der Wasserphase mit den darin befindlichen Guanidin- oder Amidingruppentragenden Verbindung zu erhöhen und/oder die Temperatur der gelösten oder zu lösenden Carbonsäure. Hierdurch kann die Herstellung der erfindungsgemäßen Nanoemulsion erheblich beschleunigt werden, außerdem sinkt die Viskosität der resultierenden Nanoemulsion. Sofern die Nanoemulsion erst durch den Intensiveintrag in die Lipidphase hergestellt wird, kann es erforderlich sein, auch die Lipidphase zu erwärmen. Für die Herstellung der erfindungsgemäßen Nanoemulsionen wird ein Temperaturbereich von 15°C bis 60°C bevorzugt, mehr bevorzugt ist ein Bereich zwischen 20°C und 50°C und am meisten bevorzugt zwischen 25° und 40°C.

Ein weiter wichtiger Einstellparameter ist die Viskosität der separat hergestellten Nanoemulsion, d. h. in Form einer wässrigen Lösung, enthaltend Guanidin- oder Amidingruppentragenden Verbindungen, wie hierin offenbart, mit hierin nanoemulgierten Carbonsäuren, die dieser Lösung zur Nanoemulgierung hinzugegeben wurden, oder der Nanoemulsion, die durch den Intensiveintrag der wässrigen Lösung, enthaltend Guanidin- oder Amidingruppentragenden Verbindungen in eine Lipidphase, erzeugt wird. Prinzipiell kann gesagt werden, dass mit Erreichen eines äquimolaren Verhältnisses zwischen der Anzahl an Säuregruppen und Guanidin- und/oder Amidingruppen in Abhängigkeit von der absoluten Konzentration es zunehmend zu einem Viskositätsanstieg kommt. Die resultierende Viskosität ist für die jeweils verwendeten Komponenten spezifisch zu ermitteln. Für die erfindungsgemäße nanoemulsive Raffination ist es vorteilhaft, wenn die resultierende Nanoemulsion oder Emulsion flüssig, das heißt leicht fließend ist. Diese Eigenschaft lässt sich durch geeignete Verfahren, wie einem Kugelviskosimeter, bestimmen. Dabei liegen die bevorzugten Viskositätswerte zwischen 1 und 5 x 10³ Pa·s, mehr bevorzugt zwischen 1 und 1 x 10³ Pa·s und am meisten bevorzugt zwischen 1 und 1 x 10² Pa·s.

Sofern die Lipidphase bereits eine höhere Viskosität aufweist, kann die Viskosität des zu erzeugenden nanoemulsiven Reaktionsgemisches durch ein größeres Volumen der solubilisierenden Guanidin- oder Amidingruppentragenden Verbindungen enthaltenden wässrigen Lösung oder einer geringeren Konzentration der hierin enthaltenen Guanidin- oder Amidingruppentragenden Verbindungen eingestellt werden.

Bevorzugte Verbindungen zur Herstellung der erfindungsgemäßen Nanoemulsionen sind bei den Guanidin- oder Amidingruppentragenden Verbindungen Arginin und Argininderivate, wie hierin beschrieben. Bei den Carbonsäuren, sind die Ölsäure, und Stearinsäure die bevorzugten nanoemulgierbaren Carbonsäuren in der Lipidphase. Bei künstlich hergestellten Nanoemulsionen, sind bevorzugte Carbonsäuren, die für die erfindungsgemäße nanoemulsive Raffination eingesetzt werden, die Phytinsäure und die Sinapinsäure.

Der sich bei einer Nanoemulsionsbildung selbst einstellende pH-Wert der wässrigen Lösung hängt vom pKs-Wert der hierin gelösten Einzelverbindungen ab. Die Selbsteinstellung des pH-Wertes durch die nanoemulgierten Guanidin- bzw.

Amidingruppentragenden Verbindungen und die Carbonsäuren, ist eine besonders bevorzugte Ausführungsform. Es kann je nach Anwendung allerdings vorteilhaft sein, den pH-Wert auf einen bestimmten Wert einzustellen, z. B. um einen besonders vorteilhaften Effekt auf die zu raffinierenden Lipidphase zu erhalten. Zur pH-Werteinstellung können dem Fachmann bekannte Puffersysteme (z. B. Tris-Puffer, Citrat-Puffer) oder pH-aktive Einzelverbindungen (z. B. Ascorbinsäure oder NaOH) hinzugefügt werden. Der erhaltene pH-Wert lässt sich durch etablierte Verfahren wie der pH-Metrie genau bestimmen.

Unter dem Begriff "*Reaktionsgemisch*" hierin wird die eine Lipidphase verstanden, die mit einer erfindungsgemäßen wässrigen Lösung enthaltend eine Guanidin- oder Amidingruppentragenden Verbindung oder einer Nanoemulsion bestehen aus wässrigen Lösung enthaltend eine Guanidin- oder Amidinverbindung sowie einer oder mehrerer Carbonsäuren mittels eines Intensivmischeintrages hergestellte Phase.

### Nanoemulsive Raffination

Das nanoemulsive Raffinationsverfahren basiert auf der Bereitstellung einer Nanoemulsion und/oder der Herstellung einer Nanoemulsion in einer Lipidphase, indem die bereitgestellte Nanoemulsion der Lipidphase hinzugegeben wird und/oder eine Nanoemulsion in der Lipidphase hergestellt wird durch einen Intensivmischeintrag. Die hinzugegebene Nanoemulsion und/oder die in der Lipidphase hergestellte Nanoemulsion bewirkt bei einer Intensivmischung der Phasen die erfindungsgemäße nanoemulsive Raffination.

Eine nanoemulsive Raffination wird dadurch erreicht, indem die erfindungsgemäßen Guanidin- und/oder Amidingruppentragenden Verbindungen gelöst in einem wässrigen Medium vorliegen und mit Carbonsäuren in Kontakt gebracht werden, wodurch elektrostatische Bindungen zwischen den Guanidin- und/oder Amidingruppen mit den Carboxylsäuregruppen entstehen, die die Ausbildung von Nanopartikeln (< 2nm) ermöglicht. Dies kann dadurch bewerkstelligt werden, indem eine Nanoemulsion, wie zuvor beschrieben, hergestellt wird oder sich eine solche in einer Lipidphase ausbildet, durch einen Eintrag der wässrigen Lösung enthaltend Guanidin- und/oder Amidingruppentragende Verbindungen in eine Lipidphase, die freie Carbonsäuren enthält. Die nanoemulsive Raffination wird dann erreicht, indem eine Durchmischung der Nanoparikel, die eine Wasserhülle aufweisen, mit der Lipidphase erfolgt. Der nanoemulsive Effekt auf die Austragung von Ölbebleitstoffen wird daruch gesteigtert, indem der Mischeintrag durch einern Intensivmischer erfolgt.

### Trennverfahren

Der Begriff "zentrifugale Phasentrennung" wie er hier verwendet wird, bezeichnet eine Trennung von Phasen unter Ausnutzung einer Zentrifugalbeschleunigung. Er umfasst insbesondere dem Fachmann bekannte Verfahren mit Hilfe von Zentrifugen, Dekantern und vorzugsweise Separatoren.

Da es sich bei dem Reaktionsgemisch prinzipiell um zwei unterschiedlich dichte flüssige Phasen handelt ist prinzipiell eine Phasentrennung auch durch Sedimentation möglich. Die Praxis zeigt, dass die abzutrennenden organischen Verbindungen sich zum größten Teil nicht spontan herauslösen lassen, sodass mittels Zug- und Druckkräften, die Separationseffizienz und Geschwindigkeit gesteigert werden muss. Dies ist nach dem Stand der Technik mittels einer einfachen Zentrifuge oder eines hierfür geeigneten Separators leicht möglich. Auch eine Druck- oder Unterdruckbeaufschlagung ist möglich. Bei Separatoren handelt es sich um Systeme bei denen gleich- oder ungleichläufige Platten oder Teller entsprechende Zug- bzw. Zentrifugalkräfte neben einen gleichzeitig stattfindenden Druckaufbau eingerichtet werden. Der Vorteil bei der Verwendung von Separatoren ist, dass mit ihnen eine kontinuierliche Phasentrennung vollzogen werden kann. Daher ist eine besonders bevorzugte Ausführungsform zur Phasentrennung der nanoemulgierten Lipidphasen, die Phasentrennung mit einem Trennseparator durchzuführen.

Für die bevorzugte Phasentrennung durch einen Separator werden bevorzugt Systeme mit einem Durchsatzvolumen von mehr als 3m³/h, mehr bevorzugt > 100m³/h und am meisten bevorzugt > 400m³/h.

Die Trennung der erfindungsgemäßen nanoemulsiv raffinierten Lipidphasen kann prinzipiell unmittelbar nach Fertigstellung des nanoemulsiven Intensivmischeintrages erfolgen. Andererseits kann, wenn dies der Prozessablauf erfordert, das zu trennenden nanoemulgierte Reaktionsgemisch zunächst in einem Vorratstank gesammelt werden. Die Dauer der Bevorratung hangt einzig von der chemischen Stabilität der in der nanoemulsiven Reaktionslösung befindlichen Verbindungen sowie den Prozessbedingungen ab. Bevorzugt ist die Phasentrennung unmittelbar im Anschluss an den erfindungsgemäßen Intensiveintrag.

Die Temperatur des zu trennenden nanoemulgierten Reaktionsgemisches kann prinzipiell der entsprechen, die zur Herstellung derselben gewählt wurde. Es kann allerdings auch vorteilhaft sein, die Temperatur zu variieren und eine höhere Temperatur zu wählen, wenn z. B. hierdurch die Wirkung des Separationswerkzeuges erhöht wird, oder eine Niedrigere, z. B. wenn hierdurch die Extraktionseffizienz der Emulsionen erhöht wird. Im Allgemeinen ist ein Temperaturbereich zwischen 15 und 50°C bevorzugt, mehr bevorzugt von 18 bis 40°C und am meisten bevorzugt zwischen 25 und 35°C.

Die Verweilzeit in eine Trennseparator oder einer Zentrifuge richtet sich im Wesentlichen nach den apparatespezifischen Eigenschaften. Generell ist zur ökonomischen Ausführung eine möglichst geringe Verweilzeit in einer Trennvorrichtung bevorzugt, eine solch bevorzugten Verweilzeit beträgt für einen Trennseparator < 10 Minuten, mehr bevorzugt < 5 Minuten und am meisten bevorzugt < 2 Minuten. Bei Zentrifugen ist eine bevorzugte Verweilzeit < 15 Minuten, mehr bevorzugt < 10 Minuten und am meisten bevorzugt < 8 Minuten.

Die Auswahl der Zentrifugalbeschleunigung hängt von dem Dichteunterschied der beiden zu trennenden Phasen ab und ist individuell zu ermitteln. Bevorzugt sind Beschleunigungskräfte zwischen 1.000 und 15.000 g, mehr bevorzugt zwischen 2.000 und 12.000 g und am meisten bevorzugt zwischen 3.000 und 10.000 g. Bevorzugt ist eine Separation in eine Öl- und eine Wasserphase bei der eine Öl und eine Wasserphase erhalten wird, die zu > 90 Vol-% mehr bevorzugt zu > 97 Vol-% und am meisten bevorzugt zu > 99 Vol-% als reine Öl- oder Wasserphase vorliegt.

### Untersuchungsverfahren zur Prüfung der Produktqualität

Durch die nanoemulsive Raffination werden Lipidphasen erhalten, bei denen nur noch minimale Mengen an phosphorhaltigen Verbindungen, anorganischen Stoffen wie Calzium, Magnesium, Kalium, Natrium, Eisen, Nickel, Schwefel vorligen. Die Konzentrationen lassen sich durch etablierte Verfahren, wie einer Massensprktroskopie (z.B. mittels ICP-OES), bestimmen. Der Gehalt an freien Säuregruppen wir d erheblich reduziert, dies kann mit einer Titration einer methanolischen KOH-Lösung potentiometrisch bestimmt werden. Ferner wird der Gehalt an Farbstoffen wie Chloropyllen, Pheophorbiden, Pyropheophytinen, Chlorinen, Rhodinen, Purpurinen, Carotinen, Luteinen gemindert. Die Konzentrationen können spektroskopisch quantifiziert oder praktikabler Weise durch eine Besimmung der Farbzusammenstzung und Farbintensität nach dem AOCS-Verfahren Lovibond ermittelt werden. Vorteil dieser Methodeist, dass alle zur Farbgebung beitragenden Verbindungen sowie deren Interferrenz, die dann zu einer Fehlfarbe führen kann, unmittelbar erfasst werden kann. Ferner ist das Verfahren sehr geeignet eine Farbänderung im Verlauf zu detektieren. Der Gehalt an Geruchs- bzw. Geschmacksstoffen kann durch extraktive Verfahren mit anschließenden gaschromatischen Analysevervahren quantifiziert werden, wie z. B. bei Benzo-α-pyren, Octan, Hexansäureethylester, Octansäureethylester, Ethansäure-3-methyl-1-butylester, Palmitinsäureethylester, Diensäureethylester, oder 2,4-Dodecadienal. Der präparative Aufwand hierfür ist sehr hoch und die Bedeutung für das sensorische Wirkung in der Regel unklar, da die Wahrnehmungsschwellen sehr unterschiedlich sind und es erst durch eine Kombination von Verbindungen, die eine sensorische Wahrnehmung bedingen, zu dem empfundenen Sinneseindruck kommt. Daher ist eine Prüfung auf das Vorliegen von charakteristischen oder unerwünschten Aromen durch eine Verkostung von Experten das Standartverfahren für eine Bewertung von Speiseölen und Speisefetten. Der Gehalt an Antioxidantien kann eine große Bedeutung für die Farbe und die Geruchs- bzw. Geschmacksqualität einer Lipidphase haben. Dies triftt insbesondere für Veränderungen im Verlauf einer Lagerung zu. Daher ist die Besimmung von u.a. dem Gehalt an Polyphenolen, Squalenen, Tocopherolen, sowie Farbstoffen und deren Degradationsprodukte ein wichtiges Beurteilungkriterium der Produktqualität. Die hierfür geeigneten Messmethoden sind praktikablerweise eine Dünnschichtchromatographie, aber auch quantitative Bestimmungen mit HPLC-Techniken. Weitere Qualitäsmerkmale einer produktschonenden Raffination sind ein niedriger Gehalt an Carbonsäureresten von Triglyceriden, die eine Transstellung an einer Doppelbindung aufweisen, dies läßt sich gaschromatographisch nachweisen. Ferner ist eine Abwesenheit von thermischen Reaktions- oder Zersetzungsprodukten z. B. 3-MCDP-Esther dokumentierbar, diese lassen sich u. a. durch HPLC-MS-Verfahren detektieren. Weiterhin ist die durch eine effektivere Abreicherung von Schleimstoffen erzielbare Reduktion der Viskosität einer Lipidphase ein Qualitätsmerkmal. Dies lässt sich durch viskosimetrische Messverfahren quantifizieren. Die Verbesserung der Produktqualität kann sich aber auch in Form einer verbesserten Langzeitstabilität ausdrücken. Dies lässt sich durch verschiedene Messparamter feststellen. So kann es zu einer Änderung der Farbe und/oder der Geruchs- bzw. Geschmackscharakteristika, bzw. der Entstehung von Fehlaromen kommen. Dies lässt sich mit den vorgenannten Verfahren erfassen.

Ferner ist eine Reduktion von antioxidativ wirksamer organischer Verbindungen produktqualitätsmindernd, die vorgenannten Verfahren können zur Erfassung der antioxidativ wirksamen Verbindungen angewendet werden. Durch oxidative Prozesse können Restgehalte an hierin aufgeführten Farb- und Schleimstoffen aber auch die Carbonsärereste der Triglyceride verändert werden. Die primären Oxidationsprodukte, wie z.B. Epoxyverbindungen, zerfallen allerdings rasch zu sogenannten sekundären Oxidationsprodukten. Diese führen oft zu einer sensorischen Wahrnehmung als Fehlaromen, daher ist die Erfassung derartiger Oxidationsprodukte für die Dokumentation einer Lagerstabilität besonders geeignet. Para (p)-Anisidin reagiert mit sekundären Oxidationsprodukten, wie Aldehyden und Ketonen, die in einer Lipidphase vorliegen. Das Reaktionsprodukt kann spektrometrisch (Adsorption bei 350nm) detektiert und quantifiziert werden. Insbesondere ungesättigte Aldehyde, die häufig für Fehlgerüche in Ölen verantwortlich sind, werden mit der p-Anisidin-Reaktion erfasst. Der p-Anisidin-Wert ist eng mit dem in einer Lipidphase gemessenen Peroxid-Wert korreliert, insofern kann das Vorliegen von Peroxiden mit dem p-Anisidin-Testverfahren abgeschätzt werden. Der Peroxid-Wert gibt dabei die Anzahl an primären Oxidationsprodukten einer Lipidphase an und gibt die Menge an Miliäquivalenten von Sauerstoff pro Kilogramm Öl an.

### Pflanzenfarbpigmente und Farbstoffe

Unter dem Begriff Farbstoffe sind zusammengefasst organische Verbindungen, die in Ölen und Fetten biogener Herkunft typischerweise in unterschiedlichen Quantitäten und Zusammensetzungen nebeneinander vorkommen.

Unter dem Begriff "Pflanzenfarbstoffe" hierin werden alle farbgebenden Verbindungen, die in Lipidphasen vorkommen zusammengefasst. Der dominanteste und mit Abstand in der größten Quantität in Pflanzenölen vorkommende Farbstoff bildet die Gruppe der Chlorophylle sowie ihrer Degradierungsprodukte, wie Pheophyline, Pheophytine, Chlorophyllide, Pheophorbide, Phyropheophytine, Chlorine, Rhodine und Purpurine. Daneben kommen aber auch Verbindungen vor, die unter der Gruppe der Carotine oder Carotinoide zusammengefasst werden. Daneben werden aber auch andere Verbindungsklassen, wie die der Flavonoide, Curcumine, Anthrocyane, Betaine, Lignine, Xanthophylle, zu denen auch Carotine und Lutein zählen, Lignine, Indigo, Kaempferol und Xantophylliene, wie Neoxanthin oder Zeaxanthin, Reaktionsprodukte wie Melanoidinen vor. Diese Farbstoffe können in unterschiedlichen Mengenverhältnissen in den Lipidphasen vorliegen. Diese Farbstoffe weisen eine unterschiedliche Löslichkeit in Wasser oder einem organischen Lösungsmittel auf. Mit der erfindungsgemäßen nanoemulsiven Raffination wird die Abtrennung lipophiler Verbindungen in eine wässrige Nanoemulsion ermöglicht, wodurch ansonsten nicht in Wasser lösliche Verbindungen in eine wässrige Phase überführt und mit dieser abgetrennt werden können. Daher ist es die Aufgabe des erfindungsgemäßen Raffinationsverfahrens Farbverbindungen, die in Wasser praktisch nicht löslich sind, in eine Wasserphase zu überführen und sie in unveränderter Form hiermit abzutrennen.

Die häufigsten Vertreter von Pflanzenfarbstoffen sind Chlorophylle. In Pflanzenölen werden Chlorophylle typischerweise in Quantitäten angetroffen, die zwischen 10 und 100 ppm (oder 10,0 mg/kg) betragen. Lipidphasen mit einem hohen Gehalt an Chlorophyllen sind insbesondere Canola und Raps Öle.

### Chlorophylle

Unter dem Begriff "Chlorophylle" hierin werden Verbindungen zusammengefasst, die aus einem derivatisierten Porphyrinring bestehen und nach der organischen Resten in die Subgruppen a, b, c1, c2 und d unterteilt werden. Ferner unterscheiden sie sich in der Anzahl der Doppelbindungen zwischen den C-Atom 17 und 18.

Chlorophylle sind die in Pflanzenölen am häufigsten vorkommenden Farbstoffe. Aufgrund ihrer Hydrophobizität bzw. der Lipophilie verteilen sie sich sehr gut in Lipidphasen, insbesondere Triglyceridgemischen. Sie bedingen eine grüne Farbe der Lipidphase, ferner bedingen sie durch die Verbindung/Eintrag von Magnesium oder Kupferionen eine geringere Oxidationsstabilität der Lipidphase. Daher ist ihre Entfernung aus einer solchen Lipidphase gewünscht, insbesondere, wenn es sich hierbei um ein Speiseöl handelt. Die Variation der Absolutmengen, die in Lipidphasen und insbesondere in Pflanzenölen gefunden werden ist sehr groß und reicht von 0,001 bis 1000 ppm (oder 0,001 bis 1000 mg/kg).

Nicht degradierte Chlorophylle sind in Wasser praktisch unlöslich. Daher sind wässrige Raffinationsverfahren auch nicht geeignet, diese Farbstoffe aus einer Lipidphase zu extrahieren. Mit dem erfindungsgemäßen nanoemulsiven wässrigen Raffinationsverfahren kann eine Abreicherung der in einer Lipidphase befindlichen nicht degradierten Chlorophyllverbindungen vorzugswiese zwischen 50 und 100 Gew-% bezogen auf die ursprünglich vorhandene Masse reduzieren, mehr bevorzugt erfolgt eine Reduktion um zwischen 60 und 90 Gew% und am meisten bevorzugt um zwischen 75 und 85 Gew%. Da die Bestimmung der absoluten Konzentrationen nur durch einen hohen analytischen Aufwand erhalten werden kann, ist es praktikabler den Gehalt an Farbstoffen durch eine spektrometrische Bestimmung der Farbinhalte einer Lipidphase zu ermitteln. Etabliert ist hierfür die Bestimmung verschiedener Farbspektren in einem Öl das Lovibond-Verfahren bei dem Intensitätsgrade gelber und roter Farbtöne bestimmt und mit einem Referenzwert verglichen werden. Die Intensität eines blauen Farbtons, der zur Erzeugung einer Grünfärbung erforderlich ist, ist nur sehr gering. Für die Bestimmung des Gehaltes an Chlorophyllen wird daher das erheblich intensivere gelbe Farbspektrum verwandt. Es kann hiermit eine Beurteilung der Ölfarbe im Allgemeinen bzw. ein Vergleich zu Referenzprodukten erfolgen, sowie eine Veränderung des Farbspektrums im Verlauf, beurteilt werden. Mit der erfindungsgemäßen nanoemulsiven Raffination kann eine Reduktion der Lovibond-Intensität für den Gelbbereich von mindestens 50% gegenüber dem Ausgangswert, mehr bevorzugt von mindestens 70% und am meisten bevorzugt von mindestens 90% erreicht werden.

Ferner kann auch eine eine Reduktion der Lovibond-Intensität für den Rotbereich von mindestens 50% gegenüber dem Ausgangswert, mehr bevorzugt von mindestens 70% und am meisten bevorzugt von mindestens 90% erreicht werden.

Mit der erfindungsgemäßen nanoemulsiven Raffination werden andererseits wässrigen Emulsionen erhalten, in denen ein hoher Gehalt an chemisch nicht veränderten Chlorophyllmolekülen vorliegt. Daher ist die erfinderische nanoemulsive wässrige Raffination auch auf die Abtrennung einer chorophyllreichen wässrigen Lösung/Emulsion gerichtet.

Chlorophylle bewerkstelligen eine Lichtadsorption in spezifischen Wellenlängenbereichen durch die Anwesenheit einer Magnesium oder Kupferions. Die Bindung dieses Zentralions ist aber nur elektrostatisch und kann in einem wässrigen Medium durch eine schwache Säure herausgelöst werden, wodurch sich die Fähigkeit zur Lichtadsorption stark reduziert. Daher werden bei der Behandlung von Lipidphasen, die durch Chlorophylle verunreinigt sind, mit einer Säurebehandlung geblich. Die nun nicht mehr farbgebenden Verbindungen verbleiben allerdings zum großen Teil im Öl und können weiterhin oxidative Reaktionen begünstigen sowie zu einer Komplexierung anderer Erdalkalimetallionen und Metallionen beitragen. Bereits daher ist eine möglichst vollständige Abtrennung dieser Verbindungen wünschenswert.

Mit der erfindungsgemäßen nanoemulsiven Raffination kann eine Reduktion des Chlorophyllgehaltes um mindestens 50% gegenüber dem Ausgangswert, mehr bevorzugt von mindestens 70% und am meisten bevorzugt von mindestens 90% gegenüber dem Ausgangswert (im Rohöl) erreicht werden. Dabei können vorzugsweise absolute Chlorophyll-Gesamtkonzentrationen (a + b) von < 0,1 mg/kg, mehr bevorzugt von < 0,01mg/kg und am meisten bevorzugt von < 0,001mg/kg erreicht werden.

Andererseits stellen die grünen bis blaugrünen Pflanzenfarbstoffe begehrten Verbindungen dar, die selber als Wertstoff verwendet werden können. Das Verfahren bietet durch die Abtrennung dieser Verbindungen deren weitere Verwendbarkeit.

### Pflanzliche Geruchsstoffe und Aromastoffe

In praktisch allen organischen Gemischen biogener Herkunft sind organische Verbindungen vorhanden, die zu einer sensorischen Wahrnehmung im Sinne eines Geschmacks oder eines Geruchs führen. Es besteht eine extrem große Heterogenität der hierfür möglichen organischen Verbindungen. Alleine bei den stark hydrophoben Verbindungen, die in den verschiedenen Lipidphasen gefunden werden, ist die strukturelle Zusammensetzung dieser Kohlenstoff-basierten Verbindungen uneinheitlich. Einige typische Verbindungsklassen sind Alkaloide, Alkohole, Aldehyde, Aminosäuren, aromatische Kohlenwasserstoffe, Ester, Lactone, cyclische Ether, Furane, Furanoide, Freie Fettsäuren, Flavonole, Glycoside, Ketone, gesättigte und ungesättigte Kohlenwasserstoffe, Enamin-Ketone, Ketopiperazine, Isoprenoide, Mono-Terpene, Terpene, cyclische Terpene, Triterpene, Triterpenoide, Tetraterpene, Sesquiterpene, Sequiterpenoide, Sterole, Phytosterole, Steradiene, Purinderivate, Phenylpropanoide, Phenole, Nitrile, Alkenylisothiocyanate, Glucosinolate und/oder Hydroxyzimtsäurederivate. Diese Verbindungsklassen können sowohl einzeln als auch in einer beliebigen Zusammensetzung in einer rohen Lipidphase, die aus einem biogenen Rohstoff stammt, auftreten. Dabei handelt es sich insbesondere um 1,5-octadien-3-ol, Butanal, Hexanal, Octanal, Nonenal, Nonadineal, Decanal, Dodecanal, Piperonal, Cystein, Cystin, Methionin, Phenantren, Anthracen, Pyren, Benzpyren, 4-hydroxybutansäure, Hexansäureethylester, Cumarin, Maltol, Diacetylfuran, Pentylfuran, Perillen, Rosenfuran, Caprylsäure, Caprinsäure, Hydroxyfettsäuren, Amygdalin, Progoitrin, 2-Heptanon, 2-Nonanon, Decatrienal, 1-Octen-3-on, Vinylamylketon, 4-(4-Hydroxyphenyl)-butan-2-on), Mycosporin, Diketopiperazin, Humulone und Lupulone (Bittersäuren), Mono-Terpene: Myrcen, Ocimen und Cosmen, Linalool, Myrcenol, Ipsdienol, Neral; Citronellol und Geranial, Citronellal, Mycren, Limonen, Linalool, Nerol, Geraniol, Terpinolen, Terpinen und p-Cymol, Carvon und Carvenon, Thymol, Dihydroxycarveol, 2-Pinen, α- und β-Pinen, Limonen, Phellandren, Menthan, Campher; Fenchon, Xanthophylline, Bisabolane, Germacrane, Elemane und Humulane, Farnesene, Rotundon, Sterole, Phytosterole, p-Cresol, Guajacol, Ferulasäure, Lignin, Sinapin, Catechine, Eugenol, Vanillin, 3-Butenylisothiocyanat, 4-Petenylisothocyanat, 4-Pentennitril, 5-Hexenitril, Camphen, Dodecan, Cinnamylalkohol, Fenchylalkohol, 1R,2S,5R-Isopulegol, 2-Ethylfenchol, Menthol, 4-Hydroxy-3,5-dimethoxybenzylalkohol, (R)-(-)-Lavandulol, Piperonylalkohol,Thujylalkohol, 1,8-Cineol, 4-Ethylguajacol, N-[[(1R,2S,5R)-5-methyl-2-(1-methylethyl)cyclohexyl]carbonyl]-glycinethylester, (1R,2S,5R)-N-cyclopropyl-5-methyl-2-isopropylcyclohexancarboxamid, L-Alanin, Aspartsäure, 2,4-Dimethylthiazol, Lenthionin, (+)-Cedrol, 3-Methylphenol, Anisol, 1-Methoxy-4-propylbenzol, 4-Allyl-2,6-dimethoxyphenol, 2,6-Dimethoxy-4-vinylphenol, Ethyl-4-hydroxy-3-methoxybenzylether, Vetiverol, 2-Butylethylether, Ethylgeranylether, Carvacrol, 2-Methylpropanal, Zimtaldehyd, p-Toluolaldehyd, 2-Methylbutyraldehyd, Salicylaldehyd, Essigsäure, Milchsäure, 3-Methylbuttersäure, Hexansäure, I-Apfelsäure, Benzo-a-pyren und/oder Anethol. Diese Verbindungen können sowohl einzeln als auch in einer beliebigen Zusammensetzung in einer rohen Lipidphase, die aus einem biogenen Rohstoff stammt, auftreten.

Die Identifizierung der Einzelverbindungen, die oft nur in minimalsten Mengen, die < 0,001ppm betragen können, ist mit großem analytischen Aufwand verbunden. Obgleich sie nur in geringer Konzentration vorliegen, können sie zu einer erheblichen Beeinträchtigung der Produktqualität führen und bedürfen daher einer extraktiven Abreicherung. Für eine kommerzielle Verwendung von Ölen und Fetten im Lebensmittelbereich, wird zur Prüfung der sensorischen Qualität eines Rohöls oder eines raffinierten Öls eine Verkostung durch ein Komitee Fachkundiger nach den Bestimmungen der Deutschen Lebensmittelgesellschaft vorgenommen. Da chemisch analytische Verfahren bei der Qualitätseinstufung nicht verwandt werden, erfolgten die hierin beschriebenen Bewertungen einer Reduktion oder Entfernung von Geruchs- bzw. Geschmacksstoffen durch eine sensorische Bewertung entsprechend der gebräuchlichen Bewertungskriterien. Eine Identifizierung einzelner organischer Verbindungen lässt sich mit den o. g. extraktiven Verfahren auch mittels gaschromatographischer Analyse darstellen, sodass eine Veränderung des Gehaltes bestimmter und bekannter Geruchs- und Geschmacksstoffanteils mit einem solchen Verfahren quantifizierbar sind.

### Sensorische Bewertung von Lipidphasen:

Die sensorische Bewertung der Lipidphasen erfolgte nach den Richtlinien der Deutschen Lebensmittel Gesellschaft zur Verkostung oder Lebensmittelgebrauch gemäß den Prüfbestimmungen "DLG, 6. Auflagen 2012". Die DLG-Methode der sensorischen Analyse ist eine "Beschreibende sensorische Prüfung mit integrierter Bewertung" und bezieht sich methodisch u.a. auf die DIN 10964, "Einfach beschreibende Prüfung", die DIN 10975 "Expertengutachten" und die DIN 10969 "Beschreibende Prüfung mit anschließender Qualitätsbewertung". Die Verkostung der Lipidphasen erfolgte durch mindestens 4 geschulte und fachkundige Personen. Dabei wurden die Öle und Fette unter gleichen Bedingungen (Temperatur 25°C, in einem undurchsichtigen abgedeckten Glas nach gleicher Standzeit) durch jeden Prüfer 3-mal paarweise (Rohöl und raffiniertes Öl) nach einen festen Bewertungsschema beurteilt.

Die folgenden Parameter mussten bei allen Verkostungen bewertet und nach der vorliegenden Intensität auf einer Skala von 0 - 10 (0=nicht vorhanden, 10= sehr intensiv) eingestuft werden. Sofern nicht anders angegeben wurde der Median aller Bewertungen als Ergebnis wiedergegeben.

Folgende Geschmacksattribute wurden als charakteristisch für die untersuchten Pflanzenöle festgelegt: Nussig, saatig, fruchtig.

Folgende Geschmacksattribute wurden als Fehlgeschmack bewertet: ranzig, würzig, muffig, seifig, bohnig, fischig, modrig, stechend, adstringierend, bitter, süßlich, sauer, ferner fischig und chemisch, bei besonderen Lipidphasen (z. B. Tierfette).

Folgende Geruchsattribute wurden als charakteristisch für die untersuchten Pflanzenöle festgelegt: Nussig, saatig, fruchtig.

Folgende Geruchsattribute wurden als Fehlgeruch bewertet: ranzig, würzig, muffig, fischig, modrig, stechend, chemisch, pflanzlich, blumig, ferner fischig und chemisch, bei besonderen Lipidphasen (z. B. Tierfette).

### Schleimstoffe

Unter dem Begriff "Schleimstoffe" werden alle pflanzlichen organischen Verbindungen zusammengefasst, die wasserbindende Eigenschaften aufweisen und daher durch einen Wassereintrag Wassermoleküle binden oder binden können, wodurch eine Emulsion entsteht. Dabei ist nicht gemeint, dass die Schleimstoffe durch einen Wassereintrag in die Lipidphase, in der sie sich befinden, herausgelöst und abtrennbar gemacht werden können. Vielmehr binden sie Wasser unter Ausbildung eine Emulsion. Unter geeigneten Umständen, wie hierin beschrieben (z. B. durch eine Behandlung mit einer Säure oder eine Lauge) lassen sich diese Schleimstoffe allerdings auch in eine Wasserphase überführen. Beispiele für die hierin verstandenen Schleimstoffe sind:
"Phospholipide", wie hierin verwendet, sind amphiphile Lipide, die eine Phosphatgruppe enthalten und entweder zu den Phosphoglyceriden oder zu den Phosphosphingolipiden gehören. Ferner saure Glycoglycerolipide wie z. B. Sulfoquinovosyldiacylglycerin oder Sulfoquinovosyldiacylglycerin. "Phosphoglyceride" (auch als Glycerophospholipide oder Phosphoglycerolipide bezeichnet) bestehen aus einem Diacylglycerid, dessen verbleibende endständige Hydroxy-Gruppe an einen Phosphatrest gebunden ist, welcher entweder nicht weiter modifiziert ist (Phosphatidsäure) oder mit einem Alkohol verestert ist. Die häufigsten Vertreter der letzteren Gruppe sind Phosphatidylcholine (auch als Lecithine als bezeichnet), Phosphatidylethanolamine und Phosphatidylserine.

Unter dem Begriff "Glycolipid", wie hierin verwendet, sind Verbindungen zusammengefasst, in denen ein oder mehrere Monosaccharid-Rest(e) über eine glycosidische Bindung mit einem hydrophoben Acylrest verbunden ist. "**Glycophosphatidylinositole**" sind Verbindungen, bei denen Saccharide glycosidisch an die Inositol-Gruppe von Phosphatidylinositolen gebunden sind

Um die erfindungsgemäße nanoemulsive Raffination durchzuführen, muss wie bereits oben beschrieben, eine Lipidphase bereitgestellt werden, bei der ein Gesamtphosphorgehalt kleiner oder gleich 15mg/kg vorliegt. Gleichzeitig ist durch einen Hydratisierungsversuch mit einer Lauge, wie zuvor beschrieben, eine makroskopisch sichtbare Emulsionsschichtbildung, die einen Volumenanteil von > 1,0 Vol% ausmacht, auszuschließen. Zusätzlich ist ein Gehalt an neutralisierbaren (Carboxyl-) Säuregruppen von < 15 % und > 0,2 %, mehr bevorzugt von < 8 % und > 0,2 % am meisten bevorzugt von < 1,5 % und > 0,2 % günstig.

Bei einem unterschreiten des Gehalts an Fettsäuren kann wie beschrieben in Schritt b) eine Carbonsäure zugegeben werden.

Alternativ kann zunächst die wässrige Lösung mit einer Substanz, die mindestens eine Amidingruppe oder mindestens eine Guanidingruppe aufweist, mit einer Fettsäure versetzt und die resultierende Nanoemulsion zur Lipidphase gegeben werden.

Die in Schritt b) oder c) zugegebene Carbonsäure bevorzugt eine Fettsäure und besonders bevorzugt Ölsäure.

Der vorbestimmte Wert für den Gehalt an Fettsäuren in Schritt a) kann 0,2 Gew.-% betragen. Es hat sich gezeigt, dass bei Unterschreiten dieses Wertes ohne die Zugabe einer Carbonsäure dennoch zu sehr guten Raffinationsergebnissen führt, andererseits die Raffinationsleistung durch den Zusatz von Carbonsäuren aber auch gesteigert werden kann.

Erfindungsgemäß können mit den hierin beschriebenen Verfahren Farbstoffe, Geruchsstoffe, Schleimstoffe, Metallionen, einschließlich Erdalkalimetallionen, und/oder Fettsäuren aus Lipidphasen abgetrennt werden.

Auch die im Übrigen abgetrennten organischen Verbindungen, wie z.B. Phenole oder Sterolverbindungen, liegen in den wässrigen Phasen in einer nicht komplexierten Form vor, sodass vorstellbar ist, dass diese Verbindungen durch eine Separationstechnik in der durch die zentrifugalen Phasentrennung erhaltene Wasserphase für eine weitere Verwertung gewinnbar gemacht werden können.

Somit betrifft die Erfindung auch die abgetrennte Geruchs-, Geschmacks- und Farbstoffphase erhältlich oder erhalten nach einem der hierin offenbarten Verfahren.

### Figurenbeschreibung

Figur 1: zeigt die Untersuchung auf Schleimstoffe bei einem Leindotteröl gemäß Beispiel 1.
   1.) Rohöl mit einem Gehalt an Phosphor von 64 ppm und an freien Fettsäuren von 1,2 Gew%, nach Zentrifugation liegt eine halbfeste Schleimstoffphase, mit einem Volumenanteil von 10 Vol% vor.
   1.a) Probe von 1) nach Dekantieren der Ölphase.
   2.) Nach wässriger Raffination mit Zitronensäure liegt ein Gehalt an Phospholipiden von 15ppm und an freien Fettsäuren von 1,0 Gew% vor. In der Probe auf Schleimstoffe wird eine halbfeste Masse mit einem Volumenanteil von 3,2 Vol% erhalten (Schleimstoffprobe positiv).
   3.) Nach wässriger Raffination mit einer Natriumcarbonat-Lösung liegt Gehalt an Phosphor von 8ppm und an freien Fettsäuren von 0,45 Gew% vor. Inder Probe auf Schleimstoffe Nachweis einer dünnen Schleimstoffschicht von 0,9 Vol% (Schleimstoffprobe negativ).

### Beispiele

### Messmethoden

Folgende Messmethoden wurden im Rahmen der nachfolgend beschriebenen Ausführungsbeispiele verwendet:
Der Gehalt an Phosphor, Kalzium, Magnesium und Eisen in der Lipidphase wurde bestimmt mittels ICP OES (iCAP 7400, Thermo-Fisher, Scientific, Deutschland). Werteangaben in ppm (bzw in mg/kg).

Der Anteil an freien Fettsäuren in der Lipidphase wurde bestimmt mittels einer methanolischen KOH-Titration mit einem Titroline 7000 Titrator (SI-Analytics, Deutschland) Werteangaben in Gew-% (g/100g).

Die Bestimmung der Chlorophyllkonzentrationen erfolgte, sofern nicht anders angegeben, indem Ölproben in 10mm Küvetten ohne weitere Verdünnung mit einem UV-Vis-Spektrometer (UV-1601, Shimadzu, Japan) bei 630, 670 und 710nm analysiert wurden. Die Berechnung des Chroropyhlpigmentgehaltes erfolgte nach der Formel der AOCS-Methode Cc 13e-92.

Eine Quantifizierung der Trübung (Turbidimetrie) von Ölphasen erfolgte mittels einer Streulichterfassung, bei der der Wiedereintritt eines Streustrahls bei 90° mit einer Messsonde ermittelt wird, die in ein Probenvolumen von 10 ml eingetaucht wurde (InPro 8200-Messsensor, M800-1 Transmitter, Mettler Toledo, Deutschland). Der Messbereich beträgt 5 bis 4000 FTU. Es erfolgten immer Doppelbestimmungen je Probe.

Bestimmungen von Tröpfchen- oder Partikelgrößen erfolgten durch eine nichtinvasive Laserlicht-Rückstreuungs-Analyse (DLS) (Zetasizer Nano S, Malvern, UK). Hierzu wurden 2 ml einer zu analysierenden Flüssigkeit in eine Messküvette gefüllt und in die Messzelle eingesetzt. Die Analyse auf Partikel oder phasengrenzenbildenden Tröpfchen verläuft automatisch. Es wird ein Messbereich von 0,3 nm bis 10 µm abgedeckt.

Die Bestimmung sekundärer Oxydationsprodukte in einer Lipidphase erfolgte mit einer p-Anisidin-Reaktion, die photometrisch quantifiziert wurde. Hierzu wurden 20µl einer Ölprobe in eine Testküvette, die das Testreagenz bereits enthält, eingefüllt und unmittelbar im Anschluss in die Messzelle eines automatischen Analysegerätes (FoodLab, Italien) platziert. Der Messbereich liegt zwischen 0,5 und 100. Jede Probe wurde 2-mal analysiert.

Die Analyse von 3-MCPD erfolgte mittels Massenspektroskopie. Die Probenvorbereitung und Analyse erfolgte wie beschrieben bei: Zhou Y, Wu Z, Li C. Coupling neutral desorption sampling to dielectric barrier discharge ionization mass spectrometry for direct oil analysis. Anal. Methods, 2014, 6:1538-1544.

Die Konzentration von Benzo-a-pyren wurde nach der DGF-Methode III 17a vorgenommen.

Der pH-Wert wurde mit einer Glaskapillarelektrode (Blue-Line, ProLab 2000, SI-Analytics, Deutschland) bestimmt.

Alle Lösungen enthalten die erfindungsgemäßen Verbindungen oder Guanidin- oder Amidingruppentragende Verbindungen wurden in einen ionenarmen oder ionenfreien Wasserphase gelöst.

Alle Untersuchungen erfolgten unter Normaldruckbedingungen (101,3 Pa) und Umgebungstemperaturen von 25°C, sofern nicht anders angegeben.

### Beispiel 1:

Canolaöl, das mittels einer Schneckenpresse als gelb-grünliches leicht trübes Roh-Öl gewonnen wurde, wird zunächst auf die hierin enthaltenen Phosphorkonzentration untersucht (ICP-EOS, iCAP 7400, Thermo-Fisher, Scientific, Deutschland). Ferner erfolgt eine Ermittlung von emulgierenden Schleimstoffen durch Zusatz von 1 ml einer 5%igen Lösung von Natrium-Carbonat (pH12,5) zu 9 ml einer Rohölprobe. Schütteln der Probe in einer Zentrifugenküvette (Vortex mit 3000 rpm) über 3 Minuten. Anschließend Zentrifugation mit 3000rpm über 5 Minuten. Es wird eine 3mm dicke halbfeste Emulsionsschicht (entsprechen einem Volumen von 0,3 ml bzw. 3,0 Vol-%) an der Wasser-Öl-Phasengrenze beobachtet. Die Bestimmung der Säurezahl des Öls erfolgt mittels einer alkoholischen KOH-Lösung mittels potentiometrischer Titration (Titroline 7000 SI-Analytiks, Deutschland). Das Öl hat einen intensiven Geruch und leicht bitteren Geschmack.

200 kg des Rohöls wurden auf 60°C erwärmt und eine 75%igen Phosphorsäurelösung in einem Volumenverhältnis von 0,4 Vol-% zugesetzt. Anschließend homogenisieren mit einem Homogenisierer (Fluco MS 4, Fluid Kotthoff, Deutschland) bei einer Umdrehungsfrequenz von 1000 rpm für 30 Minuten. Belassen des homogenen Gemischs für 30 Minuten bei 65°C. Anschließend Phasenseparation mit einem Teller-Separator (OSD 1000, MKR, Deutschland) bei einer Durchsatzleistung von 100l/h und einer Umdrehungsfrequenz von 10.000 rpm. In der Prüfung auf das Vorliegen von Schleimstoffen wird eine Emulsionsschicht von 0,2ml bzw. 2,0 Vol% nachgewiesen. 10 kg des Öls werden mit 200ml einer 0,5 molaren Argininlösung mit einem Homogenisator (Fluco MS2, Fluid Kotthoff, Deutschland) gemischt (3000 rpm, 1 Minute). Es entsteht sofort eine zähe Emulsion, die eine weitere Durchmischung unmöglich macht. Durch Zentrifugation (4500rpm/20 Minuten) kann keine Phasentrennung der hochviskosen Emulsion erreicht werden. Bei weiteren 10kg des säurebehandelten Öls wird die gleiche Arginin-Lösung und Lösungsmenge kontinuierlich bei einer Mischung mit einem Propellerrührer (500rpm) hinzugegeben. Es entsteht eine hoch-viskose Emulsion, die gerade noch fließfähig ist. Durch Zentrifugation (3800rpm/10 Minuten) unvollständige Phasentrennung. Das restliche säurebehandelte Öl wird mit einer Natriumhydroxid-Lösung (1N, 3 Vol%) behandelt. Hierzu wird diese zunächst eingerührt und anschließend mit dem Homogenisierer (Fluco MS 4, Fluid Kotthoff, Deutschland) für 10 Minuten bei 1000 rpm intensiv gemischt. Nachfolgend Phasenseparation mittels des o.g. Separators. Es erfolgte die Bestimmung des Phosphorgehalts des Öls sowie die Bestimmung der hierin vorliegenden Säurezahl. Die erneute Prüfung auf emulsionsbildende Schleimstoffe, die wie oben angegeben erfolgte, zeigte nur noch eine schwach erkennbare Hautbildung an der Wasser-Öl-Phasengrenze (Volumen < 0,1ml entsprechend < 1,0 Vol-%). Je 10kg des so erhaltenen leicht trüben Öls wurden mit dem folgenden Schema weiter raffiniert: A) Einrühren der wässrigen Arginin-Lösung mit einem Propellermischer bei 500rpm über 30 Minuten bei 35°C B) Homogenisieren der im Reaktionsgefäß vorgelegten Arginin-Lösung mit dem o. g. Homogenisator (Fluco MS2, Fluid Kotthoff, Deutschland) (1000 rpm, für 5 Minuten bei 25°C), wobei die Lösungen eine Argininkonzentration von 1) 0,3 molar und 2) 0,6 molar hatten und der Volumenzusatz mit a) 1 Vol-%, b) 3 Vol-% und c) 5 Vol-% erfolgte. Ferner wurde das vorgereinigte Öl ein weiteres Mal mit einer Natriumhydoxid-Lösung (1N, 3 Vol-%) mit einem Propellerrührer (500rpm) über 30 Minuten (Versuch C.1) und mit dem Homogenisator, wie zuvor beschrieben, (Versuch C.2) gemischt. Anschließend Phasentrennung durch den o. g. Separator.

Bestimmung des Ölgehaltes an Phosphor, Natrium, Kalium, Calcium und Eisen erfolgte mittels ICP-OES (iCAP 7400, Thermo-Fisher, Scientific, Deutschland). Die Bestimmung der Chlorophyll- Konzentrationen erfolgte gemäß der Angabe unter Messmethoden, nachdem die Öle einer Vakuumtrocknung unterzogen worden waren. Die Farbpigmentmessung erfolgte mittels der Lovibond-Farbskalenmessmethode gemäß dem ISO Verfahren 15305 mit einem Lovibond Colourscan (Tintometer, Ltd., Amesbury, UK, 5 1/4" Zelle).

### Ergebnisse (zusammengefasst in den Tabellen 1a und 1b):

Nach der Phosphorsäureentschleimung hatten die Öle noch eine grünliche Farbe und einen moderigen Geruch. Der Versuch, eine Argininlösung mittels eines Intensivmischers in das säure-entschleimte Öl einzubringen, führte zu nicht mehr trennbaren Emulsionen, auch unter Verwendung verschiedenen Dosiertechniken. Das Einrühren einer Agininlösung war zwar möglich, das Gemisch war aber stark viskos, sodass eine Phasenseparation unvollständig blieb, weshalb hier keine weiteren Versuche unternommen wurden. Nach Neutralisation des säureentschleimten Öls mit einer Lauge war die Probe auf Schleimstoffe negativ und der Einmischprozess einer Argininlösung sowohl mittels einer Einrührvorrichtung als auch mit einem Homogenisator möglich. Die resultierenden Wasser-in-Öl-Emulsionen unterschieden sich in ihrem Aussehen aber deutlich voneinander: nach einem Rühreintrag hatte das Reaktionsgemisch noch einen ölartigen Charakter und eine gelb-grünliche Farbe, bei einer mäßigen bis starken Trübung, nach dem Intensiveintrag hatte das Reaktionsgemisch einen milchartigen Charakter mit einer weißlichen bis hellgelben Farbe und einer erheblichen Trübung. Die Phasentrennung mit dem Separator war problemlos möglich, die Wasserphasen waren deutlich trüb mit gelblichem Farbton bei Ölen nach einem Rühreintrag und grünlich nach einem Intensiveintrag. Auch die Öle unterschieden sich nach der Phasentrennung, wobei das Öl nach einem Rühreintrag fast klar war, bestand eine deutliche Trübung bei dem Öl nach dem Intensiveintrag. Zur Vergleichbarkeit des Raffinationsergebnisses, sowie zur Durchführbarkeit der Analytik, wurden die Öle zunächst getrocknet mit einem Vakuumtrockner (VC-130SC, Cik, Deutschland) bei einer Temperatur von 55 °C über eine Zeitdauer von 120 min und unter einem Druck von 0,01 Pa. Jetzt zeigte sich, dass das Öl nach einem Intensiveintrag ein brillantes Aussehen hatte im Gegensatz zu dem Öl das nach einem Rühreintrag erhalten wurde, welches noch eine leicht Trübung aufwies. Mit dem Auge bereits sichtbar war der dann auch ermittelte Farbunterschied bei den erhaltenen Ölphasen, wobei die Farbe nach einem Intensiveintrag gelblich und nach einem Rühreintrag gelblich bis leicht grünlich war. Bei beiden Raffinationsverfahren war ein deutlicher Unterschied gegenüber der Farbe des Öls nach der Phosphorsäurebehandlung zu erkennen. Eindeutig war auch die Änderung des Geruchs. Nach einem Rühreintrag bestand noch ein schwacher Pflanzengeruch, nach dem Intensiveintrag der Argininlösung war das Öl praktisch geruchlos. Das Öl nach einem Rühreintrag hatte einen nußigen Geschmack mit diskret bitterem Nachgeschmack, das Öl nach einem Intensiveintrag der Arginin-Lösungen hatte keinen Nachgeschmack. Das Öl welches nach einer Phosphorsäure- und Natrium-hydroxidvorbehandlung erneut mit Natrium-hydroxid behandelt wurde, hatte sowohl nach einer Rühreintrag als auch nach einer Intensivmischung ein noch leicht grünliches Aussehen sowie einen deutlichen Pflanzengeruch und einen seifigen und leicht bitteren Geschmack. Die Untersuchung der intensiv riechenden (Pflanzengeruch) grünlichen Wasserphasen nach der Argininextraktion ergab den Nachweis von Chlorophyll.

**Tabelle 1a**

| Raffinations stufe | Phosphor [mg/kg] | FFA [Gew%] | Magnesium [mg/kg] | Kalium [mg/kg] | Calcium [mg/kg | Eisen [mg/kg] |
|---|---|---|---|---|---|---|
| Rohmaterial | 664 | 1,8 | 56 | 72 | 164 | 2,5 |
| nach H₃PO₄ | 32 | 2,0 | 29 | 8,8 | 32 | 1,2 |
| nach NaOH | 15 | 0,3 | 5,2 | 5,1 | 10 | 1,3 |
| A.1.a | 8 | 0,18 | 1,2 | 1,8 | 1,7 | 0,9 |
| A.1.b | 6 | 0,12 | 1,3 | 1,3 | 2,0 | 0,8 |
| A.1.c | 5 | 0,11 | 1,0 | 1,4 | 1,5 | 0,8 |
| A.2.a | 7 | 0,08 | 0,1 | 0,1 | 0,8 | 0,7 |
| A.2.b | 4 | 0,09 | 0,15 | 0,1 | 1,0 | 0,8 |
| A.2.c | 3 | 0,06 | 0,1 | 0,08 | 0,5 | 0,6 |
| B.1.a | 5 | 0,07 | 0,04 | 0,05 | 0,023 | 0,2 |
| B.1.b | 2 | 0,05 | < 0,02 | < 0,02 | < 0,02 | 0,1 |
| B.1.c | 2 | 0,03 | < 0,02 | < 0,02 | < 0,02 | < 0,1 |
| B.2.a | 0,9 | 0,03 | < 0,02 | < 0,02 | < 0,0 | < 0,02 |
| B.2.b | 0,6 | 0,01 | < 0,02 | < 0,02 | < 0,02 | < 0,02 |
| B.2.c | 0,5 | 0,01 | < 0,02 | < 0,02 | < 0,02 | < 0,02 |
| C.1 | 12 | 0,24 | 5,1 | 5,2 | 10 | 1,3 |
| C.2 | 11 | 0,20 | 5,2 | 5,1 | 11 | 1,3 |

**Tabelle 1b: Lovibond-Farbmesswerte**

| Raffinationsstufe | Lovibond-rot | Lovibond-gelb |
|---|---|---|
| Rohmaterial | 12,3 | 55 |
| nach H₃PO₄ | 8,9 | 45 |
| nach NaOH | 9,2 | 42 |
| A.1.a | 7,5 | 38 |
| A.1.b | 7,4 | 37 |
| A.1.c | 7,6 | 39 |
| A.2.a | 7 | 40 |
| A.2.b | 7,2 | 36 |
| A.2.c | 6,9 | 37 |
| B.1.a | 3,6 | 28 |
| B.1.b | 3,2 | 24 |
| B.1.c | 3 | 25 |
| B.2.a | 3,1 | 26 |
| B.2.b | 3 | 23 |
| B.2.c | 3,1 | 24 |
| C.1 | 9,3 | 41 |
| C.2 | 9,1 | 42 |

### Beispiel 2:

Untersuchungen zur Verwendung von Nanoemulsionen zur Ölraffination.

Die Untersuchungen erfolgten an einem Jatropha-Öl das von Natur aus nur sehr geringe Konzentrationen an grünen Farbstoffen enthalt, aber einen unangenehmen Geruch aufweist und aufgrund eines hohen Anteils an Schleimstoffen mittels wässriger Verfahren praktisch nicht raffinierbar ist. Dabei ist der Geruch intensiv, stechend und von artspezifischem unangenehmem Charakter. Der Gesamtphosphorgehalt betrug 78 ppm (mg/kg) und die Säurezahl lag bei 1,3 Gew% (analytische Verfahren gemäß Beispiel 1). Die Probe auf das Vorhandensein von Schleimstoffen erfolgte, wie in Beispiel 1, unter Verwendung eines Wasser/Öl-Verhältnisses von 1:10. Es entstand eine Emulsionsschicht von 0,7 ml (entspricht 7,0 Vol%) an der Öl-Wasser-Phasengrenze mit nur einer geringen Menge an freiem Wasser. Das Jatropha-Rohöl (10kg) wurde einer wässrigen Raffination mit einer Natrium-Carbonat-Lösung (Konzentration: 10 Gew%, Zugabemenge:3 Vol%) unterzogen, die mittels eines Propellermischers (500 rpm über 30 Minuten) eingemischt wurde. Phasentrennung mittels einer Becherschleuder (3800rpm über 5 Minuten). Im Anschluss zeigte die Probe auf Schleimstoffe erneut eine halbfeste Emulsionsschicht mit einem Volumen von 3,0 Vol%. Daher Wiederholung der wässrigen Raffination mit einer Natrium-Carbonat-Lösung (Konzentration: 20Gew%, Zugabemenge: 3Vol%) unter Verwendung einer Intensivmischung mit einem Homogenisator (Fluco MS2, Fluid Kotthoff, Deutschland) (1000 rpm, für 5 Minuten bei 25°C). Die erneute Probe auf Schleimstoffe ergab nur ein dünnes Häutchen an der Wasser-Öl-Phasengrenze (< 1,0Vol-%). Das Öl hatte noch einen intensiven arttypischen Geruch. Es wurden für das Öl folgende Werte ermittelt: Phosphor 6 ppm (mg/kg), Säurezahl 0,25 Gew%, Calcium 0,01ppm (mg/kg), Eisen 0,01 ppm (mg/kg). Anschließend erfolgte eine nanoemulsive wässrige Raffination mit einer 0,4 molaren Arginin-Lösung indem zu je 5 Litern des vorgereinigten Jatrophaöls 100ml der Arginin-Lösung hinzugegeben wurden und zum einen (Versuchsnummer 1.0) mit einem Ultrathurrax T50 (5000 rpm für 2 Minuten bei 25°C) homogenisert wurden und zum anderen (Versuchsnummer 2.0) die Mischung mit einem Propellerrührer (500rpm über 60 Minuten bei 25°C,) erfolgte. Anschließend Phasentrennung mittels einer Becherschleuder (3800rpm über 5 Minuten). Das mit dem Rühreintrag raffinierte Jatropha-Öl (V2.0) hatte noch einen deutlichen arttypischen Geruch, während das mit dem Intensivmischeintrag gereinigte Öl (V1.0) nur noch einen ganz schwachen Geruch hatte. Auch die Kennzahlen der Öle unterschieden sich (Rühreintrag/Intensivmischeintrag): Phosphor 2 / 0,5 ppm (mg/kg), Säurezahl 0,03 / 0,01 Gew-%, Calcium 0,01 / 0,01 ppm (mg/kg), Eisen 0,02 / < 0,02 ppm (mg/kg).

Zu 2 kg des Öls aus Versuch V1.0 wurden 60mg Chlorophyll A (Sigma Aldrich, Deutschland) das zunächst in Aceton gelöst wurde, über 10 Minuten dem Öl beigemischt. Es entstand eine deutliche Grünfärbung des ansonsten klaren Öls. Das Lösungsmittel wurde mittels einer Vakuumextraktion entfernt unter Erhalt der Ölphase V 3.0.

Es wurden Nanoemulsionen angefertigt, indem zu je 100ml einer 0,5 molaren Argininstammlösung a) 3,2 ml Ölsäure, b) 2,4 ml Palmetoleinsäure sowie c) 1,9 ml Erucasäure (bei 40°C) zugegeben und bis zur vollständigen Lösung in Form einer transparenten Nanoemulsion eingerührt wurden (12 Stunden). Je 100ml des Öls V3.0 wurden jeweils 2 ml der Nanoemulsionen a) - c), sowie zur Kontrolle je einer Probe 2 ml ionenfreies Wasser (d) und Arginin-Stammlösung (0,5 molar) (e) hinzugegeben. Die angesetzten Proben wurden mit einem Ultrathurrax T18 mit 18.000rpm für 4 Minuten bei 25 °C homogenisiert. Die Phasentrennung erfolgte mit einer Becherzentrifuge bei 5.000rpm über 8 Minuten bei Raumtemperatur. Weitere Ansätze erfolgten mit je 100ml des Öls V3, indem diesen je 3 g Bleicherde (FILTROL-105 (f), CLARION 470 (g) hinzugegeben und bei 80°C für 60 Minuten mit einen Magnetrührer vermischt wurden. Alle Ölproben wurden unmittelbar nach dem Versuchsende zentrifugiert (5.000rpm über 8 Minuten) und anschließend einer Trocknung unterzogen, die gemäß Beispiel 1 erfolgte. Bei den so erhaltenen Ölen wurde eine Analyse der Chlorophyllkonzentrationen vorgenommen (Durchführung siehe Messmethoden). Ferner wurden bei allen Versuchen 2 Proben zur Bestimmung des Anisidinwertes genommen und sofern nicht bereits erfolgt, einer Vakuumtrocknung unterzogen. Je eine der 2 Proben (10ml) wurde eingefroren (t0), die 2. Probe wurde unter Luftverschluss für 4 Monate (t120) bei Raumtemperatur und bei Tageslicht gelagert. Zum Versuchende wurden die Proben t0 wieder aufgetaut und zusammen im den gelagerten Proben in einem Durchgang nach dem unter Meßmethoden aufgeführten Verfahren analysiert.

**Tabelle 2**

| **Versuchsnummer** | **Chlorophyll ppm (mg/kg)** | **Lovibond Rot (R) / Gelb (Y)** | **Anisidin t0** | **Anisidin t120** |
|---|---|---|---|---|
| Rohöl | 0,24 | R 12,8 / Y 29 | 4,2 | 38,4 |
| V 1.0 | 0,03 | R 3,2 / Y 6,1 | 0,5 | 3,9 |
| V2.0 | 0,08 | R 4,7 /Y 9,5 | 0,9 | 7,3 |
| V 3.0 | 32,4 | R 5,2 / Y 56,2 | 0,7 | 44,6 |
| V 3.0a) | 0,04 | R 3,2 / Y 5,8 | 0,5 | 1,2 |
| V3.0b) | 0,12 | R 3,3 / Y 8,2 | 0,5 | 2,1 |
| V3.0c) | 0,03 | R 3,3 /Y 6,0 | 0,5 | 1,1 |
| V 3.0d) | 32,1 | R5,3/Y56,5 | 0,9 | 45,1 |
| V 3.0e) | 0,82 | R3,9/Y16,2 | 0,5 | 8,2 |
| V 3.0f) | 0,73 | R3.0 /Y 15,1 | 0,9 | 16,9 |
| V 3.0g) | 1,03 | R3,7 /Y16,2 | 1,1 | 17,3 |

### Ergebnisse:

Bei dem untersuchten Öl bestand eine deutliche Belastung mit Schleimstoffen trotz eines niedrigen Gehaltes an phosphorhaltigen Verbindungen. Nach 2-maliger basischer Vorreinigung war die Probe auf Schleimstoffe negativ und eine Intensivmischung mit einer Argininlösung möglich. Es konnte eine bessere Abreicherung von phosphorhaltigen Verbindungen, Erdalkaliemetall- und Metallionen sowie des Gehalts an Säuregruppen und des Chlorophyllgehalts durch einen Intensivmischeintrag gegenüber einem Rühreintrag erreicht werden. Das mittels Intensiveintrag raffinierte Öl, welches einen Restgehalt an Säuregruppen aufwies, der unterhalb der Prozesskennzahlen lag und mit Chorophyll versetzt wurde, konnte bei einer neuerlichen Intensivreinigung mit einer Argininlösung nur unvollständig von dem eingebrachten Chlorophyll befreit werden, der Abreicherungs- und Bleichungseffekt entsprach etwa dem, der mit Bleicherden erreicht wurde. Mittels Intensivmischung eingebrachte Nanoemulsionen führten zu einem optimalen Austrag von Chlorophyll und Bleichungsergebnis, die Wasserphasen waren grün mit einer leichten Trübung. Eine Untersuchung der Wasserphasen zeigte das Vorhandensein von Chlorophyll. Bei einem Vergleichsversuch mit reinem Wasser. kam es zu einer spontanen Entmischung, die Wasser- und Ölphase waren unverändert zum Ausgang. Das Öl, das mit einer Nanoemulsion, bestehend aus Arginin und Palmetoleinsäure, behandelt wurde, hatte nur noch einen minimalen Grünton, während die anderen Öle sich farblich nicht von dem ursprünglich hergestellten Öl, vor Eintrag des Chlorophylls, unterschieden. Das Rohöl zeigte eine Belastung mit sekundären Oxidationsprodukten. Durch alle untersuchten Verfahrensmodifikationen wurde eine erhebliche Reduktion der hierin enthaltenen Oxidationsprodukte erreicht, wobei die niedrigsten Werte vorlagen nach einem Intensiveintrag der Argininlösung und nach Raffination mit einer Nanoemulsion nach einem Chlorophyllzusatz. Nach 4 Monaten war es zu einem erheblichen Zuwachs an sekundären Oxidationsprodukten im Rohöl und in Ölen, die einen Zusatz an Chlorophyll erhalten hatten, gekommen. Öl, das mit einem Intensivmischeintrag der Argininlösung behandelt worden war, hatte eine bessere Lagerstabilität, als Öl das mit einem Rühreintrag der Arginin-Lösung raffiniert wurde. Öle, die nach einem weitgehend vollständigen Chlorophyllaustrag durch die Intensivmischung mit Nanoemulsionen erhalten worden waren, wiesen die beste Lagerstabilität auf. Durch die Behandlung mit Bleicherden kam es zu einer Verschlechterung der Lagerstabilität trotz einer Reduktion von Chlorophyll, die mit der einer Argininreinigung vergleichbar war.

### Beispiel 3:

Kalt gewonnenes Rapspressöl mit den Kennzahlen: Phosphorgehalt 4,1 ppm (mg/kg), Calcium 28 ppm (mg/kg), Eisen 2,5 ppm (mg/kg), freie Fettsäuren 1,1 Gew%, Chlorophyllgehalt 6,8 ppm (mg/kg), von klarem Aussehen und leicht grüngelblicher Farbe, sowie nur minimaler Emulsionsbildung bei der Untersuchung auf Schleimstoffe (< 0,1ml/ < 1,0 Vol-%, Versuchsdurchführung gemäß Beispiel 1), sowie mit einem senfartigen Geruch und einem intensiv ranzigen Geschmack und einem bitteren Nachgeschmack, wird für den folgenden Versuch verwendet. Zu je 1000ml des Öls werden 30ml einer 0,5 molaren Argininlösung zugesetzt. Die Mischung erfolgt mit A) einem Propellerrührer mit 200rpm über 30 Minuten, B) mit einem Propellerrührer mit 800rpm für 15 Minuten, und C) mit einem Ultrathurrax T18 mit 24 TDS rpm für 5 Minuten,. Anschließend Zentrifugation mit einer Becherschleuder mit 5000rpm über 10 Minuten. Die Ölanalytik erfolgte wie in Beispiel 1 und 2 beschrieben. Es wurden jeweils 2 Proben (20ml) vom Rohöl (RÖ) sowie den raffinierten Ölen A) und C) entnommen, wovon jeweils eine direkt eingefroren wurde (t0) und die zweite in einem offenen Gefäß über 30 Tage, bei Raumtemperatur und Tageslicht (t30), stehen gelassen wurde. Zur Analytik sekundärer Oxidationsprodukte wurden die Proben t0 aufgetaut und zusammen mit den Proben t30 analysiert (Analytik gemäß Messmethoden). Die Viskosität des Rohöls sowie der Emulsionen, die nach der Mischung mit der wässrigen Phase erhalten worden waren, wurde mit einem Vibrationsviskosimeter (Viscolite d15, PCE-Instruments, Deutschland) bestimmt das an einem Stativ befestigt war und in die obere Schicht der Prozessflüssigkeit eintauchte. Es wurde nach den ersten 60 Sekunden der Homogenisierung des Versuchs C) eine Probe der Emulsion entnommen und hierin ebenfalls die Viskosität bestimmt. Die Messungen erfolgten bei der gleichen Temperatur des Öl bzw. der Emulsionen (28°C).

### Ergebnisse:

Bei den Proben, die nach den Verfahren A und C erhalten wurden, war eine Phasenseparation mittels Zentrifugation möglich. Die Probe, die nach Verfahren B erhalten wurde, war hoch viskos, hier konnte nur eine ungenügende Phasenseparation erreicht werden, sodass auf die weitere Analytik verzichtet wurde. Das Rohöl hatte eine Viskosität von 152 mPa s, die Emulsionen hatten eine Viskosität von A) 368 mPa s nach 5 Minuten und vonC) 3520 mPa s nach 60 Sekunden und 26 mPa s nach 5 Minuten. Die Ölphasen der Proben A und C waren klar bis brillant. Während das Öl der Probe A noch einen leichten grünen Farbton aufwies war das Öl der Probe C blass gelblich. Die ermittelten Kennzahlen betrugen (A bzw. C) 3,6 bzw. 0,8 ppm (mg/kg) für Phosphor, 1,3 bzw. 0,02 ppm (mg/kg) für Calcium, 0,9 bzw. <0,01 mg/kg für Eisen und 0,08 bzw. 0,04 Gew% für freie Fettsäuren. Der Chlorophyllgehalt lag bei 0,96 ppm (mg/kg) für A) und bei 0,02 ppm (mg/kg) für C). Die Geruchsprobe ergab einen diskreten Pflanzengeruch bei der Probe A während Probe C praktisch geruchlos war. Der Geschmack war deutlich geringer intensiv als bei dem eingesetzten Rohöl bei dem Öl aus Versuch A mit einem ganz leichten bitteren Nachgeschmack. Das Öl aus Versuch C hatte einen leicht nussigen Geschmackscharakter bei einem angenehmen Mundgefühl, kein Nachgeschmack. In beiden separierten wässrigen Extraktionsphasen konnte Chlorophyll und Phospholipide nachgewiesen werden. Ferner hatten die wässrigen Phasen einen intensiven moderigen Pflanzengeruch. Der Anisidinwert betrug für das Rohöl zum Ausgangszeitpunkt 3,7 und nach 30 Tagen 38,4. Durch die Raffination wurden sekundäre Oxidationsprodukte durch die Intensivmischung mit Arginin deutlich stärker gesenkt, als durch einen Mischeintrag der Argininlösung (Anisidinwerte nach der Raffination 0,6 für C) vs. 0,9 für A)) Während der Lagerungsperiode entstanden mehr sekundäre Oxidationsprodukte in dem nur mit einem Mischeintrag raffinierten Öl (A) 12,6 vs. C) 3,1).

### Beispiel 4:

Untersuchungen zur Desodorierungswirkung einer wässrigen Raffination mit einer Arginin-Lösung.

Es wurden Öle von Raps- (RPÖ), Sesam- (SEÖ) und Sonnenblumenkernen (SBÖ), dies bereits 2-3 Jahre eingelagert gewesen waren und einen erheblichen ranzigen Geruch und Geschmack aufwiesen, für die Versuche ausgewählt. Das Sonnenblumen- und das Rapsöl hatten ferner ein grünliches Aussehen. Die Ölkennzahlen betrugen für RPÖ: Phosphor 4 ppm (mg/kg), Calcium 23 ppm (mg/kg), Magnesium 3 ppm (mg/kg), Eisen 1 ppm (mg/kg), Säurezahl 1,2 Gew-%, Chlorophyll 12,4 ppm (mg/kg); für SEÖ: Phosphor 6 ppm (mg/kg), Calcium 67 ppm (mg/kg), Magnesium 12 ppm (mg/kg), Eisen 4 ppm (mg/kg), Säurezahl 0,8 Gew-%, Chlorophyll 8,2 ppm (mg/kg), und für SBÖ: Phosphor 24 ppm (mg/kg), Calcium 64 ppm (mg/kg), Magnesium 13 ppm (mg/kg), Eisen 4 ppm (mg/kg), Säurezahl 0,8 Gew-%, Chlorophyll 4,4 ppm (mg/kg). Die Bestimmung der Ölkennzahlen erfolgte wie in Beispiel 1 beschrieben, die Chlorophyllkonzentration wurde wie unter Mesmethoden beschrieben bestimmt. Die Probe auf das Vorhandensein von Schleimstoffen (Ausführung gemäß Beispiel 1) zeigte eine feste Emulsionsschicht von 0,5 ml bzw. 5,2 Vol-% an der Öl-Wasser-Phasengrenze, mit nur minimaler Menge an freiem Wasser, bei SBÖ, eine halbfeste Emulsionsschicht von 0,4 ml bzw. 4,1 Vol-% bei SEÖ mit einer gelblichen fast klaren Wasserphase und keine Emulsionsschicht (< 0,1ml bzw. < 1,0 Vol%) bei RPÖ, wobei die Wasserphase grünlich und trüb war. Für die Untersuchungen wurden jeweils 6 Liter des Roh-Öls verwandt.

Es erfolgte eine Vorreinigung des SBÖ mit Zitronensäure (25%ig, Volumenzusatz 0,3Vol-%), die Mischung wurde mit einem Ultrathurrax T25 (20TSD rpm) für 3 Minuten homogenisiert, eine zentrifugale Abtrennung erfolgte nach einer Standzeit von 15 Minuten mit 3800rpm für 5 Minuten. Die erneute Probe auf Schleimstoffe zeigte eine halbfeste Emulsionsschicht von 0,3 ml bzw. 3,3 Vol-% bei klarer leicht gelblicher Wasserphase. Es erfolgte daher eine weitere Vorreinigung mit einer wässrigen Lösung, in der Natrium-Metasilikat-anhydrat (10 Gew-%) vollständig gelöst war unter Zudosierung von 3 Vol-% und Mischen mit dem Ultrathurrax (20TSD rpm für 3 Minuten) und anschließender Zentrifugation (3800 rpm für 5 Minuten). Die Probe auf Schleimstoffe zeigte nun nur noch einen dünnen Film an der Phasengrenze (< 1,0 Vol-%). Der inital vorliegende stechende Geruchscharakter des Öls war deutlich reduziert, es bestand weiter ein intensiv ranziger Geruch. Das SEÖ wurde mit einer wässrigen Lösung (Volumenzusatz 4 Vol-%), in der Natrium-dihydrogencarbonat vollständig gelöst war (20 Gew.-%), mittels eines Intensivmischeintrags mit dem vorgenannten Ultrathurrax (20TSD rpm über 5 Minuten) gemischt und anschließend mittels Zentrifugation (3800rpm für 5 Minuten) von der Wasserphase separiert. Die Probe auf Schleimstoffe ergab weiterhin eine halbfeste Emulsionsschicht von 0,3 ml bzw. 3,4 Vol-%. Daher Wiederholung der zuvor durchgeführten wässrigen Raffinationsstufe. Die Probe auf Schleimstoffe zeigte danach nur ein Häutchen an der Phasengrenze (< 1,0 Vol-%). Der Geruch des Öls war gegenüber dem Ausgang praktisch nicht gemindert. Das RPÖ wies bei der Probe auf Schleimstoffe und eine dünne Schicht von < 0,1 ml bzw. < 1,0 Vol-% auf und wurde daher nicht einer Vorreinigung unterzogen. Die vorgereinigten Öle hatten die folgenden Kennzahlen, bei SEÖ: Phosphor 3 ppm (mg/kg), Calcium 12 ppm (mg/kg), Magnesium 2 ppm (mg/kg), Eisen 0,5 mg/kg, Säurezahl 0,3 Gew%, Chlorophyll 6,2 mg/kg; bei SBÖ: Phosphor 6 ppm (mg/kg), Calcium 14 ppm (mg/kg), Magnesium 2 ppm (mg/kg), Eisen 1,5 ppm (mg/kg), Säurezahl 0,35 Gew-% , Chlorophyll 3,9 ppm (mg/kg).

Je 3 Liter des vorgereinigten SBÖ und SEÖ sowie des Rapsöls wurden mit einer Argininlösung (0,5molar, Volumenzusatz 3 Vol-%) mit dem o. g. Ultrathurrax homogenisiert (20TSD rpm, 6 Minuten). Anschließend Phasentrennung (3800 rpm über 5 Minuten). Die erhaltenen Öle wiesen die folgenden Kennwerte auf: für RPÖ Phosphor 2 ppm (mg/kg), Calcium 0,3 ppm (mg/kg), Magnesium 0,08 ppm (mg/kg), Eisen 0,01 ppm (mg/kg), Säurezahl 0,08 Gew-%, Chlorophyll 0,08 ppm (mg/kg); für SEÖ: Phosphor 1 ppm (mg/kg), Calcium 0,8 ppm (mg/kg), Magnesium 0,05 ppm (mg/kg), Eisen 0,01 ppm (mg/kg), Säurezahl 0,05 Gew-%, Chlorophyll 0,02 ppm (mg/kg) und für SBÖ: Phosphor 2 ppm (mg/kg), Calcium 0,8 ppm (mg/kg), Magnesium 0,04 ppm (mg/kg), Eisen 0,01 ppm (mg/kg), Säurezahl 0,03 Gew-%, Chlorophyll 0,01 ppm (mg/kg);

Zu Vergleichszwecken bei der sensorischen Prüfung der raffinierten Öle wurden handelsübliche Premiumöle entsprechender Ölsorten, bei denen eine klassische Raffination inclusive Bleichung und Desodorierung erfolgt war, untersucht. Die Öle wurden von 4 geschulten Verkostern verblindet jeweils 3-mal hinsichtlich der Geschmacks- und Geruchssensorik analysiert. Es wurden die folgenden sensorischen Eigenschaften bewertet:
Saatigkeit und Nussigkeit als positive Attribute sowie als negative Attribute, die Bewertung einer Bei- oder Nachgeschmackskomponente: ranzig, strohig, holzig, röstig, verbrannt, bitter, adstringierend, stichig, moderig oder fischig. Ferner wurde von den Prüfern für jeden sensorischen Eindruck ein Intensitätsgrad, der von 0 (nicht vorhanden) bis 10 (sehr intensiv) skaliert wurde, beurteilt.

Die Beurteilung erfolgte durch Verkostung des Öls, das auf 28°C erwärmt worden war und in einem eingefärbten Glas, welches mit einem Uhrglas verschlossen wurde, gereicht wurde.

Die nach der nanoemulsiven wässrigen Raffination mit einer Argininlösung erhaltenen Wasserphasen hatten ein grünliches milchartiges Aussehen und einen moderigen bis stechenden Pflanzengeruch. Es erfolgte eine Analytik auf Chlorophyll, Phospholipide und Glycolipide.

Die Ergebnisse sind in der nachfolgenden Tabelle 4 abgebildet:

**Tabelle 4**

| | RPÖ - roh | RPÖ - raffiniert | RPÖ-Desodoriert | SEÖ - roh | SEÖ - raffiniert | SEÖ-Desodoriert | SBÖroh | SBÖraffiniert | SBÖ-Desodoriert |
|---|---|---|---|---|---|---|---|---|---|
| Saatigkeit | 3 | 5 | 3 | 6 | 5 | 4 | 4 | 6 | 3 |
| Nussigkeit | 1 | 3 | 2 | 3 | 3 | 1 | 2 | 3 | 1 |
| Fruchtigkeit | 0 | 0 | 0 | 0 | 0 | 0 | 0 | 0 | 0 |
| ranzig | 7 | 0 | 0 | 6 | 0 | 0 | 4 | 0 | 0 |
| holzig | 3 | 0 | 0 | 0 | 0 | 0 | 3 | 0 | 0 |
| stichig | 0 | 0 | 0 | 0 | 0 | 0 | 3 | 0 | 0 |
| moderig | 5 | 0 | 0 | 4 | 0 | 0 | 3 | 0 | 0 |
| adstringierend | 4 | 0 | 0 | 3 | 0 | 0 | 3 | 0 | 0 |
| bitter | 2 | 0 | 0 | 4 | 0 | 0 | 0 | 0 | 0 |
| Summe Fehlaromen | 21 | 0 | 0 | 17 | 0 | 0 | 16 | 0 | 0 |

### Zusammenfassung:

Die untersuchten Pflanzenöle hatten aufgrund der Gewinnungsbedingungen oder einer Alterung eine erhebliche Belastung durch einen Fehlgeruch- bzw. Fehlgeschmack. Bei einem der Öle musste eine Vorreinigung wiederholt werden wegen einer positiven Probe auf Schleimstofe nach dem ersten Vorreinigungsschritt. Alle Öle konnten nach Erreichen der Prozesskennzahlen mittels eines Intensivmischverfahrens mit einer wässrigen Argininlösung raffiniert werden. Dabei wurden Fehlgerüche bzw. ein Fehlgeschmack vollständig entfernt, die sensorische Qualität entsprach einen gleichartigen Öl das mit einem Raffinationsverfahren aus dem Stand der Technik, d.h. inclusive einer Desodorierung, hergestellt worden war. Dabei war der sensorische Eindruck von Aromaeigenschaften, die eine positive Bewertung eines Pflanzenöls bedingen bei Ölen, die mit dem erfindungsgemäßen nanoemulsiven Raffinationsverfahren behandelt worden waren, stärker, als bei einem desodorierten Öl. Ferner konnte eine erhebliche Reduktion des Chlorophyllgehalts der wässrig raffinierten Öle dokumentiert werden. In den wässrigen Phasen konnten Chlorophyll, Phospholipide und Glycolipide nachgewiesen werden. Ferner lagen hierin Geruchs- und Geschmacksaromen vor, bei einem sehr intensiven Pflanzengeruch, mit einem moderigen, bohnigen und stechenden Charakter. Eine Geschmacksprobe an einem Tropfen der wässrigen Phasen (Verkostung nicht zumutbar) ergab einen Nachweis von adstringierenden und bitteren Geschmacksstoffen.

### Beispiel 5:

### Untersuchungen zur Bleichung von Ölen durch eine wässrige Raffination mit einer Arginin-Lösung

Untersucht wurden ein mittels Hexanextraktion gewonnenes Sojaöl (SÖ), ein Rapsöl (RÖ) einer Winterzucht, Traubenkernöl (TKÖ) sowie Leindotteröl (LDÖ). Alle Öle waren klar, das SBÖ hatten eine strohgelbliche bis hellbräunliche Farbe, das RÖ eine oliv- grünliche Färbung, das TKÖ eine intensiv grüne Farbe und das LDÖ eine intensiv gelbliche Farbe mit einem diskreten Grünton. Die Versuche erfolgten an jeweils 5 Litern des Rohöls.

Die Analysen der Ölkennzahlen erfolgte gemäß dem Beispiel 1, die Bestimmung des Chlorophyll erfolgten mit einem Lovibond PFX1-995 (Tintometer, UK).

Die Öle wiesen die folgenden Ölkennzahlen auf, für SÖ: Phosphor 380 ppm (mg/kg), Calcium 84 ppm (mg/kg), Magnesium 56 ppm (mg/kg), Eisen 17 ppm (mg/kg), Säurezahl 1,4 Gew-%; für RÖ: Phosphor 8,3 ppm (mg/kg), Calcium 37 ppm (mg/kg), Magnesium 8 ppm (mg/kg), Eisen 4 ppm (mg/kg), Säurezahl 0,6 Gew-%, für TKÖ: Phosphor 54 ppm (mg/kg), Calcium 15 ppm (mg/kg), Magnesium 8 ppm (mg/kg), Eisen 3 ppm (mg/kg), Säurezahl 0,8 Gew-% und für LDÖ: Phosphor 28 ppm (mg/kg), Calcium 33 ppm (mg/kg), Magnesium 12 ppm (mg/kg), Eisen 2 ppm (mg/kg), Säurezahl 0,5 Gew-%.

Aufgrund eines Phosphorgehaltes von > 15 ppm (mg/kg) wurden das SBÖ, TKÖ und LDÖ einer Raffination mit Phosphorsäure (85%ig, Zusatz 0,3 Vol-%) unterzogen, wobei der Eintrag mit einem Homogenisator (Ultrathurrax T50, 8000rpm, 3 Minuten) erfolgte. Die Phasenseparation erfolgte nach 30 Minuten mittels einer Becherschleuder (4000 rpm, 5 Minuten).

Die Probe auf Schleimstoffe (Versuchsdurchführung gemäß Beispiel 1) von RÖ und der vorgereinigten Öle wies halbfeste Emulsionsschichten mit einem Volumen von 0,5 ml, bzw5,5 Vol-% bei SBÖ, 0,3 ml, bzw. 3,3 Vol-% bei RÖ, 0,6 ml, bzw. 6,4 Vol-% bei TKÖ und 0,5 ml, bzw. 5,0 Vol-% bei LDÖ auf. Es erfolgte eine wässrige Raffination mit Natrium-Carbonat-pentahydrat (Konzentration 20 Gew-%, Volumenzusatz 5-Vol-%) bei einem Eintrag mit dem vorbeschriebenen Homogenisator über 5 Minuten mit 10.000rpm. Die Phasentrennung erfolgte, wie zuvor beschrieben. Da bei TKÖ die Probe auf Schleimstoffe mit einer Emulsionsschicht von 2,0 Vol% erneut positiv ausfiel, wurde der Raffinationsschritt bei diesem Öl wiederholt. Anschließend zeigte die Probe auf Schleimstoffe bei allen Ölen eine Emulsionsschicht, die < 0,1ml bzw. <1,0 Vol-% war. Die hierin enthaltenen Phosphorwerte betrugen für: SBÖ 14 ppm (mg/kg), RÖ 5 ppm (mg/kg), TKÖ 9 ppm (mg/kg) und für LDÖ 4 ppm (mg/kg). Die Hälfte der erhaltenen Ölphasen wurde einer Raffination mit einer Arginin-Lösung (0,3 molar, Zugabemenge 5 Vol-%), die mit den vorbeschriebenen Homogenisator über 5 Minuten homogenisiert (10.000rpm) wurde, unterzogen. Die Phasentrennung erfolgte wie zuvor beschrieben. Die erhaltenen Öl-Phasen hatten die folgenden Kennzahlen, für SÖ: Phosphor 1,3 ppm (mg/kg), Calcium 0,08 ppm (mg/kg), Magnesium 0,03 ppm (mg/kg), Eisen 0,01 ppm (mg/kg), Säurezahl 0,08 Gew-%; für RÖ: Phosphor 0,8 ppm (mg/kg), Calcium <0,02 ppm (mg/kg), Magnesium <0,02 ppm (mg/kg), Eisen <0,02 ppm (mg/kg), Säurezahl 0,02 Gew-%, für TKÖ: Phosphor 3 ppm (mg/kg), Calcium 0,08 ppm (mg/kg), Magnesium <0,02 ppm (mg/kg), Eisen <0,02 ppm (mg/kg), Säurezahl 0,18 Gew-% und für LDÖ: Phosphor 1,2 ppm (mg/kg), Calcium 0,06 ppm (mg/kg), Magnesium <0,02 ppm (mg/kg), Eisen <0,02 ppm (mg/kg), Säurezahl 0,02 Gew-%. Die zweite Hälfte der vorgereinigten Öle wurden in Bechergläser aufgeteilt und mit 2 Bleicherden (Bleicherde 1: Tonsil Optimum 210 FF Zugabemenge 2-Gew%, Bleicherde 2: Tonsil Supreme 118 FF, Zugabemenge 2 Gew-%), bei einer Temperatur von 100°C und einem Vakuum von 1000 Pa über 60 Minuten gerührt. Anschließend Abtrennung der Feststoffe mittels Zentrifugation, wie vorbeschrieben, sowie Trocknung der Öle wie in Beispiel 1.

Die Öle wurden zum Ausgang, nach der Vorreinigung sowie nach der wässrigen Raffination mit Arginin und nach Bleicherdebehandlung bezüglich des Chlorophyll A - Gehaltes sowie der Lovibond Rot- (R) und Gelb- (Y) Farbwerte analysiert, Ergebnisse sind in Tabelle 5.1 bzw. in Tabelle 5.2 aufgeführt. Vom Rohöl sowie den mit Arginin und den mit Bleicherden raffinierten Ölfraktionen, wurden jeweils 2 Proben entnommen, die zunächt einer Vakuumtrocknung gemäß Beispiel 1 unterzogen wurden. Eine der Proben wurde eingefrohren (t0), die andere bei Raumtemperatur unter Luftabschluss und Tageslichbedingungen für 120Tage (120) stehen gelassen. Anschließend wurden die aufgetauten Proben t0 und die gelagteren Proben t 120 untersucht auf auf sekundäre Oxidationsprodukte (Ansisdinwertbestimmung, Versuchsdurchführung gemäß Unterschungsmethoden, Ergebnisse sind in Tabelle 5.3 aufgelistet) und den Tocopherolgehalt. Ferner erfolgten sensorische Prüfungen gemäß Beispiel 4, deren Ergebnisse in Tabelle 5.3 zusammengefasst sind (Berechnung gemäß Beispiel 4).

| Tabelle 5.1 | Chlorophyllgehalt (mg/kg) | | | | |
|---|---|---|---|---|---|
| | Rohöl | Nach Vorreinigung | Nach Argininraffination | Nach Bleicherde 1 | Nach Bleicherde 2 |
| SÖ | 58 | 4,9 | 0,02 | 0,03 | 0,02 |
| RÖ | 72 | 7,2 | 0,06 | 0,05 | 0,07 |
| TKÖ | 98 | 10,3 | 0,01 | 0,02 | 0,02 |
| LDÖ | 67 | 5,8 | 0,01 | 0,01 | 0,01 |

**Tabelle 5.2**

| | LOVIBOND | | | | |
|---|---|---|---|---|---|
| | Rohöl | Nach Vorreinigung | Nach Arginin-Raffination | Nach Bleicherde 1 | Nach Bleicherde 2 |
| SÖ | R18,4/ Y68 | R15,3/Y48,8 | R 2,2 / Y 6,3 | R 1,8 / Y 5,5 | R2,3 / Y5,8 |
| RÖ | R10,8/67,8 | R 11,2 Y 43,1 | R 6,2 Y 8,4 | R 5,8 / Y 9,5 | R 6,0 / Y 8,5 |
| TKÖ | R8,5/Y 70 | R 9,2 /Y 56,4 | R 6 / Y 26,3 | R 4 /Y 27,5 | R5 / Y25,2 |
| LDÖ | R24,3/Y70 | R12,2/Y51,6 | R 9 / Y 9,3 | R10 / Y 10,2 | R9 / Y 9,1 |

**Tabelle 5.3**

| | Anisidin | | | | Fehlaromen | | | |
|---|---|---|---|---|---|---|---|---|
| | SÖ | RÖ | TKÖ | LDK | SÖ | RÖ | TKÖ | LDK |
| Rohöl t0 | 4,2 | 3,8 | 2,1 | 2,5 | 16 | 14 | 12 | 19 |
| Rohöl t120 | 27,8 | 26,6 | 17,1 | 36,4 | 21 | 26 | 19 | 28 |
| NV t0 | 1,4 | 1 | 2,1 | 1,8 | 12 | 15 | 16 | 14 |
| NV t120 | 22,1 | 18,7 | 15,5 | 28,1 | 22 | 25 | 20 | 12 |
| NA t0 | 0,5 | 0,5 | 0,6 | 0,7 | 0 | 0 | 0 | 0 |
| NA t120 | 3,2 | 1,6 | 2 | 1,4 | 0 | 0 | 0 | 1 |
| NB1 t0 | 0,8 | 0,7 | 1 | 1,1 | 2 | 1 | 4 | 1 |
| NB1 t120 | 16,2 | 15,8 | 13,9 | 20,7 | 3 | 2 | 4 | 4 |
| Nb2 t0 | 0,5 | 0,7 | 0,7 | 0,6 | 0 | 2 | 2 | 0 |
| NB2 t120 | 13,7 | 15,9 | 14,1 | 18,7 | 3 | 4 | 2 | 3 |

| | | | | | | | | |
|---|---|---|---|---|---|---|---|---|
| NV = nach Vorreinigung; NA = nach nanoemulsiver Raffination mit einer Argininlösung, NB = nach Behandlung der vorgereinigten Öle mit Bleicherde 1 oder 2. | | | | | | | | |

### Ergebnisse:

Bei 3 der 4 untersuchten Öle lagen die Phosphorwerte über dem Grenzwert, sodass eine Vorreinigung mit einer Säurebehandlung erfolgte. Hiernach lag der Phosphatgehalt bei allen Ölen unter 15 ppm (mg/kg), bei allen vorgereinigten Ölen war die Schleimstoffprobe aber weiterhin positiv, sodass eine weitere Vorreinigung mit einer wässrigen Lauge erfolgt. Diese Behandlungsstufe musste bei einem Öl wiederholt werden, erst hiernach lag bei allen Ölen eine ausreichende Reduktion der Schleimstoffe gemäß den Prozesskennzahlen vor. Die Raffination dieser Öle mit einer wässrigen Argininlösung war mittels eines Intensivmischeintrags bei allen Ölen problemlos möglich. Ebenso war eine emulsionsfreie Phasentrennung bei allen Ölen möglich. Die erhaltenen Öle hatten einen Gelbton leicht- bis mittelgradiger Intensität, Die erreichte Farbe unterschied sich weder nach optischer Beurteilung noch mit dem Lovibond-Farbskalenvergleich von dem Farbeindruck bzw. den Farbskalenwerten, die bei den Ölen, die eine identische Vorreinigung durchlaufen hatten und anschließend mit einer Bleicherde behandelt wurden. Auch die erreichte Reduktion der absoluten Chlorophyllkonzentrationen war vergleichbar zwischen der Behandlung mit dem erfindungsgemäßen Verfahren und eine Bleichung mit einer Bleicherde.

Der Gehalt an sekundären Oxidationsprodukten konnte durch die Vorreinigung reduziert und durch eine anschließende wässrige Raffination mit einer Argininlösung bis zur Nachweisgrenze reduziert werden. Bleicherden führten ebenfalls zu einer weiteren Reduktion sekundärer Oxidationsprodukte aus dem vorgereinigten Öl. Im Verlauf von 120 Tagen kam es zu einem Anstieg sekundärer Oxidationsprodukte bei den unbehandelten Ölen, bei den vorgereinigten Ölen kam es ebenfalls zu einem deutlichen Anstieg. Bei vorgereinigten Ölen, die mit Bleicherden behandelt worden waren, kam es ebenfalls zu einem deutlichen Anstig von sekundären Oxidationsprodukten, während es bei Ölen nach einer nanoemulsiven wässrigen Raffination mit Arginin nur zu einem minimalen Anstieg kam. Bei den Rohölen lagen mehrere Fehgeruchs- und Fehlgeschmackscharakteristika vor. Nach eine Vorreinigung bestanden die Fehlaromen in geringerer Form weiter, hinzugekommen war eine Seifigkeit und ein adstrigierender sensorischer Effekte. Durch die Nachbehandlung mit einer nanoemulsiven Reinigung mit einer Argininlösung bzw. den Bleicherden konnte eine vollständige bzw. fast vollständige Reduktion der Fehlaromen erreicht werden. Im Verlauf kam es zu einem Anstieg der Fehlgeruchs- und Fehlgeschmackscharakteristika bei den Rohölen und den vorgereinigten Ölen. Bei Ölen, die nanoemulsiv raffiniert worden waren, kam es praktisch zu keiner Ausbildung von Fehlaromen, während es nach einer Behandlung mit Bleicherden zu Fehlgeruch- und Fehlgeschamckseindrücken im Verlauf kam.

In den abgetrennten wässrigen Phasen nach der Raffination mit Agrinin wurden Chlorophyll, Phospholipide, freie Fettsäuren und Tocopherole gefunden. Die Phasen hatten einen grün-gelben Farbton und einen moderigen bis würzigen Geruch. Wegen eines stark adstrigierenden Effekts, den diese wässrigen Lösungen im Mund auslössten, erfolgten hier keine sensorischen Prüfungen.

### Beispiel 6:

### Untersuchungen zur Desodorierung von Pflanzenölen

Untersucht wurden 6 Pflanzenöle, die aufgrund ihrer Gewinnungsbedingungen oder durch Alterungs- bzw. Lagerbedingungen eine bedeutsame Menge an Fehlgeschmacks- bzw. Fehlgeruchsstoffen aufweisen, bzw. ihre natürliche Geschmacksqualität nicht oder nicht mehr ausreichend aufwiesen. Hierzu wurde ein Sonnenblumenkernöl (SBK) verwandt, bei dem die Kerne ohne vorherige Schälung gepresst und anschließend mittels eines Hexanextraktionsverfahrens entölt wurden. Die hergestellten Ölfraktionen wurden zusammengeführt. Das Öl hatte eine bräunliche Färbung, es setzte sich eine ca. 8-Vol% braune Schleimphase nach 12 h Standzeit ab. Ferner wurde ein kaltgepresstes Rapsöl (kRÖ) untersucht, das in Fässern über 18 Monate gelagert war. Das Öl hatte eine intensiv braun-grüne Färbung und war leicht trüb, nach einer 10 stündigen Standzeit setzte sich 5-Vol% braune Schleimphase ab. Weiter wurde ein Sesamöl (SesÖ) mit einer gelblichbräunlichen Farbe untersucht. Weiter untersucht wurde ein heiß gepresstes Olivenöl (hOÖ), das über einen Zeitraum von 8 Monaten gelagert war. Es hatte ein intensiv olivfarbenes leicht trübes Aussehen. Weiterhin wurde ein kalt gepresstes Wallnußkernöl (WKÖ), das einen bräunlichen Farbton aufwies, verwendet.

Es wurden jeweils 1,5 kg der Roh-Öle raffiniert.

Die Öle wurden hinsichtlich Ölkennzahlen gemäß Beispiel 1 analysiert (Tabelle 6.1). Da der Grenzwert für Phosphat bei SBK, kRÖ und hOÖ überschritten war, erfolgte eine Vorreinigung mit Phosphorsäure (85-Vol-%, Zugabemenge 0,2%). Der Eintrag erfolgte mittels eines Ultrathurrax T18 (IKA, Deutschland) mit einer Umdrehungsfrequenz von 24 Tsd/rpm über 5 Minuten. Anschließend Phasentrennung mit einer Becherzentrifuge (3500 g) für 5 Minuten. Bei den 3 vorgereinigten Ölen (erreichte Phosphorwerte von 28 ppm (mg/kg) für SBK, 12 ppm (mg/kg) für kRÖ und 22 ppm (mg/kg) für HOÖ) und den anderen Ölen war die Probe auf Schleimstoffe (Ausführung gemäß Beispiel 2) positiv (SKB 4,3 Vol%, kRÖ 3,8Vol%, SesÖ 5,2 Vol%, hOÖ 4,8Vol%, WKÖ 6,2Vol%). Es erfolgte eine Vorreinigung des Sesam- und des Wallnußöls mit einer wässrigen (ionenarmes H₂O) Natrium-Metasilikat-Pentahydrat Lösung (20-Gew-%, Zugabemenge 3-Vol-%), die wie zuvor beschrieben mittels des Intensivmischers unter der gleichen Parametereinstellung in das Öl eingetragen wurde. Die Probe auf Schleimstoffe war war bei beiden Ölen weiterhin positiv (2,2 und 3,4Vol%). Diese Öle wurden, wie auch die übrigen Öle, mit einer wässrigen Natrium Carbonat-Lösung (25 Gew-%, Volumenzugabe 4 Vol-%) mittels eines Intensiveintrags raffiniert, der wie vorbeschrieben erfolgte. Die Phasentrennung erfolgte mit einer Becherzentrifuge, wie vorbeschrieben. Die Probe auf Schleimstoffe war bei allen Ölen anschließend negativ (< 1,0-Vol%) und die Phosphorwerte lagen bei allen so vorgereinigten Ölen bei < 10 ppm (mg/kg). Nachfolgend wurden alle Öle mit einer wässrigen (ionenarmes H₂O) Arginin-Lösung (0,3 molar, Volumenzusatz zwischen 1,5 und 4 Vol-%) mittels eines Intensiveintrags, wie zuvor beschrieben, homogenisiert. Anschließend Phasentrennung, wie vorbeschrieben, Analytik gemäß den Verfahren in Beispiel 1.

**Tabelle 6.1:**

| Raffinationsstufe | Phosphor [mg/kg] | FFA [Gew%] | Magnesium [mg/kg] | Kalium [mg/kg] | Calcium [mg/kg] | Schleimstoffprobe (Vol-%) |
|---|---|---|---|---|---|---|
| SBK - roh | 725 | 1,9 | 68 | 56 | 94 | 11,5 * |
| SBK - raffiniert | 2 | 0,02 | 0,05 | <0,02 | <0,02 | 0 |
| kRÖ - roh | 74 | 1,1 | 26 | 2,3 | 21 | 7,7 |
| kRÖ - raffiniert | 0,5 | 0,01 | <0,02 | <0,02 | <0,02 | 0 |
| SesÖ - roh | 9 | 0,43 | 6,4 | 0,5 | 8,6 | 5,2 |
| SesÖ - rafiniert | 0,5 | 0,01 | <0,02 | <0,02 | 0,03 | 0 |
| hOÖ - roh | 234 | 1,4 | 54 | 12 | 46 | 9,6 |
| hOÖ - raffiniert | 2 | 0,09 | 0,04 | <0,02 | <0,02 | 0 |
| WKÖ - roh | 12 | 0,6 | 12 | 1,8 | 15 | 6,2 |
| WKÖ - raffiniert | 0,5 | 0,07 | < 0,02 | < 0,02 | < 0,02 | 0 |

| | | | | | | |
|---|---|---|---|---|---|---|
| *keine freie Wasserphase mehr, das Volumen der halbfesten Emulsionsmasse übersteigt das zugegebene Wasservolumen | | | | | | |

Die Rohöle sowie die nanoemulsiv wässrig raffinierten Endprodukte, , wurden von 4 qualifizierten Prüfern entsprechend den Leitsätzen für Speisefette und -öle des Deutschen Lebensmittelbuches und gemäß des Vorgehens in Beispiel 4 bewertet, nachdem sie zuvor einer Vakuumtrocknung unterzogen worden waren.

Für die Bewertung der einzelnen Öle wurde der Median aller Verkostungsergebnisse genommen (Tabelle 6.2, vgl. hierzu auch Figur 1).

**Tabelle 6.2**

| | SBK - roh | SBK - raffiniert | hRÖ - roh | hRÖ - raffiniert | SesÖroh | SesÖraffiniert | WKÖroh | WKÖraffiniert |
|---|---|---|---|---|---|---|---|---|
| Saatigkeit | 2 | 4 | 2 | 4 | 2 | 3 | 2 | 4 |
| Nussigkeit | 1 | 2 | 0 | 3 | 0 | 0 | 3 | 5 |
| Fruchtigkeit | 0 | 0 | 0 | 0 | 0 | 0 | 0 | 1 |
| ranzig | 6 | 0 | 5 | 0 | 3 | 0 | 4 | 0 |
| holzig | 1 | 0 | 2 | 0 | 1 | 0 | 1 | 0 |
| stichig | 3 | 0 | 0 | 0 | 3 | 0 | 0 | 0 |
| moderig | 6 | 0 | 3 | 0 | 3 | 0 | 3 | 0 |
| adstringierend | 5 | 1 | 4 | 0 | 1 | 0 | 4 | 0 |
| bitter | 4 | 0 | 5 | 0 | 2 | 0 | 5 | 0 |
| Summe-Fehlaromen | 25 | 1 | 19 | 0 | 13 | 0 | 17 | 0 |

### Ergebnisse:

Die untersuchten gealterten und mit erheblichen Fehlgeruchs- bzw. Fehlgeschmacksstoffen belasteten Öle mussten aufgrund erhöhter Phosphatwerte und/oder einem positiven Ausfall der Schleimprobe, 1 oder 2 stufig vorgereinigt werden, hierdurch wurden die erforderlichen Prozesskennwerte erreicht. Die nanoemulsive Raffination mit einer Argininlösung war problemlos möglich, ebenso problemlos erfolgte die Separation der wässrigen Phasen, die bei allen Versuchsdurchführungen eine deutliche Trübung und eine grüne, grün-gelbliche oder gelb-bräunliche Farbe aufwiesen. Ferner hatten die wässrigen Phasen einen intensiven Pflanzengeruch, zum Teil mit einem moderigen bis stechenden Charakter. Die Aromen, die zu einer sensorischen Beurteilung eines Fehlgeruchs oder eines Fehlgeschmacks geführt haben, konnten bei allen untersuchten Ölen prakisch vollständig entfernt werden. Andererseits nahmen die positiv bewerteten Aromacharakteristka in der Wahrnehmungsintensität zu.

### Beispiel 7:

Untersuchungen zur Herstellung von Wasser-in-Öl-Emulsionen mittels Homogenisierung und deren Effekt auf das Bleichungs- und Desodorierungergebnis. Es wurden Batchverfahren mit einem Turbulenzrührgerät (SRT4 1500, Schwarzer, Deutschland) (V1 + V2) sowie einer Rotor-Stator-Dispergiermaschiene (Fluco, MS23, Fluid Kotthoff, Deutschland) (V3 + V4) untersucht und ein Mischsystem für einen kontinuierlichen Mischeintrag mittels einer inline-Dispergiereinheit (Fluko DMS2.2/26-10, Deutschland) mit 1 oder 3 konsekutiv angeorgneten Dispergiereinheiten (Spaltmaß 1mm), wie in Tabelle 7.1 angegeben (V5 - V10), bei einer Homogenisierungen mit verschiedenen Durchflussraten,. Die jeweils berauchte Energiemenge wurde dokumentiert. Zur Emulsionsherstellung wurde bei dem Batchverfahren die gesamte wässrige Phase dem Öl (100 kg), das in einem Behälter mit einem Bodendurchmesser von 47cm vorlag, vor Inbetriebnahme des Homogenisierers hinzugegeben und das Dispergierwerkeug auf einen Bodenabstand von 10 cm eingestellt. Das inline-Mischsystem wurde mittels zweier Dosierpumpen, zur kontinuierlichen Förderung der Wasserphase und der Ölphase, durchströmt, die Flussraten der Ölphase sind in der Tabelle 7.1 angegeben. Die Hinzumischung der Wasserphase erfolgte im angegebenen Verhältnis, wobei der Zulauf der Wasserphase unmittelbar vor der Dispergierkammer mündete.

Es wurde ein Sesam-Pressöl mit den folgenden Ölkennzahlen verwandt: Phosphor 25 ppm (mg/kg), Calcium 54 ppm (mg/kg), Magnesium 23 ppm (mg/kg), Eisen 7 ppm (mg/kg), Säurezahl 1,1 Gew-%, Chlorophyll 36 ppm (mg/kg). Mit den jeweiligen Mischschsystemen wurde eine Vorreinigung mit einer Natruim Carbonat-Lösung (20-Gew-%, Volumenzusatz 4%) durchgeführt, anschließend wurde die Wasserphase mit einem Separator (OTC 350, MKR, Deutschland) (Förderleistung 30L/h, Trommelfrequenz 10.000rpm) separiert. Bei den vorgereinigten Ölen erfolgte eine Probe auf das Vorhandensein von Schleimstoffen, ausgeführt wie in Beispiel 1 .Bei Versuch V1 war die Probe positiv (2,2 Vol%), daher wurde hier die Vorreinigungsstufe wiederholt. Anschließend war bei allen Ölen die Untersuchung auf Schleimstoffe negativ (<1,0 Vol%) und die ermittelten Phosphorwerte betrugen < 8 ppm (mg/kg). Hiernach wurden die Öle mit den gleichen Misch- bzw. Dispergierwerkzeugen und Einstellungen gemäß Tabelle 7.1 mit einer Argininlösung (0,4 molar, 3 Vol-%) gemischt bzw. homogenisiert. Anschließend erfolgte die Phasentrennung mit dem zuvor genannten Separator unter den gleichen Prozessbedingungen wie zuvor.

Die Bestimmungen der Ölkennzahlen erfolgten gemäß der Methodenbeschreibung. Die Öle wurden nach der Raffination getrocknet entsprechend Beispiel 1. Die Bestimmung des Chlorophyllgehaltes erfolgte gemäß Beispiel 5

**Tabelle 7.1:**

| Versuch | Prozes sart | Propeller-* Rotordurch-messer ** (mm) | Anzahl R/S-Einheiten | Umdrehun gsgeschwindigkeit | Dauer (Min)* Flussrate (L/Min)** | Energiemenge (W) |
|---|---|---|---|---|---|---|
| V1 | Batch | 100* | n. a. | 750 | 90 Min | 126 |
| V2 | Batch | 100* | n. a. | 1500 | 90 Min | 378 |
| V3 | Batch | 180* | 1 | 1250 | 5 Min | 134 |
| V4 | Batch | 180* | 1 | 1250 | 10 Min | 262 |
| V5 | inline | 74** | 1 | 1000 | 60 L/ Min | 120 |
| V6 | inline | 74** | 1 | 1000 | 20 L/Min | 240 |
| V7 | inline | 74** | 3 | 1000 | 60 L/ Min | 143 |
| V8 | inline | 74** | 3 | 1000 | 20 L/ Min | 52 |
| V9 | inline | 74** | 1 | 2800 | 60 L/ Min | 335 |
| V10 | inline | 74** | 1 | 2800 | 20 L/ Min | 126 |

| | | | | | | |
|---|---|---|---|---|---|---|
| n. a. = nicht anwendbar; R/S = Rotor-Stator | | | | | | |

Die Emulsionsbildung nach einem Mischeintrag der Arginin-Lösungen mit den verschiedenen Mischvorrichtungen wurde charakterisiert durch eine Türbungsmessung (InPro 8200, Mettler Toledo, Deutschland) sowie einer Bestimmung der Tröpfchengrößen mittels dynamischer Laserlichtstreuungsanalyse (DLS) (Zetasizer Nano S, Malvern, UK). Alle Proben wurden 1 und 15 Minuten nach dem jeweiligen Misch- bzw. Homogenisierungprozess analysiert. Die Trübungsintensität sowie der mittlere Durchmesser der Fraktion an Tröpfchendimensionen, die > 90% aller gemessenen Tröpfchen, die durch DLS ermittelt wurden, umfasste, sind in der Tabelle 7.2 wiedergegeben. Eine sensorische Prüfung erfolgte durch vier geschulte Untersucher, gemäß dem Vorgehen wie bei Beispiel 4. Die Intensität sämtlicher Fehlgeruchs- bzw. Geschmackseinstufungen für die jeweiligen Raffinate wurde zusammenaddiert und in der Tabelle 7.2 aufgelistet. Der maximal mögliche Wert für die Summe aller möglichen Fehlgeruchs- bzw. Fehlgeschmacksintensitäten betrug 50. Bei den Versuchen V1, V2, V4, V8 und V10 sowie vom Rohöl wurden Proben zur Untersuchung der Lagerungsstabilität gemäß Beispiel 2 entnommen (die raffinierten Öle wurden einer Vakuumtrocknung unterzogen), Bestimmung des Anisidin-Wertes für den Zeitpunt t0 und t120. Es wurde die Differenz zwischen dem Wert, der zum Zeitpunkt t0 und dem, der zum Zietpunkt t120 vorlag, berechnet. Bei diesen Proben wurde auch das Farbspektrum mittels der Lovobond-Methode bestimmt. Es wurde die Differenz aus den Werten für Rot (R) sowie für Gelb (Y) zwischen dem Wert der bei t0 und dem der bei t120 vorlag berechnet.

**Tabelle 7.2**

| | Trübungswert (FTU) | | Tröpfchengröße (µm) | | Phosphor ppm | Säurezahl | Chlorophyll | Fehlgeruch |
|---|---|---|---|---|---|---|---|---|
| | 1 Min | 15 Min | 1 Min | 15 Min | | Gew% | ppm | |
| V1 | 932 | 534 | 6,13 | 9,2 | 2,8 | 0,24 | 0,43 | 6 |
| V2 | 2411 | 820 | 1,23 | 4,93 | 1,4 | 0,13 | 0,12 | 3 |
| V3 | 3036 | 2588 | 0,48 | 0,61 | 1,1 | 0,05 | 0,01 | 0 |
| V4 | 3225 | 2886 | 0,38 | 0,59 | 1,2 | 0,02 | 0,01 | 0 |
| V5 | 1558 | 938 | 1,43 | 3,45 | 1,8 | 0,07 | 0,09 | 2 |
| V6 | 2866 | 988 | 0,92 | 1,05 | 1,3 | 0,05 | 0,05 | 2 |
| V7 | 2988 | 2556 | 0,43 | 0,67 | 0,8 | 0,01 | 0,02 | 0 |
| V8 | 3721 | 3101 | 0,38 | 0,49 | 0,9 | 0,01 | 0,01 | 0 |
| V9 | 3520 | 3145 | 0,45 | 0,69 | 1,0 | 0,01 | 0,01 | 0 |
| V10 | 3655 | 3005 | 0,27 | 0,38 | 0,05 | 0,01 | 0,01 | 0 |

### Ergebnisse:

Die vorgereinigten Ölphasen, die mit den unterschiedlichen Einmischverfahren erhalten wurden und bei denen die erforderlichen Prozesskennzahlen erreicht worden waren, ließen sich problemlos mit allen Einmischverfahren mit einer Arginin-Lösung mischen bzw. homogenisieren. Auch die anschließende Phasentrennung war ohne Emulsionsbildung in der Öl- oder Wasserphase möglich. Bei einem Mischeintrag mit einem Propellerrührer oder einer niedrigen Scherleistung des Dispergierwerkzeuges waren die erreichten Reduktionen von Fehlgeschmacks- bzw. Geruchstoffen sowie von Chloropyll geringer als bei einer nanoemulsiven Raffination , trotz einer geleichen oder höheren Energiemenge für den Mischeintrag. Höhere Werte lagen dabei auch für Phosphor undder Säurezahl vor. Korrespondierend war die Tröpfchengrößen bei Ölen, bei denen eine optimale Abreicherung von allen Ölkennzahlenparametern erreicht wurde, deutlich kleiner und zeigen keine relevante Tendenz zur Koaleszenz, sodass hier eine deutliche Steigerung der Emulsionsstabilität erreicht wurde.

Für das Rohöl wurde ein Gesamtwert der Fehlgeruchs- bzw. der Fehlgeschmacksintensitäten von 19 ermittelt. Mit einem Rühreintrag des erfindungsgemäßen Verfahrens konnte bereits eine erhebliche Abreicherung der Fehlgeruchs- bzw. Geschmacksstoffe erzielt werden. Durch eine nanoemulsive Raffination, bei der stablie Emulsionen mit Tröpfchengrößen, die noch nach 15 Minuten unter 1 µm betrugen, hergestellt wurden, war eine vollständige Entfernung der Fehlaromen aus den Ölen möglich. Die Wasserphasen waren trüb und hatten einen grünen Farbton. Die Trübung war stärker, wenn der nanoemulsive Reinigung mit einer hohen Scherrate oder mit einer längeren Kontaktzeit in der Dispergiereinheit erfolgt war. Alle Wasserphasen hatten einen intensiven holzigen und moderigen Geruch. Im Verlauf von 120 Tagen kam es bei dem Rohöl nach Lagerung bei Raumtemperatur und Lichtexposition zu eine deutlichen Zunahme sekundärer Oxidationsprodukte (Anisidin: + 17,5). Bei Ölen der Versuche V1 und V2 kam es einer geringen Zunahme (Anisidin: + 3,2 und + 2,1) während es bei den Versuchen V 4, V8 und V10 praktisch zu keiner Zunahme kam (Anisidin: + 0,6, + 0,4, +0,3). Bei dem so gelagerten Rohöl kam es zu einer Farbänderung (R + 5 / Y + 16). Bei den raffinierten Ölen änderte sich die Farbe nur gering (V1: R +2 / Y + 5) oder nur minimal (V2: R + 1 / Y +2; V4: R + 1 / Y + 1; V8: R +/- 0, Y -1; V10: R +/- 0 / Y - 2).

### Beispiel 8:

### Untersuchung zum Einfluss von Schleimstoffen auf die Homogenisierbarkeit von Lipidphasen

Für die Untersuchungen wurde ein Distelöl verwandt mit den Ölkennzahlen: Phosphor 25 ppm (mg/kg), Calcium 32 ppm (mg/kg), Magnesium 12 ppm (mg/kg), Eisen 3 ppm (mg/kg), Säurezahl 0,8 Gew-%, Chlorophyll 16 ppm (mg/kg). Die Prüfung auf Schleimstoffe (Durchführung gemäß Beispiel 1) wies eine Emulsionsphase mit einem Volumenanteil von 8,2 Vol-% auf. Für jeden Versuch wurde 1 kg des Rohöls für die verschiedenen Vorreinigungsstufen verwandt. Die Vorreinigungsstufen waren darauf ausgerichtet überwiegend phosphorhaltige Verbindungen oder nicht phosphorhaltige Schleimstoffe oder beide aus dem Öl zu entfernen. Die hiermit erzielten Ergebnisse in Bezug auf den Phosphatgehalt, die Probe auf Schleimstoffe und den Gehalt an freien Fettsäuren wurden wie in Beispiel 1 bestimmt, die hierbei entstehenden Tröpfchen in der Emulsion (1 Minute nach Eintragsende) sowie die Stabilität der Tröpfchen (15 Minuten nach Eintragsende) wurden mittels DLS (siehe Methodenbeschreibung) ermittelt. Die Bestimmung des Chlorophyllgehaltes der raffinierten Ölphasen erfolgte, wie zuvor beschrieben gemäß Methodenbeschreibung, nach Trocknung der Lipidphasen. Die Vorreinigungen erfolgten mit folgenden Verfahren: Versuch 1: Natriumhydoxid (1 molar, Zugabemenge 2 Vol-%), Versuch 2: Natriumhydrogencarbonat (10 Gew%, Zugabemenge 1,5 Vol%), Versuch 3: Natrium Carbonat 20 Gew.%, Zugabemenge 2 Vol%), Versuch 4: Phosphorsäure (85Gew%), Zugabemenge 0,2 Gew%) und nach Phasenseparation Natriumcarbonat (10 Gew%, Zugabemenge 2 Vol%), Versuch 5: Natrium Metasilikat (10 Gew%, Zugabemenge 1 Vol-%). Versuch 6: Zitronensäure (25 Gew%, Zugabemenge 1,0 Vol%) und nach Phasenseparation Natrium Carbonat (15 Gew%, Zugabemenge 3 Vol%), Versuch 7: Phosphorsäure (85 Gew%, Zugabemenge 0,3 Gew%) und nach Phasentrennung Natrium Carbonat (15 Gew%, Zugabemenge 2 Vol%).

Der Mischeintrag erfolgte bei allen Vorreinigungsstufen mit einem Ultrathurrax (T18, 24.000rpm) über eine Eintragsdauer von 5 Minuten. Im Anschluss an den wässrigen Vorreinigungsschritt erfolgte eine Phasenseparation mit einer Becherzentrifuge (3800rpm, 10 Minuten) und Entnahme von Proben zur Analytik. Hiernach wurde zu allen Ölphasen eine 0,3 molare Argininlösung (Zugabevolumen 2 Vol%) hinzugegeben und mit dem Ultrathurrax homogenisiert (24.000rpm, 5 Minuten). Anschließend Phasentrennung, wie zuvor beschrieben. Entnahme von Proben zur Analytik, sowie zur Chlorophyllbestimmung, welche nach Trocknung der Ölproben erfolgte.

### Ergebnisse:

Das untersuchte Öl hatte Phosphorwerte und eine Belastung mit Schleimstoffen, die über den Prozesskennzahlen lagen. Beim Versuch, das Rohöl mit einer Arginin-Lösung zu homogenisieren, entstand eine feste Emulsion. Es wurden verschiedene Vorreinigungsverfahren angewandt, mit denen es zu einer Reduktion von Schleimstoffen bzw. Phosphorverbindungen in der Ölphase kam. Dies ermöglichte bei Vorliegen eines noch deutlich positiven Nachweis von Schleimstoffen noch keine ausreichende Trennbarkeit einer Emulsion, die durch einen Intensivmischeintrag einer wässrigen Argininlösung entsteht, der Versuch 1 konnte daher nicht beendet werden. Bei Ölen, bei denen der Phosphorgehalt und/oder die Menge an Schleimstoffen nur gering über den Prozesskennzahlen lag, waren die mit den Arginin-Lösungen erzeugten Emulsionen wieder separierbar. Allerdings waren die hierin befindlichen Tröpfchendimensionen deutlich größer, als in Ölen, bei denen eine Abreicherung an phosphorhaltigen Verbindungen und Schleimstoffen durch eine Vorreinigung erfolgt war, die den Prozesskennzahlen entspricht. Durch das stufenweise vorgenommene nanoemulsive Raffinationsverfahren konnte bei allen Ölen eine erhebliche Reduktion von phosphorhaltigen Verbindungen, der Säurezahl und der Chlorophyllkonzentrationen erreicht werden. Die Abreicherung war aber wesentlich effizienter, wenn durch eine Vorreinigung Schleimstoffe und phosphorhaltige Verbindungen im Bereich der erfindungsgemäßen Prozessparameter lagen.

**Tabelle 8**

| Versuchsnummer | SP (Vol-%) | Phosphor 1 (ppm | Säurezahl 1 (Gew-%) | Phosphor 2 (ppm | Säurezahl 2 (Gew-%) | Tröpchengröße (µm) | | Chlorophyll (ppm) |
|---|---|---|---|---|---|---|---|---|
| | | | | | | 1 min. | 15 min- | |
| 1 | 6,6 | 18,8 | 0,25 | n. a. | n. a. | n. a. | n. a. | n. a. |
| 2 | 3,5 | 18,1 | 0,48 | 5,3 | 0,23 | 1,3 | 4,6 | 2,32 |
| 3 | 2,8 | 9,5 | 0,32 | 3,1 | 0,18 | 0,89 | 1,56 | 2,11 |
| 4 | 1,8 | 4,6 | 0,88 | 1,8 | 0,21 | 0,65 | 0,98 | 1,62 |
| 5 | 1,1 | 16,6 | 0,61 | 2,9 | 0,15 | 0,68 | 1,23 | 3,2 |
| 6 | < 1,0 | 3,2 | 0,32 | 1,4 | 0,01 | 0,39 | 0,48 | 0,06 |
| 7 | <1,0 | 2,8 | 0,21 | 0,5 | 0,01 | 0,25 | 0,34 | 0,01 |

| | | | | | | | | |
|---|---|---|---|---|---|---|---|---|
| n. a. = nicht anwendbar, da Ölemulsion nich trennbar SP = Probe auf Präsenz von Schleimstoffen Säurezahl 1 = Anzahl der Säuregruppenäquvalente des Öls nach erfolgter Vorreinigung Phosphor 1 = Phosphorgehalt des Öls nach erfolgter Vorreinigung Säurezahl 2 = Anzahl der Säuregruppenäquvalente des Öls nach nanoemulsiver Raffination mit einer Argininlösung Phosphor 2 = Phosphorgehalt des Öls nach nanoemulsiver Raffination mit einer Argininlösung | | | | | | | | |

### Beispiel 9

### Untersuchung zur Verwendung von Nanoemulsionen zur Desodorierung und Bleichung von Tierfetten

Tierfett aus einer Hexanextraktion von Tierkörperfett (K1) mit einer dunkelbraunen Farbe und einem stechend-fauligen sowie ranzigen Geruch wurde auf die Öl-Kennzahlen untersucht: Phosphor 5,2 ppm (mg/kg), Calcium 12,4 ppm (mg/kg), Magnesium 4,3 ppm (mg/kg), Eisen 3,1 ppm (mg/kg), Säurezahl 0,4 Gew-%. Die Untersuchung auf Schleimstoffe (Durchführung gemäß Beispiel 1) zeigte eine vollständige Emulsion der Wasserphase (9,0 Vol%). 3 kg des Tierfetts wurden auf 45°C erhitzt und mit einer Mischung aus Schwefel-/ und Phosphorsäure (v:v, 20:80 95Gew%/85Gew%, Zugabemenge 1 Vol%) versetzt. Es erfolgte eine Homogenisierung mit einem Ultrathurrax T25 (25.000rpm) über 8 Minuten. Nach einer Standzeit von 30 Minuten erfolgte eine Phasenseparation mit einem Separator (OTC 350, MKR, Deutschland, Durchsatzmenge 10l/h, Trommelfrequenz 10.000rpm). Es wurde ein klares Öl erhalten, sowie eine dunkel-braune viskose Wasserphase. Das Öl hatte weiterhin eine dunkelbraune Farbe, der Geruch war nur leicht reduziert, hinzugekommen waren ein Schwefel- und ein Säuregeruch. Die erneute Probe auf Schleimstoffe zeigte eine Emulsionsschicht mit einem Volumen von 4,3 Vol-% (Versuchsdurchführung gemäß Beispiel 1). Daher Durchführung einer weiteren Vorreinigung mit einer wässrigen Lösung, enthaltend Natrium-Metasilikat (20 Gew%, Zugabemenge 3 Vol-%), die mit dem Ultrathurrax über 5 Minuten mit dem Öl homogenisiert wird. Anschließend Phasenseparation mit dem zuvor beschriebenen Separator unter gleichen Prozessbedingungen. Die Lipidphase wured abgetrennt und ein mäßig trübes Öl wurde erhalten, dessen Farbcharakter sich nicht geändert hat und weiterhin die initial vorhandene Belastung an Fehlaromen aufweist. Bei diesem Öl lagen die folgenden Ölkennzahlenwerte vor: Phosphor 3 ppm (mg/kg), Calcium 0,2 ppm (mg/kg), Magnesium 0,05 ppm (mg/kg), Eisen 0,02 ppm (mg/kg), Säurezahl 0,15 Gew-%. Die Probe auf Schleimstoffe war negativ (< 1,0Vol-%). Zur Verbesserung der Extraktion von Farb- bzw. Geruchsstoffen wurden zu je 200g des vorgereinigten Öls die folgenden Nanoemulsionen, bestehend aus einer wässrigen Argininlösung (0,6 molar), in die die nachfolgenden Carbonsäuren über einen Zeitraum von 12 h bei 35°C unter kontinuierlichem Rühren gelöst worden waren: 1) Ölsäure (0,2molar) und Naphtensäure (0,05 molar); 2) Palmetoleinsäure (0,1molar) und Caprylsäure (0,2molar); 3) Caprinsäure (0,1 molar) und Benzol-1,2,4,5-tetracarbonsäure (0,05 molar) und Embonsäure (0,1molar); 4) Hydroxy-Phenylpropionsäure (0,2 molar) und Syringicsäure (0,2 molar), hinzugegeben. Zum Vergleich wurden analog die Versuche 5) wässrige Argininlösung (0,6molar), 6) wässrige Lösung von Natriumhydroxid (1 molar) und 7) Wasserphase ohne Zusätze, durchgeführt

Die Nanoemulsionen und die Vergleichslösungen wurden in einem Volumenverhältnis von 5 Vol% den vorgereinigten Ölphasen hinzugegeben und anschließend mit einem Ultrathurrax T18 (24000rpm) über 8 Minuten homogenisiert. Anschließend Phasenseparation mit einer Zentrifuge (4000rpm/10 Minuten). Die Lipidphase wurde abgetrennt und von den erhaltenen Ölphasen wurden Proben zur Analytik sowie zur Verkostung und Farbanalyse genommen. Für letztere wurden die Öle zunächst einer Vakuumtrocknung gemäß Beispiel 1 unterzogen. Die Verkostung des Ausgangsmaterials erfolgte abweichend zu den vorherigen Untersuchungen nur durch eine eingehende Geruchsprüfung sowie begleitend der senorischen Wirkung eines Tropfens der auf die Zunge der untersuchenden Person gegeben wurde. Für die Charakterisierung der Fehlaromen wurden weitere Attribute (Tabelle 9.2) vergeben. Der Ablauf der sensorischen Prüfung erfolgte ansonsten wie in Bsp. 4 dargelegt. Die Farbe der Lipidphase wurde nach der EBC-Farbskalierung spektrometrisch mit einem Lovibond ColorPod bestimmt (Bandbreite 2-27). Die Farbskalierung des Tierkörperfetts betrug 24.

**Tabelle 9.1**

| Versuchsnummer | Phosphor (ppm) | Säurezahl (Gew%) | Calcium (ppm) | Lovibond EBC |
|---|---|---|---|---|
| 1) | 0,8 | 0,02 | < 0,02 | 6 |
| 2) | 0,6 | 0,04 | < 0,02 | 6 |
| 3) | 0,9 | 0,06 | < 0,02 | 7 |
| 4) | 0,6 | 0,04 | < 0,02 | 6 |
| 5) | 0,7 | 0,01 | < 0,02 | 7 |
| 6) | 2,5 | 0,12 | 0,2 | 8 |
| 7) | 3,1 | 0,15 | 0,2 | 8 |

**Tabelle 9.2**

| | Tierfett-roh | V1) | V2) | V3) | V4) | V5) | V6) | V7) |
|---|---|---|---|---|---|---|---|---|
| chemisch | 4 | 0 | 0 | 0 | 0 | 0 | 3 | 3 |
| fischig | 7 | 1 | 0 | 0 | 1 | 2 | 4 | 5 |
| sauer | 2 | 0 | 0 | 0 | 0 | 0 | 0 | 1 |
| ranzig | 7 | 0 | 1 | 0 | 0 | 0 | 3 | 3 |
| seifig | 2 | 0 | 0 | 0 | 0 | 0 | 4 | 2 |
| stichig | 5 | 1 | 0 | 0 | 0 | 1 | 0 | 0 |
| moderig | 6 | 0 | 1 | 0 | 0 | 1 | 2 | 0 |
| adstringierend | 6 | 0 | 0 | 0 | 1 | 1 | 2 | 3 |

### Ergebnisse (Numerische Ergebnisse sind in den Tabellen 9.1 und 9.2 zusammengefasst):

In der lösungsmittelextrahierten Tierfettphase lagen relevante Mengen an Schleimstoffen sowie ein moderater Anteil an phosphorhaltigen Verbindungen vor. Durch die Vorreinigung konnten die Schleimstoffe und der Phosphorgehalt auf das erforderliche Niveau der Prozesskennzahlen abgesenkt werden. Dabei kam es auch zu einer Entfernung von Fettsäuren auf < 0,2 Gew%, sodass zur Verbesserung der nanoemulsiven Raffination mit einer Argininlösung Nanoemulsionen bereitgestellt und mittels eines Intensivmischers eingebracht wurden. Die Phasentrennung war bei allen entstandenen Emulsionen problemlos möglich. Die abgetrennten Wasserfraktionen waren stark trüb und hatten eine bräunliche Farbe und einen intensiven und unangenehmen Geruch. Die erhaltenen Ölkennzahlen sind in Tabelle 9.1 wiedergegeben.

Die nanoemulsive wässrige Raffination der vorgereinigten Öle bewirkte, wie auch bei einer wässrigen Raffination mit einer Argininlösung, eine sehr gute Reduktion von hierin verbliebenem Phosphor und säuregruppentragenden Verbindungen. Die wässrige Raffination mit Arginin bewirkte eine deutliche und gegenüber einer wässrigen Raffination mit einer Lauge oder neutralem Wasser überlegene Reduktion der Farbpigmente sowie von Fehlgeruchs- bzw. Geschmacksstoffen. Durch eine Intensivmischung der vorgereinigten Ölphase mit einer Nanoemulsion konnte eine weitere Reduktion von Farb- Geruchs- bzw. Geschmacksstoffen erreicht werden.

### Beispiel 10

### Großtechnische Anwendung des wässrigen Raffinationsverfahrens.

2000kg eines Soja-Pressöls mit den Ölkennzahlen: Phosphor 37 ppm (mg/kg), Calcium 5,2 ppm (mg/kg), Magnesium 2,9 ppm (mg/kg), Eisen 1,4 ppm (mg/kg), Säurezahl 0,85 Gew%, Chlorophyll 8,2ppm (mg/kg), wird aufgrund des Phosphatwertes von > 15mg/kg einer Säureentschleimung mittels einer Zitronensäurelösung (8 Gew-%, Volumenzusatz 3 Vol-%) behandelt. Das Rohöl sowie die wässrigen Raffinationsflüssigkeiten waren auf 28 °C temperiert. Die Mischung erfolgt mit einem in-line Rotor-Stator-Schermischer (Fluco DMS 2.2/26-10, Fluid Kotthoff, Deutschland). Es wurde eine Umdrehungsfrequenz des Rotordispergierwerkeugs von 2500 rpm eingestellt. Die Zufuhr von Öl (Vorlagetank 1) und der Wasserphase (Vorlagetank 2) erfolgt kontinuierlich durch Exzenterschneckenpumpen (PCM EcoMioneau C, Typ MM25C6S, sowie Typ MM1C12S, Deutschland) in einem durch einen Umrichter einstellbaren Dosierverhältnis. Es wurde ein Zzulaufvolumen der Ölphase von 2,5m³/h festgelegt. Die Wasserphase wurde durch ein Y-Rohrstück unmittelbar vor dem Dispergierwerkzeug hinzudosiert, das Dosisverhältnis wurde, wie oben angegeben, eingestellt. Nach der Intensivmischung wurde die resultierende Wasser-in-ÖlEmulsion über eine Rohrleitung in den Vorlagetank 3 eingelassen, der als Volumenpuffer diente. Aus diesem wurde mittels einer Förderpumpe (Förderleistung von 3 m³/h), die Emulsion unmittelbar in einen Tellerseparator (AC 1500-430 FO, Flottweg, Deutschland) gepumpt, der auf eine Trommeldrehzahl von 6600U/min (max. Zentrifugenbeschleunigung 10.000 g) eingestellt war. Das Öl hatte nach Austritt aus dem Separator eine Temperatur von 32° bis 35°C und wurde über eine Rohrleitung in den Vorlagetank 4 gepumpt. Das mit Zitronensäure raffinierte Öl wies in der Probe auf Schleimstoffe, die wie in Beispiel 1 durchgeführt wurde, eine halbfeste Emulsionsschicht von 0,3 ml (3,4 Vol-%) auf, sodass ein weiterer Raffinationsschritt mit Natriumhydrogencarbonat (20 Gew-%, Volumenzusatz 4 Vol-%) mit der vorbeschriebenen Sequenz einer inline Homogenisierung (hiernach Einleitung in den Vorlagetank 5) und anschließender Phasenseparation mit dem Separator bei gleichen Einstellungen für die Dispergiereinheit sowie für die Volumendurchsätze und Temperaturbedingungen durchgeführt wurde. Die Ölphase wurde nach der Phasenseparation in den Vorlagetank 6 gepumpt (Temperatur 35°C). Das raffinierte Öl wies die folgenden Ölkennzahlen auf: Phosphor 1,8 ppm (mg/kg), Calcium 0,09 ppm (mg/kg), Magnesium 0,05 ppm (mg/kg), Eisen 0,02 ppm (mg/kg), Säurezahl 0,23 Gew%, die Probe auf Schleimstoffe zeigte nur ein dünnes Häutchen an der Phasengrenze (< 1,0 Vol-%).

Es erfolgte eine nanoemulsive Raffination mit einer wässrigen (ionenarmes Wasser) Argininlösung (0,4 molar; Volumenzusatz 2 Vol-%) mit der vorbeschriebenen Dosiereinheit sowie der in-line Homogenisier- (Ölaufnahme in Vorlagetank 7) und Separationseinheit bei unveränderten Einstellungen der Dispergiereinheit und des Separators. Das erhaltene raffinierte Öl wurde in den Vorlagetank 8 gepumpt und hatte eine Temperatur von 37°C.

Zur Prozessüberwachung wurde der Emulsionsgrad mit einer kontinuierlichen Messung der Trübung des Reaktionsgemisches in Vorlagetank 7 monitoriert, indem die Messsonde eines Turbibimetriemesssystem (InPro 8200, Mettler Toledo, Deutschland) in das Reaktionsgemisch eingetaucht war. Intermittierend wurden Proben zur Messung der im Reaktionsgemisch vorliegenden Tröpfchengrößen entnommen. Diese Proben wurden nach 1 Minute und 15 Minuten mit einem DLS-Verfahren gemäß Beispiel 7 gemessen. Die Bestimmung der Öl-Kennzahlen sowie die Bestimmung des Vorhandenseins von Schleimstoffen und die Bestimmung des Chlorophyllgehaltes erfolgten gemäß den Beispielen 1, 2 und 5. Eine Prüfung auf Fehlgeruchs- und -Geschmacksstoffe erfolgte durch 4 geschulte Untersucher gemäß Beispiel 4, das Testergebnis wurde zusammengefasst gemäß Beispiel 7. Die Bestimmung von 3-MCPD-Esthern sowie Tocoperolen erfolgte gemäß der Bereibungen unter Messmethoden.

### Ergebnisse:

Das Rohöl, welches die Prozesskennzahlen nicht erfüllte, konnte mittels zweier Vorreinigungsschritte, die mittels einer Intensivmischung in einem kontinuierlichen Prozessbetrieb erfolgten, auf die erforderlichen Prozesskennzahlen von Schleimstoffen abgereichert werden. Eine kontinuierliche erfolgende nanoemulsive Raffination mit einer wässrigen Argininlösung war problemlos möglich, unter Erhalt einer sehr feinen und auch stabilen Emulsion. Die Trübung der mit einer Argininlösung homogenisierten Ölemulsion betrug zwischen 3600 und 3900 FTU. Die DLS-Messung dokumentierte Tröpfengrößen zwischen 0,25 und 0,31µm nach einer Minute und zwischen 0,35 und 0,41µm nach 15 Minuten Standzeit. Diese Wasser-in-Öl-Emulsion konnte mit einem Separator in eine Öl- und eine Wasserphase separiert werden. Die Ölphase war weitestgehend von Begleitstoffen bereinigt worden und wies die folgenden Ölkennzahlen auf: Phosphor 0,7 ppm (mg/kg), Calcium <0,02 ppm (mg/kg), Magnesium <0,02 ppm (mg/kg), Eisen <0,02 ppm (mg/kg), Säurezahl 0,05 Gew-%, Chlorophyll 0,02 ppm (mg/kg). Die Summe der Fehlgerüche bzw. eines Fehlgeschmacks für das Rohöl betrug 18. Nach der Vorreinigung betrug die Summe 12, wobei als neuer Fehlgeschmack eine Seifigkeit (Intensitätsgrad 3) beschrieben wurde. Nach der nanoemulsiven Raffination mit der Arginin-Lösung betrug die Summe an Fehlaromen 0. Die positiv gewerteten Charakteristica Saatigkeit und Nussigkeit waren intensiver wahrnehmbar (Summe des Rohöls 4, Summe des raffinierten Öls 8). Das Öl war optisch und sensorisch einwandfrei und geeignte für einen Verzähr. 3-MCPD-Ester konnten nicht nachgewiesen werden, Der Gehalt anTocopherole betrug im Rohöl 522mg/kg und im nanoemulsiv gereinigten Öl 463 mg/kg.

## Patentansprüche

1. Verfahren zur Reduktion von Geruchsstoffen und/oder Farbstoffen aus einer Lipidphase umfassend die folgenden Schritte:
a) Bestimmen des Phosphorgehalts der Lipidphase und Untersuchung auf die Präsenz von Schleimstoffen in der Lipidphase, und
b) Durchführen eines Vorreinigungsschrittes bis die Untersuchung auf die Präsenz von Schleimstoffen negativ ausfällt und ein Phosphorwert kleiner oder gleich 15 mg/kg ist, und
c) Versetzen der Lipidphase mit einer wässrigen Phase, die eine Substanz enthält, die mindestens eine Amidingruppe oder mindestens eine Guanidingruppe aufweist und die einen Verteilungskoeffizienten zwischen n-Octanol und Wasser von K_{OW} < 6,3 aufweist, und
d) Herstellung einer Intensivmischung aus der Lipidphase und der wässrigen Phase, wobei eine Intensivmischung vorliegt, wenn die Wassertröpfchen in der Lipidphase einen mittleren Durchmesser von 0,01 bis 20 µm haben; und
e) Durchführung einer zentrifugalen Phasentrennung und Abtrennung der wässrigen Phase, enthaltend die herausgelösten Geruchs- und/oder Farbstoffe; und
wobei die Lipidphase Öle, Fette oder Biodiesel sind,
wobei die eine Substanz, die mindestens eine Amidingruppe oder mindestens eine Guanidingruppe aufweist, Arginin, 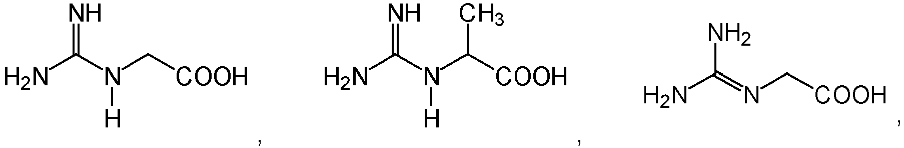 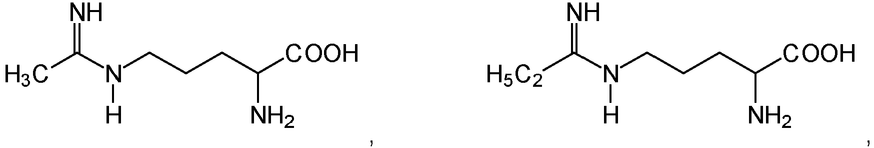 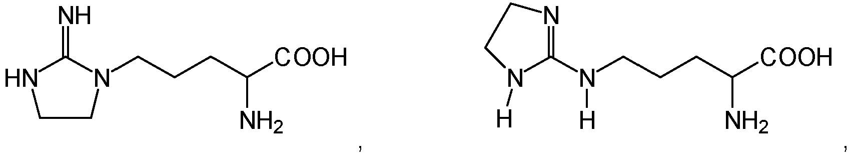 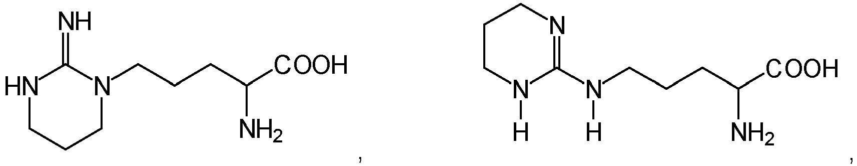 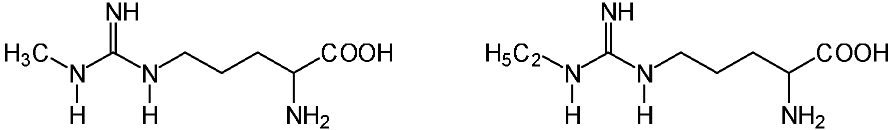 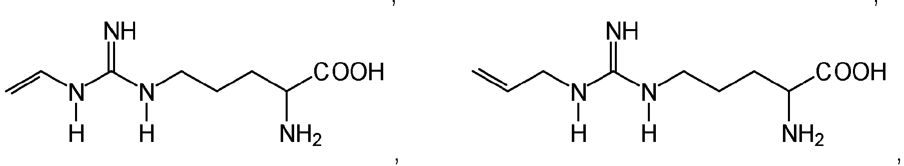 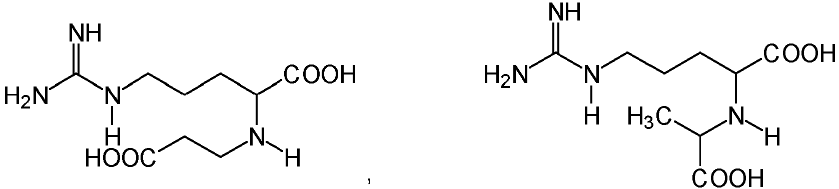 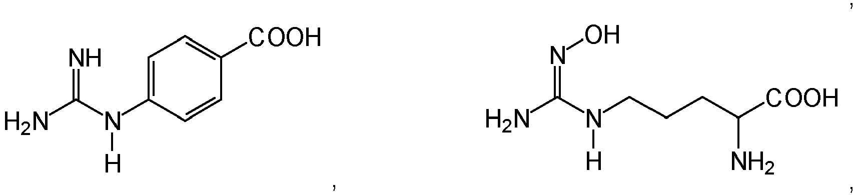 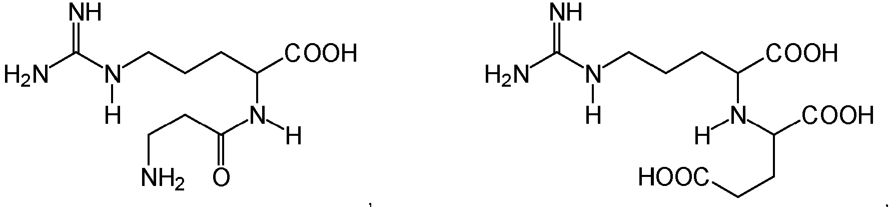 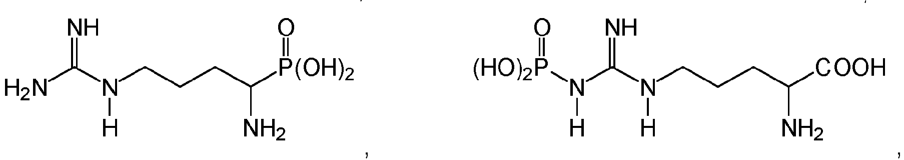 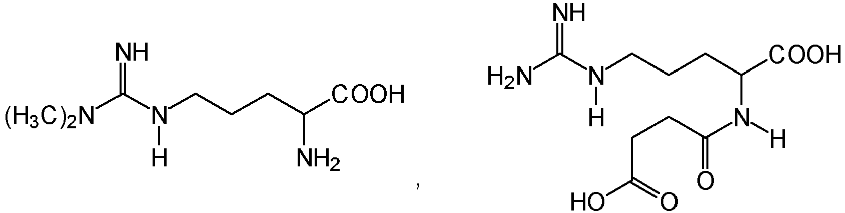 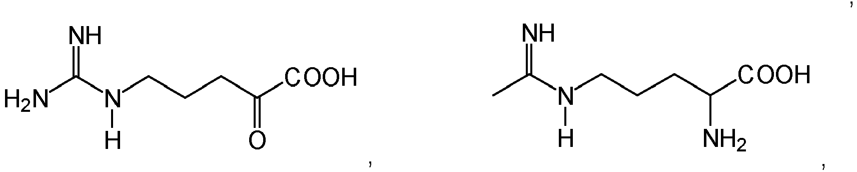
oder eine Verbindung der allgemeinen Formel (I) oder (II) ist 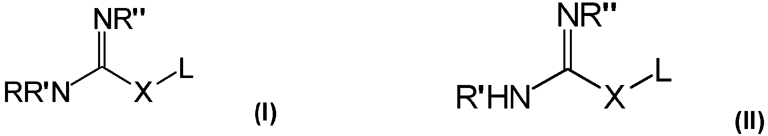 worin
R, R', R", R‴ und R"" unabhängig voneinander bedeuten: -H, -OH, -CH=CH₂, -CH₂-CH=CH₂, -C(CH₃)=CH₂, -CH=CH-CH₃, -C₂H₄-CH=CH₂, -CH₃, -C₂H₅, -C₃H₇, -CH(CH₃)₂, -C₄H₉, -CH₂-CH(CH₃)₂, -CH(CH₃)-C₂H₅, -C(CH₃)₃, **-**C₅H₁₁, -CH(CH₃)-C₃H₇, -CH₂-CH(CH₃)-C₂H₅, -CH(CH₃)-CH(CH₃)₂, -C(CH₃)₂-C₂H₅, -CH₂-C(CH₃)₃, -CH(C₂H₅)₂, -C₂H₄-CH(CH₃)₂, -C₆H₁₃, -C₇H₁₅, cyclo-C₃H₅, cyclo-C₄H₇, cyclo-C₅H₉, cyclo-C₆H₁₁, -PO₃H₂, -PO₃H⁻, -PO₃²⁻, -NO₂, -C=CH, -C≡C-CH₃, -CH₂-C≡CH, -C₂H₄-C≡CH, -CH₂-C≡C-CH₃,
oder R' und R" zusammen eine der folgenden Gruppen bilden: -CH₂-CH₂-, -CO-CH₂-, -CH₂-CO-, -CH=CH-, -CO-CH=CH-, -CH=CH-CO-, -CO-CH₂-CH₂-, -CH₂-CH₂-CO-, -CH₂-CO-CH₂- or -CH₂-CH₂-CH₂-;
X für -NH-, -NRʺʺ-, -O-, -S-, -CH₂-, -C₂H₄-, -C₃H₆-**,** -C₄H₈- oder -C₅H₁₀- steht oder für eine C1 bis C5 Kohlenstoffkette, welche mit einem oder mehreren der folgenden Reste substituiert sein kann: -F, -Cl, -OH, -OCH₃, -OC₂H₅, -NH₂, -NHCH₃, -NH(C₂H₅), -N(CH₃)₂, -N(C₂H₅)₂, -SH, -NO₂, -PO₃H₂, -PO₃H⁻, -PO₃²⁻, -CH₃, -C₂H₅, -CH=CH₂, -C=CH, -COOH, -COOCH₃, -COOC₂H₅, -COCH₃, -COC₂H₅, -O-COCH₃, -O-COC₂H₅, -CN, -CF₃, -C₂F₅, -OCF₃, -OC₂F₅;
L einen hydrophilen Substituenten bedeutet ausgewählt aus der Gruppe bestehend aus:
-NH₂, -OH, -PO₃H₂, -PO₃H⁻, -PO₃²⁻, -OPO₃H₂, -OPO₃H⁻, -OPO₃²⁻, -COOH, - COO⁻, -CO-NH₂, -NH₃⁺, -NH-CO-NH₂, -N(CH₃)₃⁺, -N(C₂H₅)₃⁺, -N(C₃H₇)₃⁺, -NH(CH₃)₂⁺, -NH(C₂H₅)₂⁺, -NH(C₃H₇)₂⁺, -NHCH₃, -NHC₂H₅, -NHC₃H₇, -NH₂CH₃⁺, -NH₂C₂H₅⁺, -NH₂C₃H₇⁺, -SO₃H, -SO₃⁻, -SO₂NH₂, -CO-COOH, -O-CO-NH₂, -C(NH)-NH₂, -NH-C(NH)-NH₂, -NH-CS-NH₂, -NH-COOH,

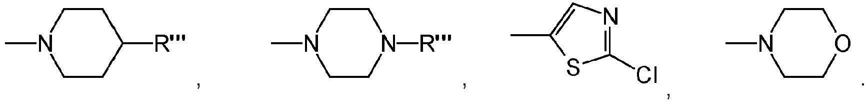

2. Verfahren gemäß Anspruch 1, wobei es sich bei den Schleimstoffen um Wachse, Wachssäuren, Lingine, Hydroxysäuren, Mykolsäure, Fettsäuren mit cyclischen Kohlenwasserstoff-Strukturen, wie die Shikimisäure oder 2-hydroxy-11-cyclohepttylundeicansäure, Mannosterylerythritol-Lipide, Carotine, Carotinoide, Chlorophylle, sowie deren Abbauprodukte, Phenole, Phytosterole, ß-Sitosterol, Campesterol, Sigmasterol, Sterole, Sinapine, Squalene, Phytoöstrogene, Steroide, Saponine, Glycolipide Glyceroglycolipide, Glycerosphingolipide, Rhamnolipide, Sophrolipide, Trehalose-Lipide, Mannosterylerythritol-Lipide, Polysacharide, Pektine, Rhamnogalacturonane, Polygalacturonsäureester, Arabinane, Galactane, Arabinogalactane, Pektinsäuren, Amidopektine, Phospholipide, Phosphotidylinositol, Phosphatide, Phosphoinositol, langkettige oder zyklische Carbonverbindungen, Fettalkohole, Hydroxyfettsäuren, Epoxyfettsäuren, Glycoside, Liporoteine, Lignine, Phytat, Phytinsäure, Glucoinosilate, Proteine, Albumine, Globuline, Oleosine, Vitamin A, Vitamin B2, Vitamin B5, Vitamin B7, Vitamin B9, Vitamin B12, Vitamin D, Vitanmin E Vitamin K, Menachinon, Tannine, Terpenoide, Curcumanoide, Xanthone, Zuckerverbindungen, Aminosäuren, Peptide, Polypeptide, Kohlenhydrate und Glucogen handelt.

3. Verfahren gemäß Anspruch 1, wobei es sich bei den Schleimstoffen um Wachse, Wachssäuren, Fettalkohole, Phenole, Glycoside, Lipoproteine, freie Zucker, Lingine, Phytat bzw. Phytinsäure, Hydroxy- und Epoxyfettsäuren, Mykolsäure, Fettsäuren mit cyclischen Kohlenwasserstoff-Strukturen, wie die Shikimisäure oder 2-hydroxy-11-cyclohepttylundeicansäure, Rhamnolipide, Sophrolipide, Trehalose Lipide, Mannosterylerythritol Lipid, Squalen, Sterole, Sinapine, Vitamin A, Vitamin B2, Vitamin B5, Vitamin B7, Vitamin B9, Vitamin B12, Vitamin D, Vitanmin E und Vitamin K handelt.

4. Verfahren gemäß Anspruch 1 oder 2, wobei neben den Geruchsstoffen und Farbstoffen auch Geschmacksstoffe entfernt werden.

5. Verfahren gemäß einem der Ansprüche 1 - 4, wobei die Konzentration der wenigstens einen Substanz in der wässrigen Phase in Stufe c) in einem Bereich von 0,001 bis 0,8 molar liegt.

6. Verfahren gemäß einem der Ansprüche 1 - 5, wobei die Untersuchung auf die Präsenz von Schleimstoffen in Schritt a) durchgeführt wird, indem eine Probe der Lipidphase mit einer wässrigen Lösung, mit einem pH-Wert im Bereich 8 bis 13 versetzt wird, wobei das Volumenverhältnis von eingesetzter Probe der Lipidphase zu wässriger Lösung 9 : 1 beträgt, wobei die Untersuchung positiv ausfällt, wenn nach Schütteln und Phasentrennung eine Schichtbildung erfolgt.

7. Verfahren gemäß einem der Ansprüche 1 - 6, wobei vor Durchführung des optionalen Verfahrensschritts b1) Bestimmung des Gehalts an freien Fettsäuren erfolgt, und, wenn der Gehalt an freien Fettsäuren unter oder gleich 0,2 Gew.-% beträgt, Durchführung des optionalen Verfahrensschritts b2) Zugabe einer oder mehrerer Carbonsäure(n) zur Lipidphase und Mischen der Phasen erfolgt.

8. Verfahren gemäß einem der Ansprüche 1 - 7, wobei nach den Schritten a) bis e) keine Bleichung oder Desodorierung erfolgt.

9. Verfahren gemäß einem der Ansprüche 1 - 8, wobei das Verfahren als kontinuierliche Raffination durchgeführt, die zu raffinierenden Lipidphasen und raffinierten Lipidphasen nicht erhitzt, auf Adsorptionsmittel und auf einen Desodorierungsschritt mittels Wasserdampfextraktion verzichtet wird.

10. Lipidphasen erhältlich nach dem Verfahren gemäß Anspruch 9, wobei die Lipidphase weniger als 2 ppm phosphorhaltige Verbindungen aufweist, wobei die Lipidphase weniger als 0,2 Gew-% freie Fettsäuren, und weniger als 0,5 ppm Na-, K-, Mg-, Ca- und/ oder Fe-Ionen aufweist.

11. Lipidphasen nach Anspruch 10, wobei die Lipidphase eine absolute Chlorophyll-Gesamtkonzentrationen von < 0,1 mg/kg aufweist.

12. Lipidphasen gemäß Anspruch 10 oder 11, wobei die Lipidphase bis 0,8 ppm phosphorhaltige Verbindungen aufweist.

13. Abgetrennte Geruchs-, Geschmacks- und Farbstoffphase erhalten nach dem Verfahren gemäß Anspruch 9.

## Claims

1. A method for reducing odorants and / or dyes from a lipid phase comprising the steps of:
a) determining the phosphorus content of the lipid phase, and testing for the presence of mucilages in the lipid phase, and
b) performing a pre-purification step until the investigation of the presence of mucilages is negative and a phosphorus value is smaller or equal to 15 mg/kg, and
c) adding, to the lipid phase, an aqueous phase containing a compound having at least one amidino group or at least one guanidino group and having a partition coefficientbetween n-octanol and water of K_{OW} <6.3, and
d) preparing an intensive mixture of the lipid phase and the aqueous phase, and, wherein an intensive mixture is present when the water droplets in the lipid phase have a average diameter of 0.01 to 20 µm, and
e) carrying out a centrifugal phase separation and removal of the aqueous phase containing the detached odorants and / or dyes;
wherein the lipid phase are oils, fat or biodiesel;
wherein the compound having at least one amidino or at least guanidine group is arginine, 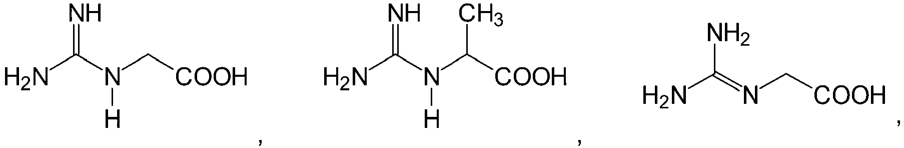 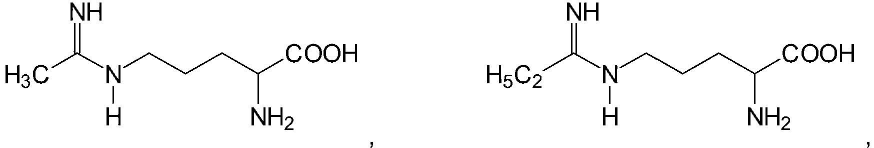 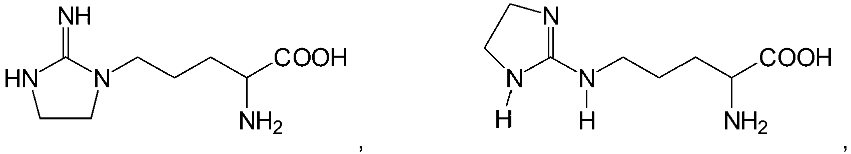 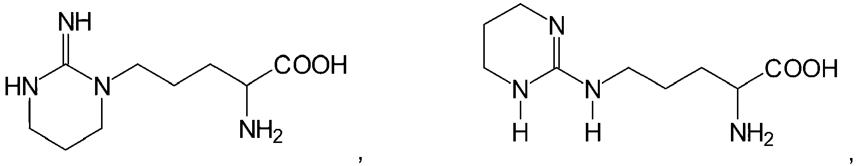 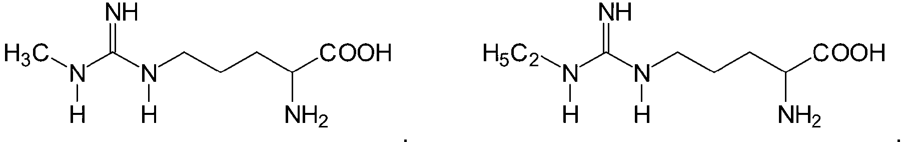 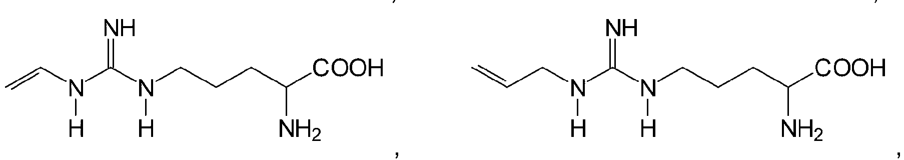 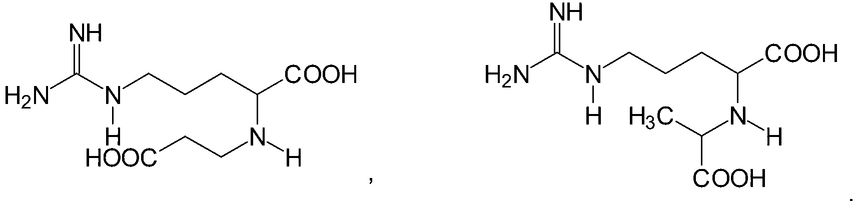 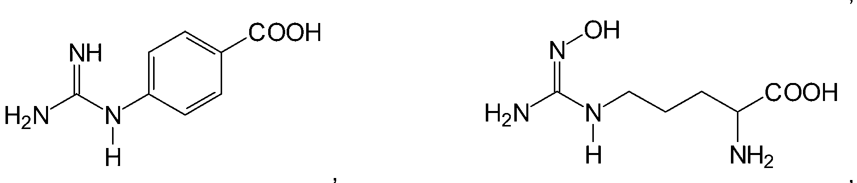 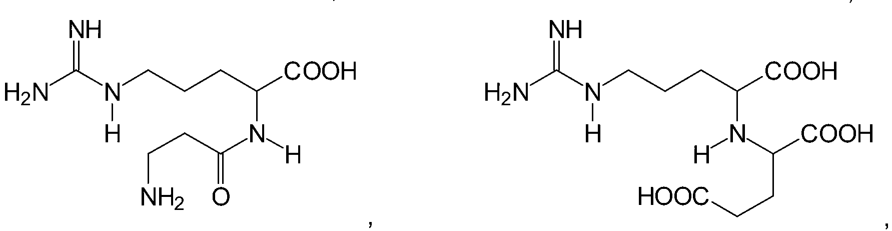 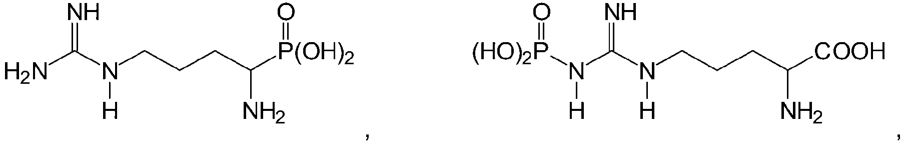 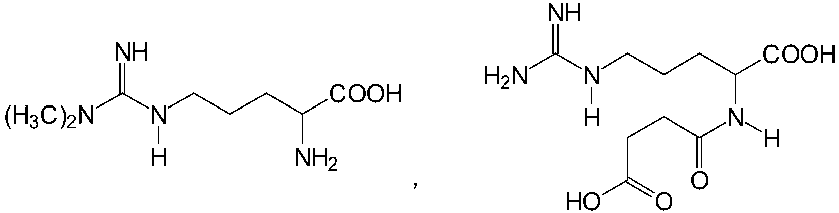 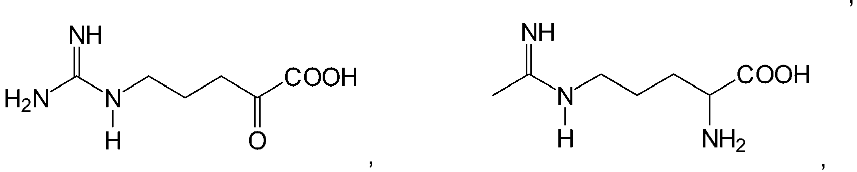
or a compound of general formula (I) or (II) 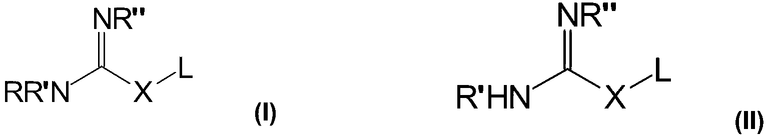 wherein
R', R", R‴ and Rʺʺ are independently of each other: -H, -OH, -CH=CH₂, -CH₂-CH=CH₂, -C(CH₃)=CH₂, -CH=CH-CH₃, -C₂H₄-CH=CH₂, -CH₃, -C₂H₅, -C₃H₇, -CH(CH₃)₂, -C₄H₉, -CH₂-CH(CH₃)₂, -CH(CH₃)-C₂H₅, -C(CH₃)₃, **-**C₅H₁₁, -CH(CH₃)-C₃H₇, -CH₂-CH(CH₃)-C₂H₅, -CH(CH₃)-CH(CH₃)₂, -C(CH₃)₂-C₂H₅, -CH₂-C(CH₃)₃, -CH(C₂H₅)₂, -C₂H₄-CH(CH₃)₂, -C₆H₁₃, -C₇H₁₅, cyclo-C₃H₅, cyclo-C₄H₇, cyclo-C₅H₉, cyclo-C₆H₁₁, -PO₃H₂, -PO₃H⁻, -PO₃²⁻, -NO₂, -C≡CH, -C≡C-CH₃, -CH₂-C≡CH, -C₂H₄-C≡CH, -CH₂-C≡C-CH₃,
or R' and R" together forms one of the following groups: -CH₂-CH₂-, -CO-CH₂-, -CH₂-CO-, -CH=CH-, -CO-CH=CH-, -CH=CH-CO-, -CO-CH₂-CH₂-, -CH₂-CH₂-CO-, -CH₂-CO-CH₂- or -CH₂-CH₂-CH₂-;
X represents -NH-, -NR""-, -O-, -S-, -CH₂-, -C₂H₄-, -C₃H₆-**,** -C₄H₈-, or -C₅H₁₀- or a C1 to C5 carbon chain, which can be substituted with one or more of the following residues -F, -Cl, -OH, -OCH₃, -OC₂H₅, -NH₂, -NHCH₃, -NH(C₂H₅), -N(CH₃)₂, -N(C₂H₅)₂, -SH, -NO₂, -PO₃H₂, -PO₃H⁻, -PO₃²⁻, -CH₃, -C₂H₅, -CH=CH₂, -C=CH, -COOH, -COOCH₃, -COOC₂H₅, -COCH₃, -COC₂H₅, -O-COCH₃, -O-COC₂H₅, -CN, -CF₃, -C₂F₅, -OCF₃, -OC₂F₅;
L is a hydrophilic substituent selected from the group consisting of
-NH₂, -OH, -PO₃H₂, -PO₃H⁻, -PO₃²⁻, -OPO₃H₂, -OPO₃H⁻, -OPO₃²⁻, -COOH, - COO⁻, -CO-NH₂, -NH₃⁺, -NH-CO-NH₂, -N(CH₃)₃⁺, -N(C₂H₅)₃⁺, -N(C₃H₇)₃⁺, -NH(CH₃)₂⁺, -NH(C₂H₅)₂⁺, -NH(C₃H₇)₂⁺, -NHCH₃, -NHC₂H₅, -NHC₃H₇, -NH₂CH₃⁺, -NH₂C₂H₅⁺, -NH₂C₃H₇⁺, -SO₃H, -SO₃⁻, -SO₂NH₂, -CO-COOH, -O-CO-NH₂, -C(NH)-NH₂, -NH-C(NH)-NH₂, -NH-CS-NH₂, -NH-COOH,

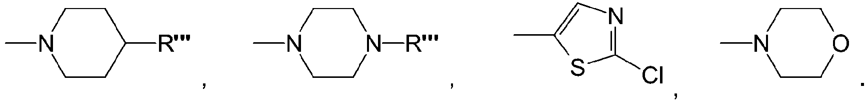

2. Method according to claim 1, wherein mucilages include waxes, wax acids, lingins, hydroxy acids, mycolic acids, fatty acids with cyclic hydrocarbon structures such as shikimic acid or 2-hydroxy-11-cyclo-heptyl undecanoic acid, mannosterylerythritol lipids, carotenes, carotenoids , chlorophylls, and their degradation products, phenols, phytosterols, β-sitosterol, campesterol, sigmasterol, sterols, sinapines, squalenes, phytoestrogens, steroids, saponins, glycolipids, glyceroglycolipids, glycerosphingolipids, rhamnolipids, sophrolipids, trehalose lipids, mannosterylerythritol lipids, polysaccharides, pectins, rhamnogalacturonans, polygalacturon acid ester, arabinans, galactans, arabinogalactans, pectic acids, amidopectines, phospholipids, phosphatidylinositol, phosphatids, phosphoinositol, long-chain or cyclic carbon compounds, fatty alcohols, hydroxy fatty acids, epoxy fatty acids, glycosides, lipoproteins, lignins, phytate, phytic acid, glucoinosilates, proteins, albumins, globulins, oleosins, vitamin A, vitamin B2, vitamin B5, vitamin B7, vitamin B9, vitamin B12, vitamin D, vitamin E, vitamin K, menaquinone, tannins, terpenoids, curcumanoides, xanthones, sugar compounds, amino acids, peptides, polypeptides, carbohydrates, and glucogen.

3. Method according to claim 1, wherein mucilages include waxes, wax acids, fatty alcohols, phenols, glycosides, lipoproteins, free sugars, lingines, phytate and phytic acid, hydroxy and epoxy fatty acids, mycolic acids, fatty acids with cyclic hydrocarbon structures such as shikimic acid, or 2-hydroxy-11-cycloheptyl undecanoic acid, rhamnolipids, sophrolipids, trehalose lipids, mannosterylerythritol lipid, squalene, sterols, sinapines, vitamin A, vitamin B2, vitamin B5, vitamin B7, vitamin B9, vitamin B12, vitamin D, vitamin E and vitamin K.

4. Method according to claim 1 or 2, wherein in addition to the odorants and dyes, flavors are also removed.

5. Method according to any one of claims 1 - 4, wherein the concentration of the at least one substance in the aqueous phase in step c) is in a molar range of 0.001 to 0.8.

6. Method according to any one of claims 1 - 5, wherein the testing for the presence of mucilages in step a) is carried out by mixing an aqueous solution having a pH value in the range 8 to 13 with a sample of the lipid phase, wherein the volume ratio of the lipid phase to aqueous solution is 9:1 and wherein said test is positive when after mixing by shaking and phase separation, the formation of a layer has taken place.

7. Method according to any of claims 1 - 6, wherein before performing the optional method step b1) determining the content of free fatty acids is carried out, and, if the content of free fatty acids is less than or equal to 0.2% by weight, the optional process step b2) adding one or more carboxylic acids to the lipid phase and mixing the phases is performed.

8. Method according to any of claims 1 - 7, wherein no bleaching or deodorization takes place after steps a) to e).

9. Method according to any of claims 1 - 8, wherein the methodis carried out as continuous refining, the lipid phases to be refined and refined lipid phases are not heated, adsorbents are not used, and a deodorization step by means of steam extraction is omitted.

10. Lipid phases obtainable according to claim 9, wherein the lipid phase contains less than 2 ppm phosphorus-containing compounds, wherein the lipid phase contains less than 0.2 wt% free fatty acids, and less than 0.5 ppm of Na, K, Mg, Ca and / or Fe ions.

11. Lipid phases according to claim 10, wherein the lipid phase has an absolute total chlorophyll concentration of < 0.1 mg/kg.

12. Lipid phases according to claim 10 or 11, wherein the lipid phase contains up to 0.8 ppm phosphorus-containing compounds.

13. Separated odor, taste, and color phase obtained according to the method according to claim 9.

## Revendications

1. Une méthode de réduction des substances odorantes et/ou les colorants d'une phase lipidique, comprenant les étapes suivantes :
a) détermination de la teneur en phosphore de la phase lipidique et contrôle de la présence de mucilages dans la phase lipidique,
b) réalisation d'une étape de pré-purification jusqu'à ce que le contrôle de la présence de mucilages soit négatif et que la teneur en phosphore soit inférieure ou égale à 15 mg/kg,
c) ajout, à la phase lipidique, d'une phase aqueuse contenant un composé ayant au moins un groupe amidine ou au moins un groupe guanidine et ayant un coefficient de partage entre le n-octanol et l'eau de K_{OW} < 6,3,
d) préparation d'un mélange intensif de la phase lipidique et de la phase aqueuse, et où un mélange intensif est présent lorsque les gouttelettes d'eau dans la phase lipidique ont un diamètre moyen de 0,01 à 20 µm,
e) réalisation d'une séparation centrifuge des phases et élimination de la phase aqueuse contenant les substances odorantes et/ou les colorants détachés ;
où la phase lipidique est constituée d'huiles, de graisses ou de biodiesel ;
où le composé comportant au moins un groupe amidine ou au moins un groupe guanidine est l'arginine, 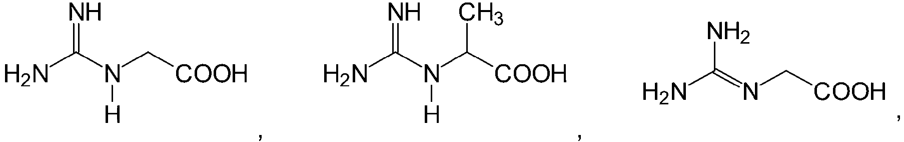 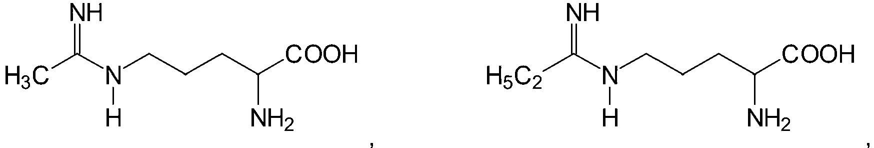 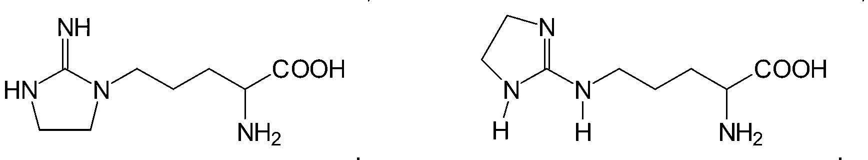 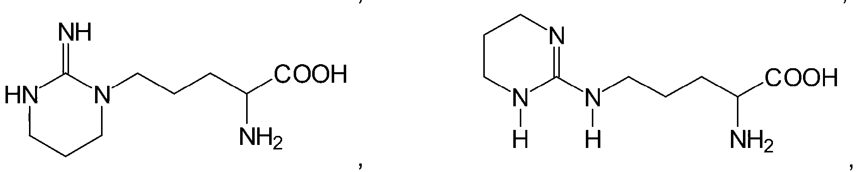 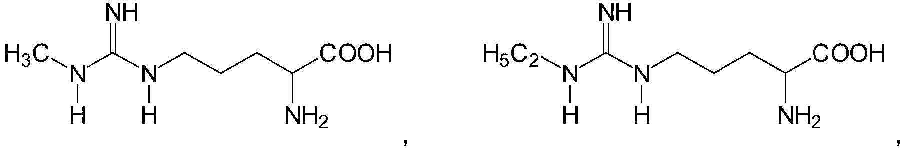 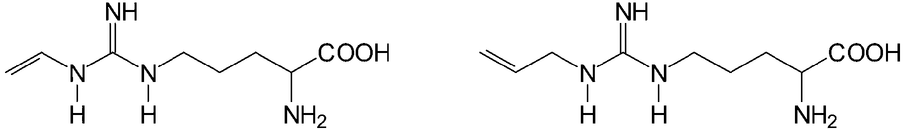 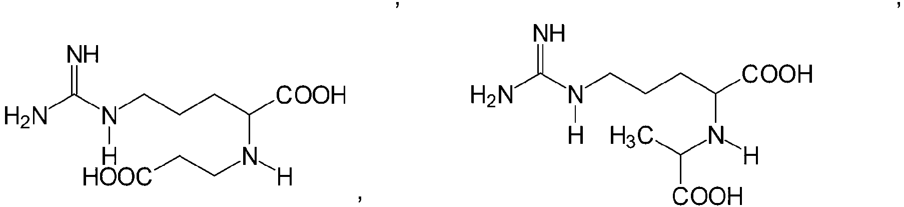 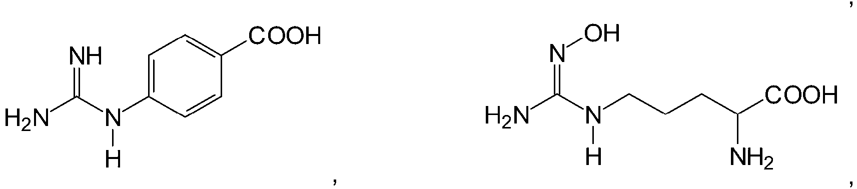 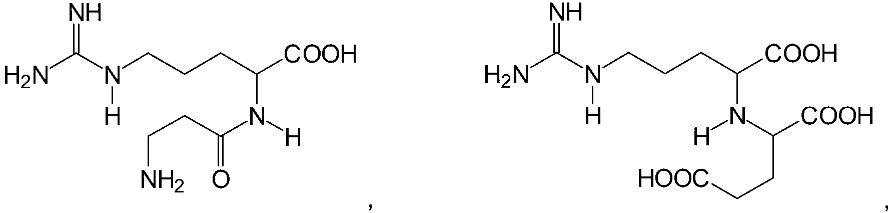 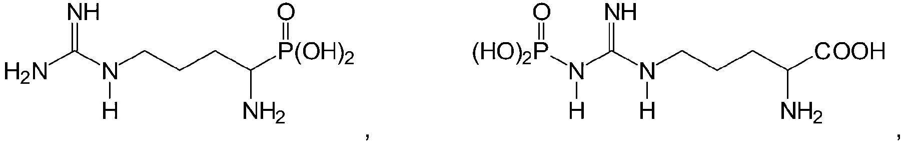 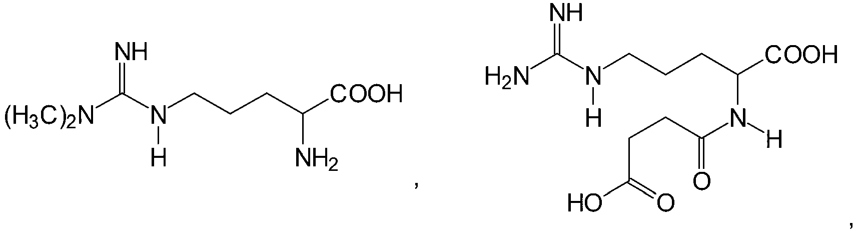 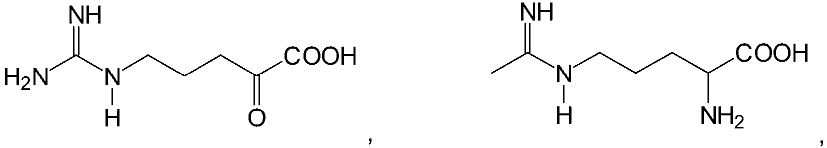
ou un composé de formule générale (I) ou (II) 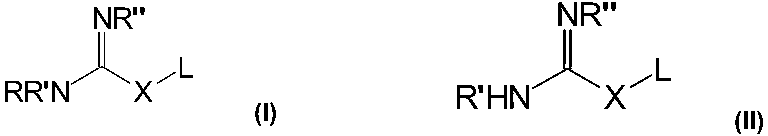 où
R', R", R‴ et Rʺʺ sont indépendants les uns des autres : -H, -OH, -CH=CH₂, -CH₂-CH=CH₂, -C(CH₃)=CH₂, -CH=CH-CH₃, -C₂H₄-CH=CH₂, -CH₃, -C₂H₅, -C₃H₇, -CH(CH₃)₂, -C₄H₉, -CH₂-CH(CH₃)₂, -CH(CH₃)-C₂H₅, -C(CH₃)₃, **-**C₅H₁₁,
-CH(CH₃)-C₃H₇, -CH₂-CH(CH₃)-C₂H₅, -CH(CH₃)-CH(CH₃)₂, -C(CH₃)₂-C₂H₅, -CH₂-C(CH₃)₃, -CH(C₂H₅)₂, -C₂H₄-CH(CH₃)₂, -C₆H₁₃, -C₇H₁₅, cyclo-C₃H₅, cyclo-C₄H₇, cyclo-C₅H₉, cyclo-C₆H₁₁, -PO₃H₂, -PO₃H⁻, -PO₃²⁻, -NO₂, -C=CH, -C≡C-CH₃, -CH₂-C≡CH, -C₂H₄-C≡CH, -CH₂-C≡C-CH₃,
ou R' et R" forment ensemble l'un des groupes suivants : -CH₂-CH₂-, -CO-CH₂-, -CH₂-CO-, -CH=CH-, -CO-CH=CH-, -CH=CH-CO-, -CO-CH₂-CH₂-, -CH₂-CH₂-CO-, -CH₂-CO-CH₂- or -CH₂-CH₂-CH₂-;
X représente -NH-, -NR""-, -O-, -S-, -CH₂-, -C₂H₄-, -C₃H₆-**,** -C₄H₈-, or - C₅H₁₀- ou une chaîne carbonée en C1 à C5, qui peut être substituée par un ou plusieurs des résidus suivants -F, -CI, -OH, -OCH₃, -OC₂H₅, -NH₂, -NHCH₃, -NH(C₂H₅), -N(CH₃)₂, -N(C₂H₅)₂, -SH, -NO₂, -PO₃H₂, -PO₃H⁻, -PO₃²⁻, -CH₃, -C₂H₅, -CH=CH₂, -C=CH, -COOH, -COOCH₃, -COOC₂H₅, -COCH₃, -COC₂H₅, -O-COCH₃, -O-COC₂H₅, -CN, -CF₃, -C₂F₅, -OCF₃, -OC₂F₅ ;
L est un substitut hydrophile sélectionné parmi le groupe comprenant
-NH₂, -OH, -PO₃H₂, -PO₃H⁻, -PO₃²⁻ -OPO₃H₂, -OPO₃H⁻, -OPO₃²⁻, -COOH, - COO⁻, -CO-NH₂, -NH₃⁺, -NH-CO-NH₂, -N(CH₃)₃⁺, -N(C₂H₅)₃⁺, -N(C₃H₇)₃⁺, -NH(CH₃)₂⁺, -NH(C₂H₅)₂⁺, -NH(C₃H₇)₂⁺, -NHCH₃, -NHC₂H₅, -NHC₃H₇, -NH₂CH₃⁺, -NH₂C₂H₅⁺, -NH₂C₃H₇⁺, -SO₃H, -SO₃⁻, -SO₂NH₂, -CO-COOH, -O-CO-NH₂, -C(NH)-NH₂, -NH-C(NH)-NH₂, -NH-CS-NH₂, -NH-COOH,

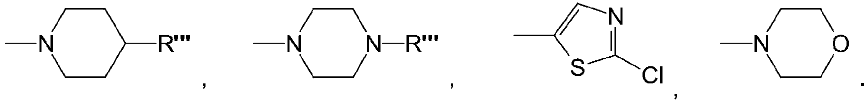

2. La méthode selon la revendication 1, où les mucilages comprennent des cires, des acides cireux, des lignines, des acides hydroxy, des acides mycoliques, des acides gras à structure hydrocarbonée cyclique tels que l'acide shikimique ou l'acide 2-hydroxy-11-cycloheptyle undécanoïque, des lipides mannosterylérythritol, des carotènes, des caroténoïdes, des chlorophylles et leurs produits de dégradation, des phénols, des phytostérols, du β-sitostérol, du campestérol, du sigmastérol, des stérols, des sinapines, des squalènes, des phytoestrogènes, des stéroïdes, des saponines, des glycolipides, des glycéroglycolipides, des glycosphingolipides, des rhamnolipides, des sophrolipides, des lipides de tréhalose, des lipides de manno-stérylerythritol, des polysaccharides, des pectines, des rhamnogalacturonanes, des esters d'acide polygalacturonique, des arabinanes, des galactanes, des arabinogalactanes, des acides péctiques, des amidopectines, des phospholipides, du phosphatidylinositol, des phosphatides, du phosphoinositol, des composés carbonés à longue chaîne ou cycliques, des alcools gras, des acides gras hydroxylés, des acides gras époxy, des glycosides, des lipoprotéines, des lignines, des phytates, de l'acide phytique, des glucoinosilates, des protéines, des albumines, des globulines, des oléosines, de la vitamine A, de la vitamine B2, de la vitamine B5, de la vitamine B7, de la vitamine B9, de la vitamine B12, de la vitamine D, de la vitamine E, de la vitamine K, de la ménaquinone, des tanins, des terpénoïdes, des curcumanoïdes, des xanthones, des composés sucrés, des acides aminés, des peptides, des polypeptides, des carbohydrates et du glucogène.

3. La méthode selon la revendication 1, où les mucilages comprennent des cires, des acides cireux, des alcools gras, des phénols, des glycosides, des lipoprotéines, des sucres libres, des lignines, des phytates et de l'acide phytique, des acides gras hydroxy et époxy, des acides mycoliques, des acides gras à structure hydrocarbonée cyclique tels que l'acide shikimique ou l'acide 2-hydroxy-11-cycloheptyle undécanoïque, des rhamnolipides, des sophrolipides, des lipides de tréhalose, des lipides de manno-stérylerythritol, des squalènes, des stérols, des sinapines, de la vitamine A, de la vitamine B2, de la vitamine B5, de la vitamine B7, de la vitamine B9, de la vitamine B12, de la vitamine D, de la vitamine E et de la vitamine K.

4. La méthode selon la revendication 1 ou 2, où, outre les substances odorantes et les colorants, les arômes sont également éliminés.

5. La méthode selon l'une des revendications 1 à 4, où la concentration d'au moins une substance dans la phase aqueuse à l'étape c) est comprise dans une plage molaire de 0,001 à 0,8.

6. La méthode selon l'une des revendications 1 à 5, où le contrôle de la présence de mucilages de l'étape a) est réalisé en mélangeant une solution aqueuse présentant un pH compris entre 8 et 13 avec un échantillon de la phase lipidique, où le rapport volumique de la phase lipidique et de la solution aqueuse est de 9:1, et où ledit contrôle est positif lorsqu'après mélange par agitation et séparation des phases, une couche s'est formée.

7. La méthode selon l'une des revendications 1 à 6, où, avant de réaliser l'étape facultative b1) consistant à déterminer la teneur en acides gras libres, et si la teneur en acides gras libres est inférieure ou égale à 0,2 % du poids, l'étape facultative b2) consistant à ajouter un ou plusieurs acides carboxyliques à la phase lipidique et à mélanger les phases est réalisée.

8. La méthode selon l'une des revendications 1 à 7, où aucun blanchiment ni aucune désodorisation n'ont lieu après les étapes a) à e).

9. La méthode selon l'une des revendications 1 à 8, où la méthode est mise en oeuvre sous la forme d'un raffinage continu, les phases lipidiques à raffiner et les phases lipidiques raffinées n'étant pas chauffées, aucun adsorbant n'étant utilisé et l'étape de désodorisation par extraction à la vapeur étant omise.

10. Les phases lipidiques pouvant être obtenues selon la revendication 9, où la phase lipidique contient moins de 2 ppm de composés contenant du phosphore, où la phase lipidique contient moins de 0,2 % du poids d'acides gras libres et moins de 0,5 ppm d'ions Na, K, Mg, Ca et/ou Fe.

11. Les phases lipidiques selon la revendication 10, où la phase lipidique présente une concentration absolue totale en chlorophylle inférieure à 0,1 mg/kg.

12. Les phases lipidiques selon la revendication 10 ou 11, où la phase lipidique contient jusqu'à 0,8 ppm de composés contenant du phosphore.

13. Phase à l'odeur, au goût et à la couleur séparés obtenue selon la méthode de la revendication 9.
